(19) Europäisches Patentamt / European Patent Office / Office européen des brevets

(11) **EP 2 252 063 A1**

(12) **EUROPEAN PATENT APPLICATION**
published in accordance with Art. 153(4) EPC

(43) Date of publication:
**17.11.2010 Bulletin 2010/46**

(51) Int Cl.:
***H04N 7/32*** *(2006.01)*

(21) Application number: **09718201.8**

(86) International application number:
**PCT/JP2009/054186**

(22) Date of filing: **05.03.2009**

(87) International publication number:
**WO 2009/110559 (11.09.2009 Gazette 2009/37)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **07.03.2008 JP 2008058374
30.04.2008 JP 2008119300**

(71) Applicant: **Kabushiki Kaisha Toshiba
Minato-ku
Tokyo 105-8001 (JP)**

(72) Inventors:
• **YASUDA, Goki**

  **(JP)**

• **WADA, Naofumi**

  **(JP)**

• **WATANABE, Takashi**

  **(JP)**

• **TANIZAWA, Akiyuki**

  **(JP)**

• **CHUJOH, Takeshi**

  **(JP)**

(74) Representative: **Granleese, Rhian Jane
Marks & Clerk LLP
90 Long Acre
London
WC2E 9RA (GB)**

(54) **DYNAMIC IMAGE ENCODING/DECODING DEVICE**

(57) An image processor (112) to produce a local decoded image corresponding to an input image, a region partitioning module (114) to classify the local decoded image into a plurality of regions using a given parameter, a filter designing module (115) to design a filter coefficient for every classified region, a filter processor (116) to filter the local decoded image according to a corresponding filter coefficient for every classified region, a frame memory (113) to store a filtered image, a predictor (117) to produce a prediction image using a stored image, and an encoder (118) to output a parameter used for classification of the region and information of a filter coefficient every classified region as encoded data are provided.

FIG.1

**EP 2 252 063 A1**

**Description**

Technical Field

The present invention relates to a video encoding apparatus of adding information for controlling filter processing performed by a video decoding apparatus to encoded data and a video decoding apparatus of performing filter processing on a decoded image based on the information for controlling the filter processing which is added to the encoded data.

Background Art

As a technique for outputting an image obtained by performing filter processing on a decoded image, there is a technique which designs a filter such that an error between a to-be-encoded image and an image obtained by performing filter processing on a decoded image is minimized by an encoding apparatus, transmits information of the filter, and causes a decoding apparatus to output an image obtained by performing the filter processing on the decoded image based on the information (S. Wittmann and T. Wedi, "Post-filter SEI message for 4:4:4 coding", JVT of ISO/IEC MPEG & ITU-T VCEG, JVT-S030, April 2006 (to be referred to as S. Wittmann et al. hereinafter)). In this manner, the decoding apparatus can obtain an output image having a small error with reference to an original image.

As a similar technique, a technique for performing processing similar to the processing of S. Wittmann et al. and uses an image obtained by performing filter processing on a decoded image as a reference image in generation of a prediction image may be employed. In this manner, since an error between the reference image and a to-be-encoded image decreases, a prediction error can be advantageously reduced when a next frame is predicted. In S. Wittmann et al., filters are designed in units of a frame. In this case, filters cannot be designed in accordance with the characteristics of images which change depending on regions in a frame. Techniques similar to that by S. Wittmann et al. have the same problem as described above when filters are designed in units of frames.

In a conventional technique, since filters are designed in units of frames, there is a problem that filters cannot be designed in accordance with the characteristics of images which change depending on regions in a frame.

It is an object of the present invention to provide a video encoding/decoding apparatus and method of classifying an image into a plurality of regions according to a predetermined reference and perform filter processing on each of the classified regions to reduce an error between a to-be-encoded image and a reference image and an error between a to-be-encoded image and an output image.

According to the present invention, on the occasion of video encoding, regions in a frame are classified according to a predetermined criterion and partitioned, and a local decoded image is subjected to filter processing for each of the sorted regions. Further, a parameter used for classification of the regions as well as information of the filter are output as encoded data.

An aspect of the present invention provides a video encoding apparatus comprising an image processor to generate a local decoded image corresponding to an input image, a partition module to partition the local decoded image into a plurality of regions using a given parameter, a designing module to designs a filter coefficient for each partitioned region, a filtering module to perform filter processing on the local decoded image according to the corresponding filter coefficient for each partitioned region, a storage to store images subjected to the filter processing, a predictor to generate a prediction image using the stored image, and an encoder to output a parameter used for partition of the region and information of a filter coefficient every partitioned region as encoded data.

Brief Description of Drawings

FIG. 1 is a block diagram of a video encoding apparatus according to a first embodiment.
FIG. 2 is a block diagram of a signal processor of the video encoding apparatus according to the first embodiment.
FIG. 3 is a flowchart showing video encoding performed by the video encoding apparatus in FIG. 2.
FIG. 4 is a diagram showing a classification state of a frame.
FIG. 5 is a flowchart showing region division performed by a region partition module according to the first embodiment.
FIG. 6 is a diagram showing an example of region information according to the first embodiment.
FIG. 7 is a diagram showing an example of filter coefficients of a high-pass filter.
FIG. 8 is a diagram showing pixels serving as objects of one-dimensional discrete cosine transform.
FIG. 9 is a graph showing a relationship between coefficients of the one-dimensional discrete cosine transform and a classification reference.

FIG. 10 is a diagram showing a filter coefficient table.

FIG. 11 is a diagram of a table showing an index and a threshold value.

FIG. 12 is a block diagram of a filter designing module according to the first embodiment.

FIG. 13 is a block diagram of a filter processor according to the first embodiment.

FIG. 14 is a block diagram of a video decoding apparatus according to a second embodiment.

FIG. 15 is a block diagram of a signal processor of the video decoding apparatus according to the second embodiment.

FIG. 16 is a flowchart showing video decoding performed by the video decoding apparatus according to the second embodiment.

FIG. 17 is a block diagram of a signal processor of a video encoding apparatus according to a third embodiment.

FIG. 18 is a block diagram of a video decoding apparatus according to a fourth embodiment.

FIG. 19 is a block diagram of a filter designing module according to a fifth embodiment.

FIG. 20 is a diagram showing an example of filter application/nonapplication information according to the fifth embodiment.

FIG. 21 is a block diagram of filter processor according to the fifth embodiment.

FIG. 22 is a block diagram of a filter designing module according to a ninth embodiment.

FIG. 23 is a diagram showing an example of filter coefficients and indexes representing them.

FIG. 24 is a block diagram of filter processor according to the ninth embodiment.

FIG. 25 is a block diagram of a video encoding apparatus according to a thirteenth embodiment.

FIG. 26 is a diagram showing an example of region information according to the thirteenth embodiment.

FIG. 27 is a block diagram of a video decoding apparatus according to a fourteenth embodiment.

FIG. 28 is a block diagram of a video encoding apparatus according to a fifteenth embodiment.

FIG. 29 is a block diagram of a video decoding apparatus according to a sixteenth embodiment.

FIG. 30 is a block diagram of a video encoding apparatus according to a twenty-fifth embodiment.

FIG. 31 is a diagram showing an example of region information according to the twenty-fifth embodiment.

FIG. 32 is a block diagram of a video decoding apparatus according to a twenty-sixth embodiment.

FIG. 33 is a block diagram of a video encoding apparatus according to a twenty-seventh embodiment.

FIG. 34 is a block diagram of a video decoding apparatus according to a twenty-eighth embodiment.

FIG. 35 is a diagram showing filter coefficients.

FIG. 36 is a block diagram of a video encoding apparatus according to a thirty-eighth embodiment.

FIG. 37 is a block diagram of a video decoding apparatus according to a thirty-ninth embodiment.

FIG. 38 is a block diagram of a video encoding apparatus according to a fortieth embodiment.

FIG. 39 is a block diagram of a video decoding apparatus according to a forty-first embodiment.

FIG. 40 is a block diagram of a video encoding apparatus according to a forty-eighth embodiment.

FIG. 41 is a block diagram of a video encoding apparatus according to a fiftieth embodiment.

FIG. 42 is a block diagram of a video encoding apparatus according to a sixtieth embodiment.

FIG. 43 is a block diagram of a video decoding apparatus according to a sixty-first embodiment.

FIG. 44 is a block diagram of a video encoding apparatus according to a sixty-second embodiment.

FIG. 45 is a block diagram of a video decoding apparatus according to a sixty-third embodiment.

FIG. 46 is a block diagram of a video encoding apparatus according to a seventy-second embodiment.

FIG. 47 is a block diagram of a video encoding apparatus according to a seventy-fourth embodiment.

FIG. 48 is a block diagram of a video encoding apparatus according to an eighty-fourth embodiment.

FIG. 49 is a block diagram of a video decoding apparatus according to an eighty-fifth embodiment.

FIG. 50 is a block diagram of a video encoding apparatus according to an eighty-sixth embodiment.

FIG. 51 is a block diagram of a video decoding apparatus according to an eighty-seventh embodiment.

FIG. 52 is a diagram showing information showing correspondence between regions and classifications.

Best Mode for Carrying Out the Invention

Embodiments of the present invention will be explained below.

(First Embodiment)

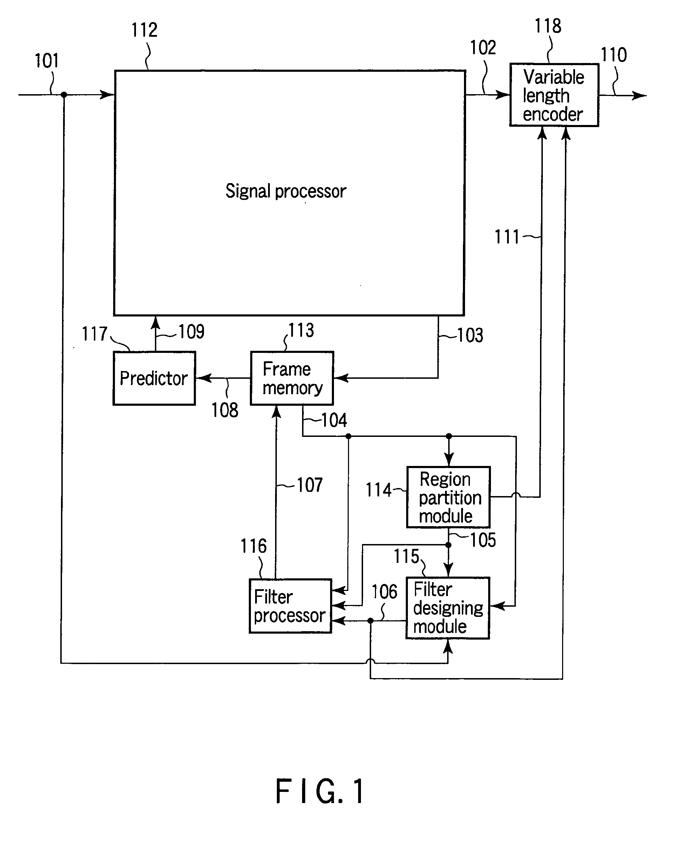

A video encoding apparatus according to a first embodiment of the present invention will be explained with reference to FIG. 1. A signal processor 112 receives an input image signal 101. A signal processor 112 generates a residual signal between the input image signal 101 and a prediction image signal 109. A signal processor 112 orthogonal-transforms and quantizes the residual signal to thereby generate residual information 102. A signal processor 112 dequantizes and inverse-orthogonal-transforms the residual information 102, and adds the information to the prediction image signal to generate a local-decoded image signal 103. A residual information output terminal of the signal processor 112 is connected to a variable length encoder 118, and a local decoded signal output terminal is connected to a write terminal of a frame memory 113.

A local-decoded image signal read terminal of the frame memory 113 is connected to a region partition module 114. The region partition module 114 classifies and partitions a local-decoded image signal 104 into a plurality of regions in accordance with a predetermined criterion to output region information 105. The region information 105 represents correspondence between the regions and classifications. A region information output terminal of the region partition module 114 is connected to a filter designing module 115 and a filter processor 116. The filter designing module 115 receives the input image signal 101, the region information 105, and the local-decoded image signal 104 from the frame memory 113 to design filter coefficients for each of the classified regions. An output terminal of the filter designing module 115 is connected to the filter processor 116.

The filter processor 116 receives the local-decoded image signal 104, the region information 105 and filter information 106. The filter processor 116 performs filter processing on an image signal region of the local-decoded image signal 104. The image signal region corresponds to the region information 105. The filter processing depends on the filter information 106. The filter processor 116 generates an image signal 107 on which the filter processing is performed for each of the classified image regions. An image signal output terminal of the filter processor 116 is connected to a write terminal of the frame memory 113. The frame memory 113 stores the image signal 107 on which the filter processing is performed, and outputs the image signal 107 to a predictor 117 as a reference image signal 108. The predictor 117 generates a prediction image signal 109 from the reference image signal 108.

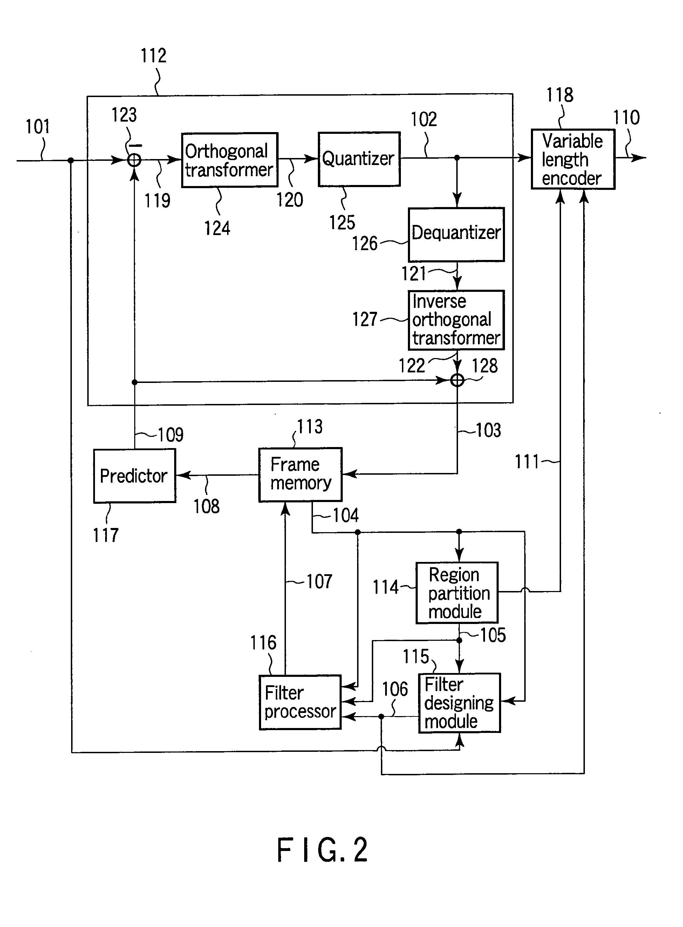

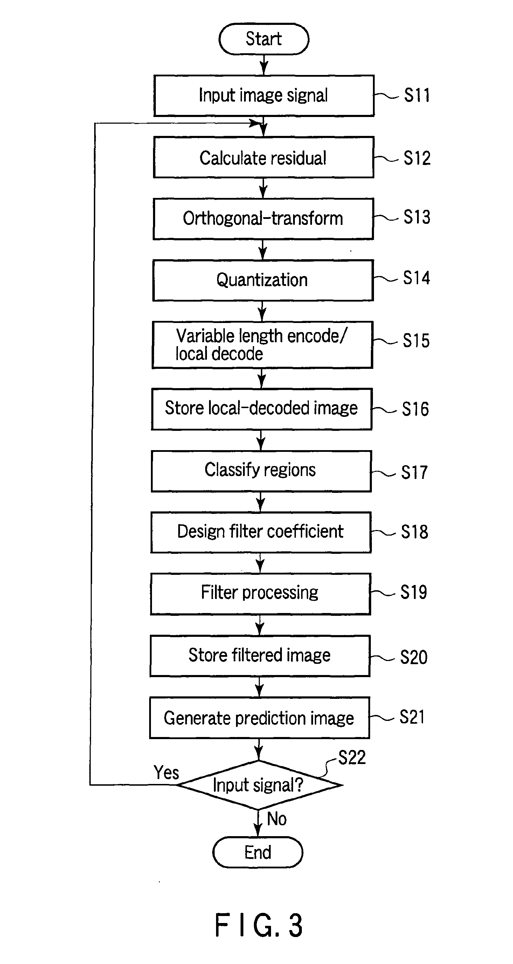

The video encoding apparatus having the above configuration will be specifically explained with reference to FIGS. 2 and 3.

As shown in FIG. 2, the signal processor 112 includes a subtracter 123 which calculates a difference between the input image signal 101 and the prediction image signal 109 to output a residual signal 119, an orthogonal transformer 124 which subjects the residual signal 119 to orthogonal transform to output an orthogonal transform coefficient (for example, DCT coefficient) 120, and a quantizer 125 which quantizes the orthogonal transform coefficient to output a quantization transform coefficient signal, i.e., the residual information 102. The signal processor 112 further includes an dequantizer 126 which dequantizes the residual information 102 to output a transform coefficient 121, an inverse orthogonal transformer 127 which inverse-orthogonal-transforms the transform coefficient 121 to reproduce a residual signal 122, and an adder 128 which adds the reproduced residual signal 122 to the prediction image signal 109 to generate the local-decoded image signal 103.

As shown in a flowchart in FIG. 3, when the input image signal 101 is input to the signal processor 112 (S11), the subtracter 123 calculates a difference between the input image signal 101 and the prediction image signal 109 to generate the residual signal 119 (S12). In the orthogonal transformer 124, the residual signal 119 is orthogonal-transformed to generate a transform coefficient (S13), and then the transform coefficient is quantized by the quantizer 125 (S14). The quantized transform coefficient is input to a variable length encoder as the residual information 102. The quantized transform coefficient is also dequantized by the dequantizer 126 and then inverse-orthogonal-transformed by the inverse orthogonal transformer 127. The adder 128 adds the reproduced residual signal 122 and the prediction image signal 109 to generate the local-decoded image signal 103 (S15). The local-decoded image signal 103 is stored in the frame memory 113 (S16). The local-decoded image signal 104 read from the frame memory 113 is input to the region partition module 114, the filter designing module 115, and the filter processor 116.

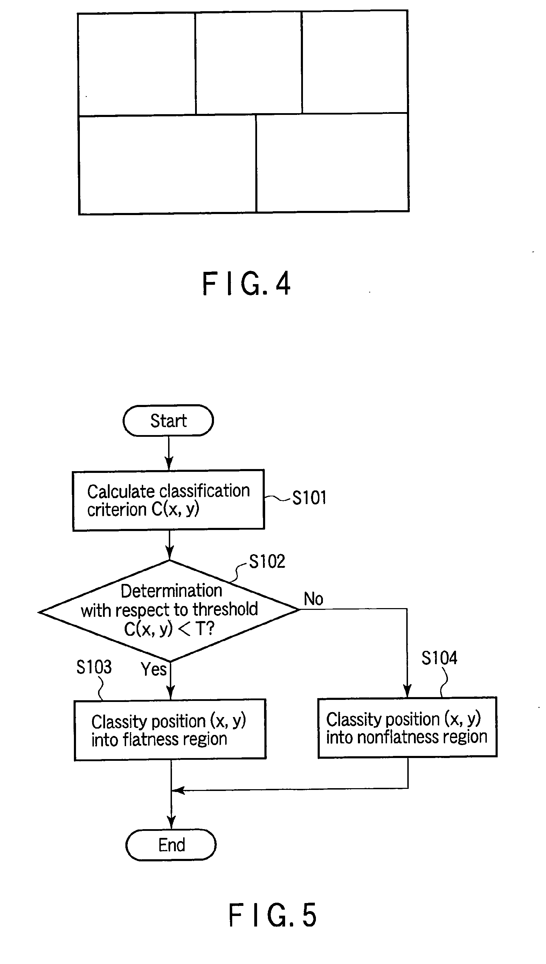

In the region partition module 114, regions of the input local-decoded image signal 104 are classified according to a predetermined criterion (to be referred to as a classification criterion) as shown in, for example FIG. 4 to generate the region information 105 representing correspondence between the regions and classifications (S17). From the region partition module 114, region partition parameters 111 and the region information 105 which are required for calculation of the classification criterion and the classification performed by the criterion are output. The region partition parameters 111 is input to the variable length encoder 118. The region information 105 is input to the filter designing module 115 and the filter processor 116.

Classification processing (S17) in the region partition module 114 will be explained by using a flowchart in FIG. 5. An object of classification is defined as a pixel (to be referred to as S $(x,y)$) of a position $(x,y)$ on a decoded image. It is assumed that regions are classified into two regions, i.e., a flatness region in which a pixel value smoothly changes and a nonflatness region in which a pixel value sharply changes. Note that regions to be classified are pixels, respectively. When the regions are classified into minimum regions, the regions are pixel units. In step 101, a classification criterion C $(x,y)$ is calculated from the local-decoded image signal 104. In step 102, it is determined whether the classification criterion C $(x,y)$ is smaller than a threshold value T. When the classification criterion C $(x,y)$ is smaller than the predetermined threshold value T, the position $(x,y)$ is classified into the flatness region in step 103. Otherwise, the position $(x,y)$ is classified into the nonflatness region in step 104.

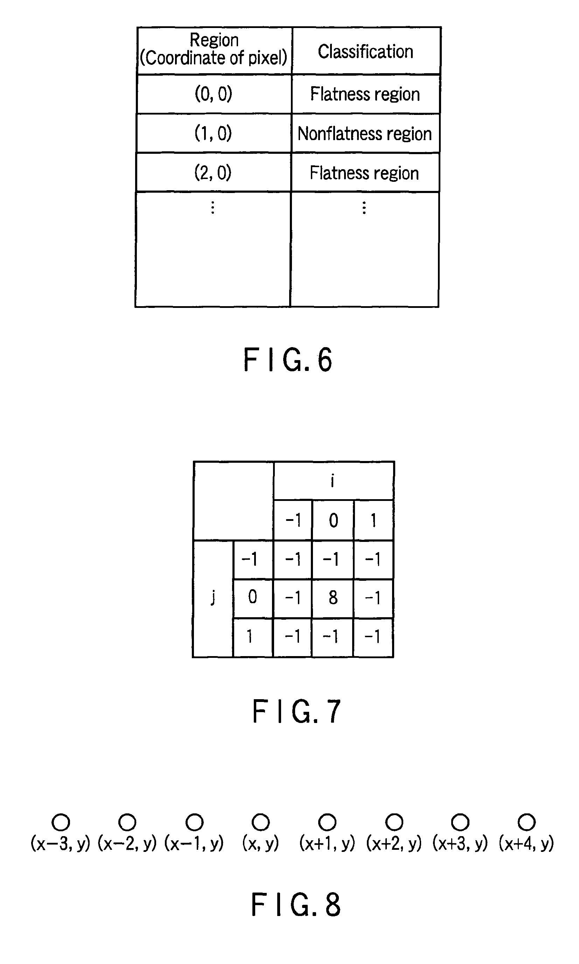

With the above process, the regions correspond to the classifications, respectively. Therefore, a table shown in FIG. 6 can be configured as region information representing the correspondence between the regions and the classifications. From the region partition module 114, the threshold value T is output as the region partition parameter 113, and the information of the table in FIG. 6 is output as the region information 105.

As the classification criterion, an average value of absolute differences between S (x,y) and pixels therearound, i.e., an average value calculated by the following expression (1) can be used.

$$C_{ave}(x,y) = \frac{1}{(2N+1)^2} \sum_{i=-N}^{N} \sum_{j=-N}^{N} |S(x+i, y+j) - S(x,y)| \quad (1)$$

In this expression, N denotes an arbitrary natural number. When the operation given by expression (1) is performed, a floating-point operation can be avoided in such a manner that expression (1) is expressed by the following expression (2) by performing integer division using a predetermined offset value $R_C$ for rounding.

$$C_{ave}(x,y) = \frac{\sum_{i=-N}^{N} \sum_{j=-N}^{N} |S(x+i, y+j) - S(x,y)| + R_C}{(2N+1)^2} \quad (2)$$

A maximum value of an absolute difference between S (x,y) and pixels therearound, i.e., a maximum value calculated by the following expression (3) can be used as a classification criterion.

$$C_{max}(x,y) = \max_{-N \le i \le N, -N \le j \le N} |S(x+i, y+j) - S(x,y)| \quad (3)$$

An absolute value of a value which has been processed by the high-pass filter, i.e., an absolute value calculated by the following expression (4) can be used as a classification criterion.

$$C_{HF}(x,y) = \left| \sum_{i=-N}^{N} \sum_{j=-N}^{N} h_{HF}(i,j) S(x+i, y+j) \right| \quad (4)$$

A filter coefficient of the high-pass filter can be calculated by the following expression (5) assuming that N = 1 is set as shown in, for example, FIG. 7.

$$h_{HF}(i,j) = \begin{cases} 8 & (i,j) = (0,0) \\ -1 & otherwise \end{cases} \quad (5)$$

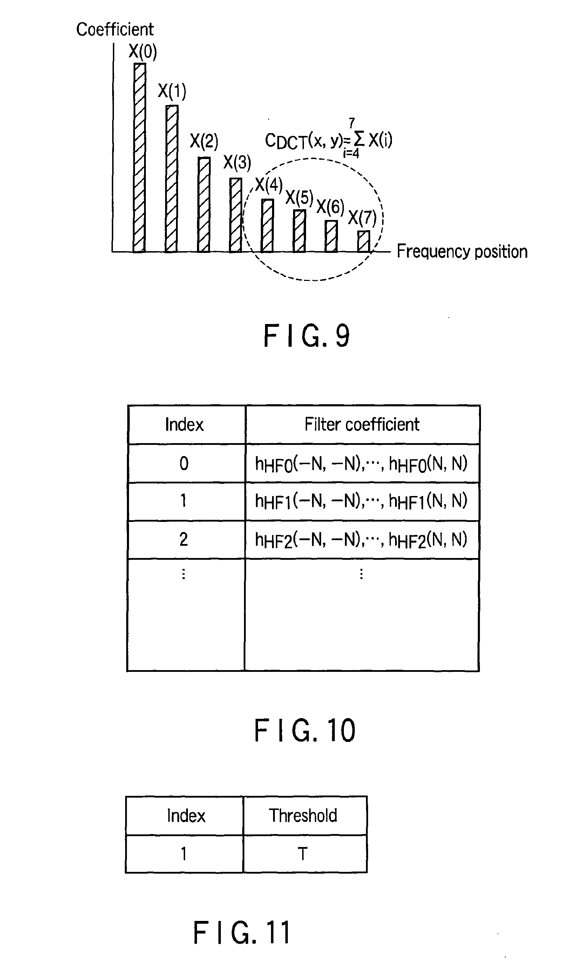

A signal including a position (x,y) is transformed into a frequency component, and a frequency component included in a high-frequency band can be used as the classification criterion. For illustrative purposes, as shown in FIG. 8, a case in which one-dimensional discrete cosine transform is performed to 8 pixels horizontally aligned and including the position (x,y) will be considered. When transform coefficients are sequentially set to X(0), X(1),..., X(7) from a low band to a high band, as shown in FIG. 9, a total sum of the fourth and subsequent coefficients, i.e., a total sum calculated by the following expression (6) is used as a classification criterion.

$$C_{DCT}(x,y) = \sum_{i=4}^{7} X(i) \qquad (6)$$

The range of the coefficients to be summed up is fixed to the fourth and subsequent coefficients. However, what number of the coefficients to be summed up and subsequent coefficients may be output as a region partition parameter together with the threshold value T. Although the explanation about one-dimensional transform is made, the same can also be applied to two-dimensional transform.

An absolute value of a pixel value of an image obtained from a difference between an image obtained by performing filter processing on a local-decoded image and the local-decoded image can be used. The image on which the filter processing has been performed can be calculated by the following expression (7).

$$S_{LF}(x,y) = \sum_{i=-N}^{N} \sum_{j=-N}^{N} h_{LF}(i,j) S(x+i, y+j) \qquad (7)$$

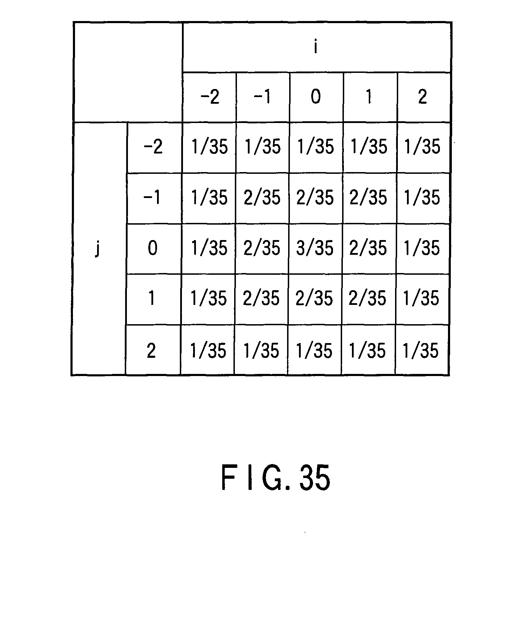

A filter coefficient may be given by N =2 as shown in FIG. 35.

The absolute value of the pixel value of the image obtained by the difference can be calculated by the following expression (8).

$$C_{DIFF}(x,y) = \left| S_{LF}(x,y) - S(x,y) \right|$$

$$= \left| \sum_{i=-N}^{N} \sum_{j=-N}^{N} h_{LF}(i,j) S(x+i, y+j) - S(x,y) \right| \qquad (8)$$

Region classification may also be performed in such a manner that one classification criterion is selected from a plurality of partition criterions prepared in advance. In this case, information which designates the selected classification criterion is added to a region partition parameter. For example, it is assumed that a plurality of high-pass filters are prepared and one of the high-pass filters is selected to perform region classification. In this case, as shown in FIG. 10, it is assumed that indexes are associated with the high-pass filters, respectively. When region classification is performed by using the high-pass filter indicated by index 1, as shown in FIG. 11, the index to designate the filter and information of the threshold value T to perform region classification are output as region classification parameters.

When the region classification is performed, filter coefficients are designed (S18). More specifically, in the filter designing module 115, based on the region information 105, the input image signal 101, and the local-decoded image signal 104, a filter (filter coefficient) is designed for each of classifications corresponding to regions. The filter information 106 related to the designed filter is input to the filter processor 116 and the variable length encoder 118.

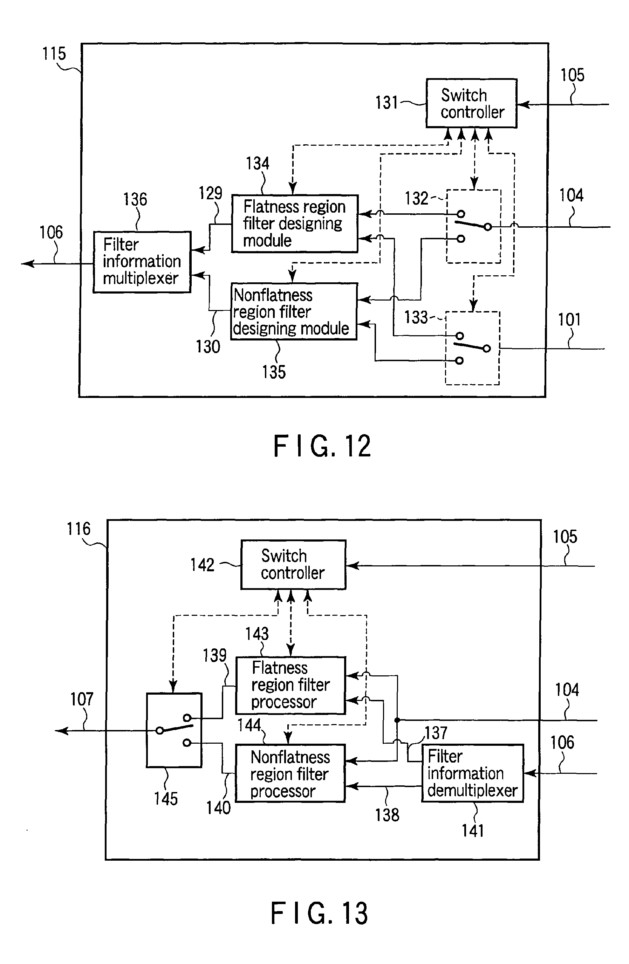

The filter designing module 115 will be explained by using FIG. 12. FIG. 12 shows a configuration of the filter designing module when regions are classified into two, i.e., a flatness region and a nonflatness region as in the example of the region partition module 114. The region information 105 is input to a switch controller 131, the local-decoded image signal 104 is input to a local-decoded image signal switch 132, and the input image signal 101 is input to an input image signal switch 133. The switch controller 131, based on the region information 105, controls the local-decoded image signal switch 132, the input image signal switch 133, a flatness region filter designing module 134, and a nonflatness region filter designing module 135. When it is understood based on the region information 105 that the region is the flatness region, the local-decoded image signal 104 and the input image signal 101 are input to the flatness region filter designing module 134. When the region is the nonflatness region, the local-decoded image signal 104 and the input image signal 101 are input to the nonflatness region filter designing module 135.

In the flatness region filter designing module 134, a filter is designed based on the input image signal 101 and the local-decoded image signal 104 which are classified into the flatness region. In the nonflatness region filter designing module 135, a filter is designed based on the input image signal 101 and the local-decoded image signal 104 which are classified into the nonflatness region. In each of the flatness region filter designing module 134 and the nonflatness region filter designing module 135, when a Wiener-Hopf equation is established by the input image signal 101 and the local-decoded image signal 104 to calculate a solution, a filter can be designed which minimizes a square error between the input image signal 101 and an image signal obtained by performing filter processing on the local-decoded image signal 104. A flatness region filter coefficient 129 and a nonflatness region filter coefficient 130 are output from the flatness region filter designing module 134 and the nonflatness region filter designing module 135, respectively. Both the coefficients are input to a filter information multiplexer 136. In the filter information multiplexer 136, the flatness region filter coefficient 129 and the nonflatness region filter coefficient 130 are multiplexed and output as the filter information 106.

When the filter coefficients are designed as described above, filter processing is performed (S19). More specifically, in the filter processor 116, filter processing is performed on the local-decoded image signal 104 in accordance with a classification corresponding to a region based on the region information 105 to generate the image signal 109.

The filter processor 116 will be explained with reference to FIG. 13. FIG. 13 shows a configuration of the filter processor 116 obtained when regions are classified into flatness regions and nonflatness regions as described in the example of the region partition module 114. The region information 105 is input to a switch controller 142, the local-decoded image signal 104 is input to a flatness region filter processor 143 and a nonflatness region filter processor 144, and the filter information 106 is input to a filter information demultiplexer 141. The filter information demultiplexer 141 demultiplexes the filter information 106 into a flatness filter coefficient 137 and a nonflatness filter coefficient 138. The flatness filter coefficient 137 and the nonflatness filter coefficient 138 are input to the flatness region filter processor 143 and the nonflatness region filter processor 144, respectively.

The switch controller 142, based on the region information 105, controls the flatness region filter processor 143, the nonflatness region filter processor 144, and a signal switch 145. When the region information 105 indicates a flatness region, the flatness region filter processor 143 performs filter processing on the local-decoded image signal 104 by the flatness filter coefficient 137 to generate an image signal 139 on which the filter processing has been performed. The image signal 139 on which the filter processing has been performed is output from the flatness region filter processor 143 and output to the outside of the filter processor 116 through the signal switch 145. When the region information 105 indicates a nonflatness region, the nonflatness region filter processor 144 performs filter processing on the local-decoded image signal 104 by the nonflatness filter coefficient 138 to generate an image signal 140 on which the filter processing has been performed. The image signal 140 on which the filter processing has been performed is output from the nonflatness region filter processor 144 and output to the outside of the filter processor 116 through the signal switch 145.

When a position (x,y) is a flatness region, a filter coefficient h (i,j) ($-N \le i \le N$, $-N \le j \le N$) is set to the flatness filter coefficient 137 and the filter processing may be determined by the following expression (9).

$$S_{ref}(x, y) = \sum_{i=-N}^{N} \sum_{i=-N}^{N} h(i, j)S(x + i, y + j) \tag{9}$$

When the position is a nonflatness region, a filter coefficient h (i,j) ($-N \le i \le N$, $-N \le j \le N$) is set to the nonflatness filter coefficient 138 and the filter processing may be determined by expression (6). When the operation of expression (6) is performed, an integer value hint (i, j) ($-N \le i \le N$, $-N \le j \le N$) is prepared as a filter coefficient, and the operation is performed based on the following expression (10) by integer division using a predetermined offset value R and a predetermined integer value D for rounding, then a floating-point operation can be avoided.

$$S_{ref}(x, y) = \frac{\sum_{i=-N}^{N} \sum_{i=-N}^{N} h_{\text{int}}(i, j)S(x + i, y + j) + R}{D} \tag{10}$$

The image signal 103 is stored in the frame memory 113. The image signal stored in the frame memory 113 is read as a reference image signal and input to the predictor 117. In the predictor 117, prediction is performed by using the reference image signal 108 to generate the prediction image signal 109. The prediction image signal 109 is input to the signal processor 112. In the variable length encoder 118, variable length encoding is performed to the residual information 102, the region partition parameters 111 and the filter information 106 to generate encoded data 110 including these codes.

(Second Embodiment)

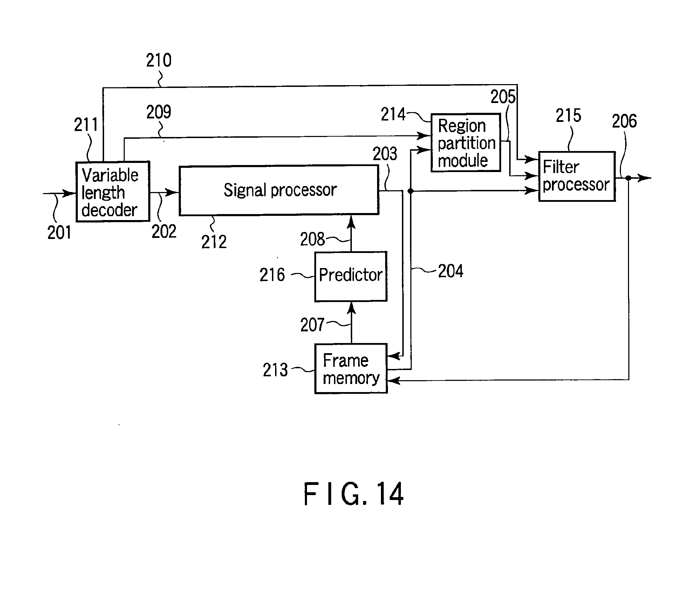

A video decoding apparatus according to a second embodiment will be explained with reference to FIG. 14. The video decoding apparatus includes a variable length decoder 211 to which encoded data 201 as to-be-decoded data is input. The variable length decoder 211 performs variable length decoding on the encoded data 201 to output residual information 202, a region partition parameter 209 and filter information 210. A residual information output terminal of the variable length decoder 211 is connected to a signal processor 212. The signal processor 212 generates a decoded image signal 203 based on the residual information 202 and a prediction image signal 208. A region partition parameter output terminal is connected to a region partition module 214. The region partition module 214 classifies the region of a decoded image signal 204 by the region partition parameter 209 as in the region partition module 114 of the first embodiment to generate region information 205. A filter information output terminal is connected to a filter processor 215. The filter processor 215, like the filter processor 116 of the first embodiment, performs filter processing on the decoded image signal 204 by using the region information 205 and the filter information 210 to generate an image signal 206.

An output terminal of the signal processor 212 is connected to a frame memory 213. An output terminal of the region partition module 214 is connected to the filter processor 215. An output terminal of the filter processor 215 is connected to the frame memory 213. A decoded image signal read terminal of the frame memory 213 is connected to the region partition module 214 and the filter processor 215. A reference image signal output terminal of the frame memory 213 is connected to a predictor 216 which generates the prediction image signal 208 by using a reference image signal 207.

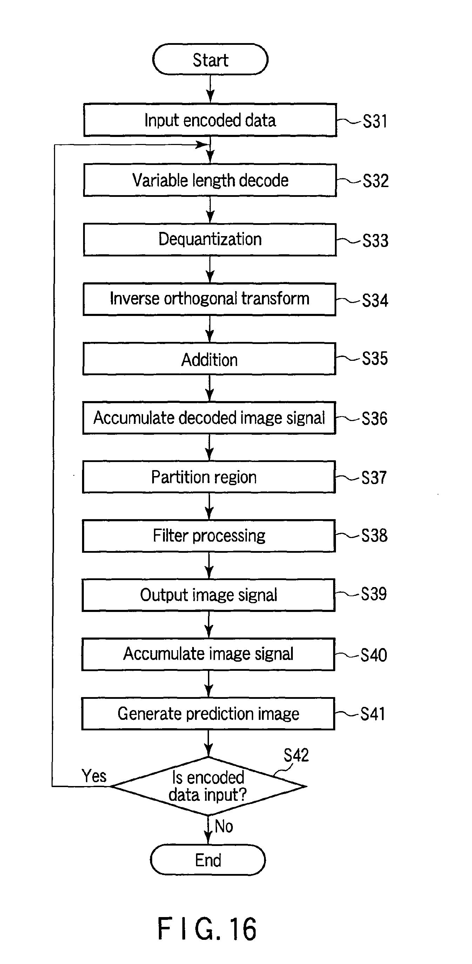

Video decoding performed by the video decoding apparatus having the above configuration will be explained with reference to the flowchart in FIG. 16. As the to-be-decoded encoded data 201, the encoded data 110 is output from the video encoding apparatus in FIG. 1 is input through a recording system or a transmission system (S31). Codes of the residual information, the region partition parameter, and the filter information included in the to-be-decoded encoded data 201 are decoded by the variable length decoder 211 (S32) to generate the residual information 202, the region partition parameter 209, and the filter information 210. The residual information 202 is input to the signal processor 212. The region partition parameter 209 is input to the region partition module 214. The filter information 210 is input to the filter processor 215.

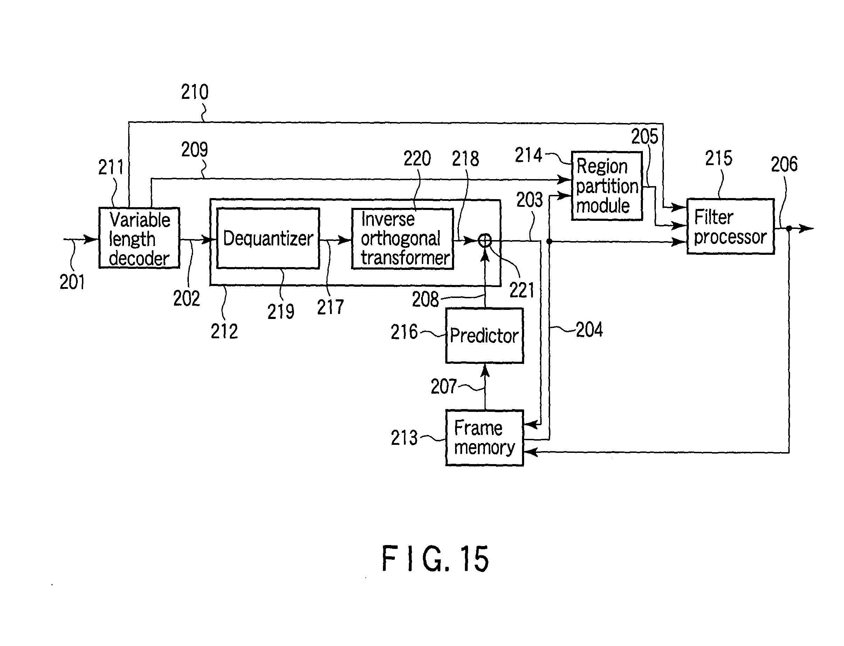

In the signal processor 212, a residual error is reproduced based on the residual information 202, and the decoded image signal 203 is generated based on the prediction image signal 208 and the reproduced residual error. More specifically, as shown in FIG. 15, an quantized orthogonal transform coefficient as the residual information 202 is dequantized by a dequantizer 219 (S33). The dequantized orthogonal transform coefficient is inverse-orthogonal-transformed by an inverse orthogonal transformer 220 to generate a residual signal 218 (S34). In an adder 221, the prediction image signal 208 is added to the residual signal 218 to obtain the decoded image signal 203 (S35).

The decoded image signal 203 is stored in the frame memory 213 (S36), and the decoded image signal 204 read from the frame memory 213 is input to the region partition module 214 and the filter processor 215. In the region partition module 214, a region of the decoded image signal 204 is classified by the region partition parameter 209 as in the region partition module 114 according to the first embodiment to generate the region information 205 (S37). The region information 205 is input to the filter processor 215. In the filter processor 215, as in the filter processor 116 according to the first embodiment, filter processing is performed on the decoded image signal 204 by using the region information 205 and the filter information 210 to generate the image signal 206 (S38). The image signal 206 is output as an output image signal (S39) and stored in the frame memory 213 (S40). The image signal stored in the frame memory 213 is read as a reference image signal and input to the predictor 216. In the predictor 216, prediction is performed by using the reference image signal 207 to generate the prediction image signal 208 (S41). The prediction image signal 208 is input to the signal processor 212 to generate the decoded image signal 203. When an encoded data input is confirmed to input the encoded data, the process returns to step S32. When the encoded data is not input, the process is ended (S42).

(Third Embodiment)

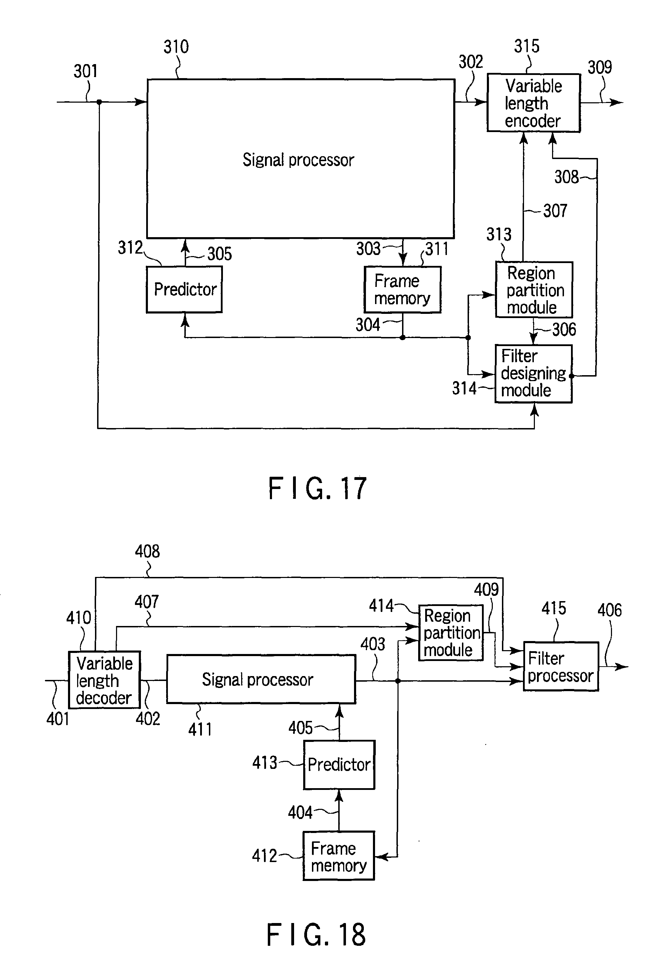

A video encoding apparatus according to a third embodiment of the present invention will be explained with reference to FIG. 17. An input image signal 301 is input to a signal processor 310. In the image signal processor 310, a residual signal between the prediction image signal 305 and the input image signal 301 is generated, and residual information 302 obtained by transforming the residual signal (for example, into a DCT coefficient) is generated and output. A local-decoded image signal 303 is generated from the prediction image signal 305 and the residual signal 302 and then output. The residual information 302 is input to the variable length encoder 315, and the local-decoded image signal 303 is stored in a frame memory 311. An internal configuration of the signal processor 310 may be the same as that in the first embodiment explained by using FIG. 2.

A local-decoded image signal 304 read from the frame memory 311 is input to a predictor 312, a region partition module 313, and a filter designing module 314. In the predictor 312, prediction is performed by using the local-decoded image signal 304 to generate the prediction image signal 305. The prediction image signal 305 is input to the signal processor 310. In the region partition module 313, as in the region partition module 114 according to the first embodiment, a region of the input local-decoded image signal 304 is classified by a predetermined classification criterion to generate region information 306 representing correspondence between a region and a classification. From the region partition module 313, a region partition parameter 307 and the region information 306 which are required for calculation of the classification criterion and classification based on the reference are output. The region partition parameter 307 is input to the variable length encoder 315, and the region information 306 is input to the filter designing module 314. In the filter designing module 314, based on the region information 306, the input image signal 301, and the local-decoded image signal 304, a filter (filter coefficient) is designed for each classification corresponding to the region. The filter may be designed in the same manner as that in the filter designing module 115 according to the first embodiment. Filter information 308 related to the designed filter is input to the variable length encoder 315. In the variable length encoder 315, variable length encoding is performed to the residual information 302, the region partition parameter 307, and the filter information 308, and encoded data 309 including these codes is generated.

(Fourth Embodiment)

A video decoding apparatus according to a fourth embodiment of the present invention will be explained with reference to FIG. 18. As to-be-decoded encoded data 401, the encoded data 309 output from the video encoding apparatus in FIG. 17 is input through an accumulation system or a transmission system. The to-be-decoded encoded data 401 includes codes of residual information, a region partition parameter, and filter information. These codes are decoded by a variable length decoder 410 to output residual information 402, a region partition parameter 407, and filter information 408. The residual information 402 is input to a signal processor 411, the region partition parameter 407 is input to a region partition module 414, and the filter information 408 is input to a filter processor 415. In the signal processor 411, a residual error is reproduced based on the residual information 402, and a decoded image signal 403 is generated based on a prediction image signal 405 and the reproduced residual error. An internal configuration of the signal processor may be the same as that in the second embodiment explained by using FIG. 15.

The decoded image signal 403 is input to the region partition module 414, the filter processor 415, and a frame memory 412. In the region partition module 414, the same process as that in the region partition module 313 according to the third embodiment is performed to generate region information 409 from the region partition parameter 407 and the decoded image signal 403. The region information 409 is input to the filter processor 415. The filter processor 415 performs filter processing on the decoded image signal 403 by using the region information 409 and the filter information 408 as in the filter processor 116 according to the first embodiment to generate an image signal 406. The image signal 406 is output as an output image signal. The decoded image signal stored in the frame memory 412 is read as a reference image and input to a predictor 413. In the predictor 413, prediction is performed by using a reference image signal 404 to generate the prediction image signal 405. The prediction image signal 405 is input to the signal processor 411.

(Fifth Embodiment)

A fifth embodiment will be explained. A basic configuration of a video encoding apparatus according to the embodiment is the same as that of the first embodiment. In the filter designing module 115 according to this embodiment, it is designated whether a filter is applied to each of classifications of regions. Based on the region information 105, the input image signal 101, and the local-decoded image signal 104, a filter is designed for a classification to which the filter is applied. Information (to be referred to as filter application/nonapplication information) representing whether a filter is applied to each classification and a filter coefficient of the applied classification are output as filter information.

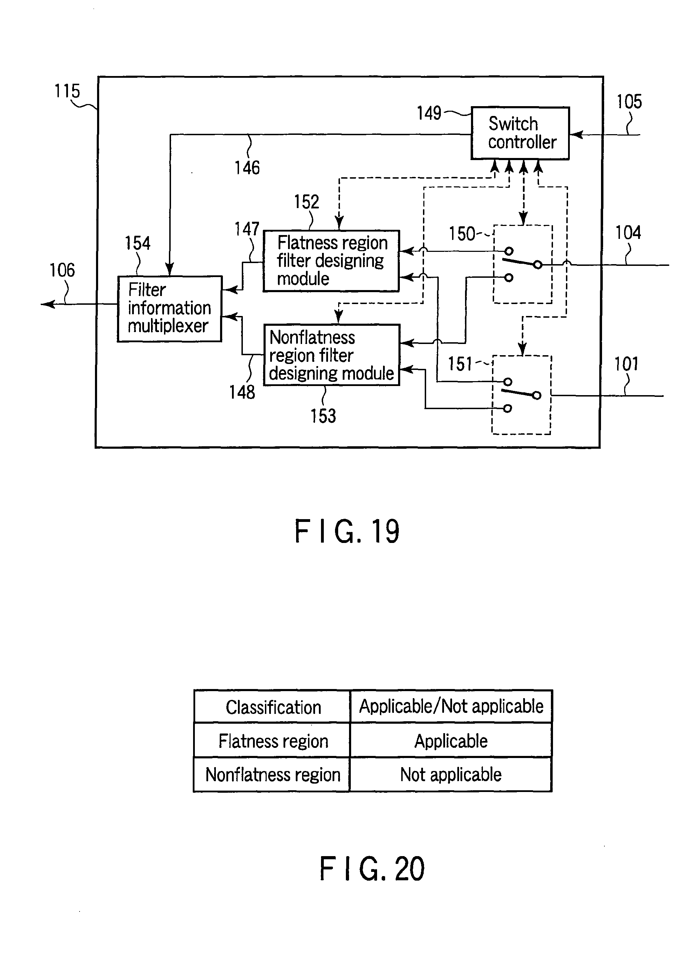

The filter designing module 115 will be explained with reference to FIG. 19. FIG. 19 shows a configuration of the filter designing module 115 which, as in the example of the region partition module 114, classifies regions into a flatness region and a nonflatness region and designates whether filters are applied to the classifications, respectively. The region information 105 is input to a switch controller 149, the local-decoded image signal 104 is input to a switch 150 to switch local-decoded image signals, and the input image signal 101 is input to a switch 151 to switch input image signals.

The switch controller 149, based on the region information 105, controls the switch 150, the switch 151, a flatness region filter designing module 152, and a nonflatness region filter designing module 153. The switch controller 149 designates whether a filter is applied to each of the flatness region and the nonflatness region to output filter application/nonapplication information 146. When a region is a flatness region, and filter processing is designated by the switch controller 149 to be performed on the flatness region, both the local-decoded image signal 104 and the input image signal 101 are input to the flatness region filter designing module 152. When a region is a nonflatness region, and filter processing is designated by the switch controller 149 to be performed on the nonflatness region, both the local-decoded image signal 104 and the input image signal 101 are input to the nonflatness region filter designing module 153.

In the flatness region filter designing module 152, a filter is designed based on the input image signal 101 and the local-decoded image signal 104 which are classified into a flatness region to output a flatness region filter coefficient 147. In the nonflatness region filter designing module 153, a filter is designed based on the input image signal 101 and the local-decoded image signal 104 which are classified into a nonflatness region to output a nonflatness region filter coefficient 148. In each of the flatness region filter designing module 152 and the nonflatness region filter designing module 153, when a Wiener-Hopf equation is established by the input image signal 101 and the local-decoded image signal 104 to calculate a solution, a filter can be designed which minimizes a square error between the input image signal 101 and an image signal obtained by performing filter processing on the local-decoded image signal 104.

The filter application/nonapplication information 146 output from the switch controller 149 is input to a filter information multiplexer 154. In the filter information multiplexer 154, a filter coefficient required for filter information is selected based on the filter application/nonapplication information 146 to generate and output the filter information 106 obtained by multiplexing the filter application/nonapplication information 146 and the selected filter coefficient. For example, when a filter is designated to be applied only to a flatness region in the switch controller 149, information of a table shown in FIG. 19 is input to the filter information multiplexer 154 as the filter application/nonapplication information 146. In the filter information multiplexer 154, the filter information 106 obtained by multiplexing the flatness region filter coefficient 147 to which the filter is applied and the filter application/nonapplication information in FIG. 19 is generated and output. The filter processor 116 determines a region to which the filter is applied and a region to which the filter is not applied depending on a classification corresponding to the region based on the region information 105 and the filter information 106, and filter processing is performed on the local-decoded image signal 104 to generate the image signal 107.

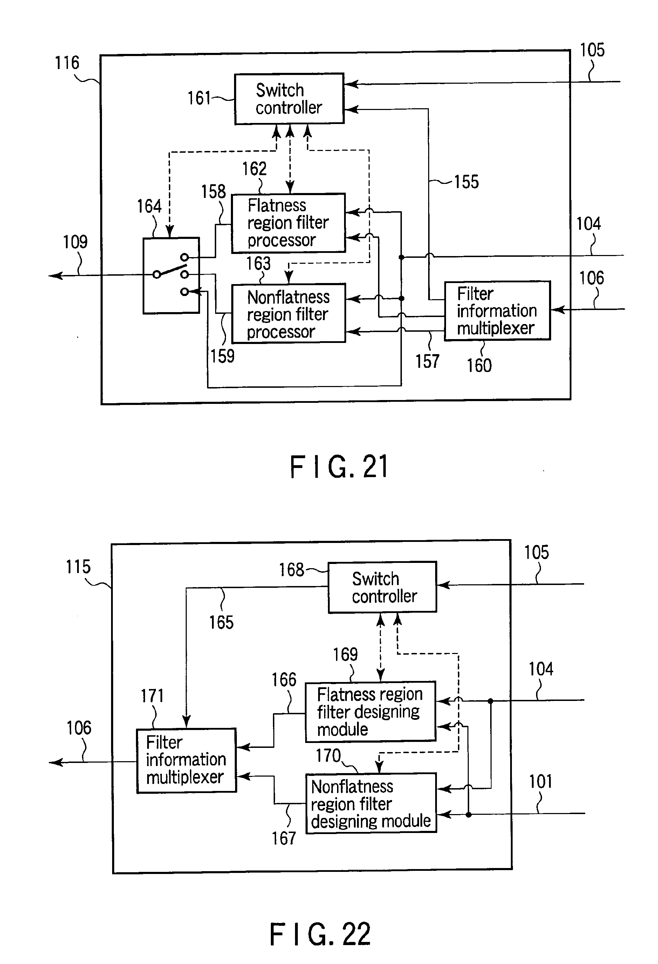

The filter processor 116 will be explained with reference to FIG. 21. FIG. 21 shows a configuration of the filter processor 116 which classifies regions into a flatness region and a nonflatness region as in the example of the region partition module 114 and designates whether a filter is applied to each of the regions. The region information 105 is input to a switch controller 161, the local-decoded image signal 104 is input to a flatness region filter processor 162, a nonflatness region filter processor 163, and a signal switch 164, and the filter information 106 is input to a filter information demultiplexer 160. In the filter information demultiplexer 160, the filter information 106 is demultiplexed into filter application/nonapplication information 155 and a filter coefficient. The filter application/nonapplication information 155 is input to the switch controller 161. When a flatness region filter coefficient is present in the filter information 106, a flatness region filter coefficient 156 is input to the flatness region filter processor 162. When a nonflatness region filter coefficient is present in the filter information 106, a nonflatness region filter coefficient 157 is input to the nonflatness region filter processor 163.

The switch controller 161, based on the region information 105 and the filter application/nonapplication information 155, controls the flatness region filter processor 162, the nonflatness region filter processor 163, and the signal switch 164. When a region is a flatness region according to the region information 105, and filter processing is designated by the filter application/nonapplication information 155 to be applied to the flatness region, the flatness region filter processor 162 performs filter processing on the local-decoded image signal 104 with the flatness region filter coefficient 156 to generate an image signal 158 on which the filter processing has been performed. Then the image signal 158 on which the filter processing has been performed is output from the flatness region filter processor 162 and output to the outside of the filter processor 116 through the signal switch 164.

When a region is a nonflatness region, and filter processing is designated to be performed on the nonflatness region, the nonflatness region filter processor 163 performs the filter processing on the local-decoded image signal 104 with the nonflatness region filter coefficient 157 to generate an image signal 159 on which the filter processing has been performed. The image signal 159 on which the filter processing has been performed is output from the nonflatness region filter processor 163 and output to the outside of the filter processor 116 through the signal switch 164. When a region is a flatness region, and filter processing is designated not to be performed on the flatness region, the local-decoded image signal 104 is output to the outside of the filter processor 116 through the signal switch 164. When a region is a nonflatness region, and filter processing is designated not to be performed on the nonflatness region, the same operation as that performed when the region is the flatness region and the filter processing is designated not to be performed on the flatness region is performed.

(Sixth Embodiment)

A sixth embodiment will be explained. A basic configuration of a video decoding apparatus according to the embodiment is the same as that in the second embodiment shown in FIG. 14. In the embodiment, it is assumed that the filter processor 215 performs the same operation as that of the filter processor 116 according to the fifth embodiment. More specifically, the filter processor 116 determines, based on the region information 105 and the filter information 106, a region to which a filter is applied and a region to which the filter is not applied depending on a classification corresponding to the region and performs filter processing on the local-decoded image signal 104 and generates the image signal 107.

(Seventh Embodiment)

A seventh embodiment will be explained. A basic configuration of a video encoding apparatus according to the embodiment is the same as that of the third embodiment shown in FIG. 17. In the embodiment, it is assumed that a filter designing module 314 shown in FIG. 17 performs the same operation as that of the filter designing module 115 according to the fifth embodiment shown in FIG. 19.

(Eighth Embodiment)

An eighth embodiment will be explained. A basic configuration of a video decoding apparatus according to the embodiment is the same as that in the fourth embodiment shown in FIG. 18. In the embodiment, it is assumed that a filter processor 415 performs the same operation as that in the filter processor 116 according to the fifth embodiment.

(Ninth Embodiment)

A ninth embodiment will be explained. A basic configuration of a video encoding apparatus according to the embodiment is the same as that in the first embodiment. In the filter designing module 115 according to the embodiment, it is designated whether a filter is applied to each of classifications of regions. To a classification to which a filter is applied, based on the region information 105, the input image signal 101, and the local-decoded image signal 104, a filter to be applied is selected from filters prepared in advance. Filter application/nonapplication information and information designating a filter coefficient of a classification to be applied are output as the filter information 106.

The filter designing module 115 will be explained with reference to FIG. 22 by using an example in which regions are classified into a flatness region and a nonflatness region as in the example of the region partition module 114. The region information 105 is input to a switch controller 168, the local-decoded image signal 104 is input to a flatness region filter designing module 169 and a nonflatness region filter designing module 170, and the input image signal 101 is input to the flatness region filter designing module 169 and the nonflatness region filter designing module 170. The switch controller 168 controls the flatness region filter designing module 169 and the nonflatness region filter designing module 170 based on the region information 105. The switch controller 168 designates whether a filter is applied to each of a flatness region and a nonflatness region to output filter application/nonapplication information 165.

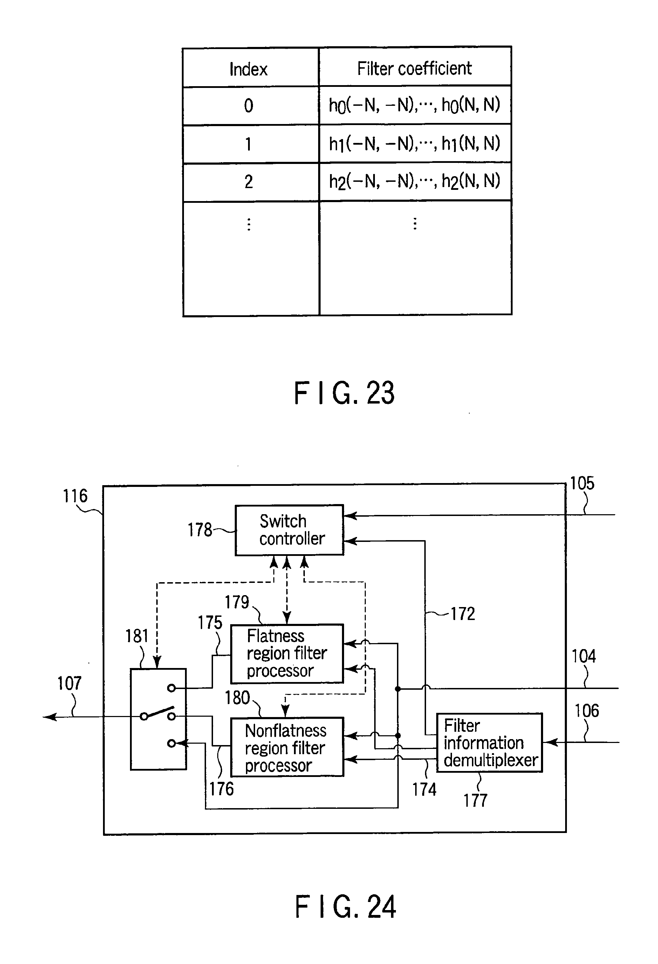

When a region is a flatness region, and it is designated by the switch controller 168 to perform filter processing on the flatness region, the flatness region filter designing module 169 selects a filter coefficient to be applied from filter coefficients prepared in advance based on the local-decoded image signal 104 and the input image signal 101 to output an index representing the selected filter coefficient. For example, when a filter coefficient as shown in FIG. 23 and an index thereof are given, a filter coefficient which minimizes an error between an input image signal and an image obtained by performing filter processing on a local-decoded image is selected, and an index corresponding to the selected filter coefficient is output. An index 166 is input to a filter information multiplexer 171. When a region is a nonflatness region, and it is designated by the switch controller 168 to perform filter processing on the nonflatness region, the nonflatness region filter designing module 170 selects a filter coefficient as in the flatness region filter designing module 169 to output an index corresponding to the filter coefficient. An index 167 is input to the filter information multiplexer 171.

In the filter information multiplexer 171, based on the filter application/nonapplication information 165, an index required for filter information is selected, and filter information obtained by multiplexing the filter application/nonapplication information 165 and the selected index is generated and output. For example, when a filter is designated by the switch controller 168 to be applied to only a flatness region, and a filter coefficient of index 1 is selected by the flatness region filter designing module 169, information of a table shown in FIG. 20 is input to the filter information multiplexer 171 as the filter application/nonapplication information 165. In the filter information multiplexer 171, filter information obtained by multiplexing index of the filter coefficient of the flatness region and the filter application/nonapplication information in FIG. 20 is generated and output.

The filter processor 116, based on the region information 105 and the filter information 106, determines a region to which a filter is applied and a region to which a filter is not applied depending on a classification corresponding to regions. With respect to the region to which the filter is applied, a filter to be applied is selected from filters prepared in advance, and filter processing is performed on the local-decoded image signal 104 to generate the image signal 107.

The filter processor 116 will be explained with reference to FIG. 24 by using an example in which regions are classified into a flatness region and a nonflatness region as in the example of the region partition module 114. The region information 105 is input to a switch controller 178, the local-decoded image signal 104 is input to a flatness region filter processor 179, a nonflatness region filter processor 180, and a signal switch 181, and the filter information 106 is input to a filter information demultiplexer 177. In the filter information demultiplexer 177, the filter information 106 is demultiplexed into filter application/nonapplication information 172 and an index of a filter coefficient. The filter application/nonapplication information 172 is input to the switch controller 178. When an index of a filter coefficient of a flatness region is present in the filter information 106, an index 173 of the filter coefficient of the flatness region is input to the flatness region filter processor 179. When an index of a filter coefficient of a nonflatness region is present in the filter information 106, an index 174 of the filter coefficient of the nonflatness region is input to the nonflatness region filter processor 180.

The switch controller 178, based on the region information 105 and the filter application/nonapplication information 172, controls the flatness region filter processor 179, the nonflatness region filter processor 180, and the signal switch 181. When a region is a flatness region according to the region information 105, and it is designated by the filter application/nonapplication information 172 to perform filter processing on the flatness region, the flatness region filter processor 179 selects a filter coefficient from the indexes of the filter coefficients of the flatness region and performs filter processing on the local-decoded image signal 104 with the selected filter coefficient to generate an image signal 175 on which the filter processing has been performed. The image signal 175 on which the filter processing has been performed is output from the flatness region filter processor 179 and output to the outside of the filter processor 116 through the signal switch 181.

When a region is a nonflatness region, and filter processing is designated to be performed on the nonflatness region, the nonflatness region filter processor 180 selects a filter coefficient from the indexes of the filter coefficients of the nonflatness region and performs filter processing on the local-decoded image signal 104 with the selected filter coefficient to generate an image signal 176 on which the filter processing has been performed. The image signal 176 on which the filter processing has been performed is output from the nonflatness region filter processor 180 and output to the outside of the filter processor 116 through the signal switch 181. When a region is a flatness region, and filter processing is designated not to be performed on the flatness region, the local-decoded image signal 104 is output to the outside of the filter processor 116 through the signal switch 181. When a region is a nonflatness region, and filter processing is designated not to be performed on the nonflatness region, the same operation as that performed when the region is the flatness region and the filter processing is designated not to be performed on the flatness region is performed.

(Tenth Embodiment)

A tenth embodiment will be explained. A basic configuration of a video decoding apparatus according to the embodiment is the same as that in the second embodiment shown in FIG. 14. In the embodiment, it is assumed that the filter processor 215 performs the same operation as that of the filter processor 116 according to the ninth embodiment shown in FIG. 24.

(Eleventh Embodiment)

An eleventh embodiment will be explained. A basic configuration of a video encoding apparatus according to the embodiment is the same as that in the third embodiment shown in FIG. 17. In the embodiment, it is assumed that the filter designing module 115 performs the same operation as that of the filter designing module according to the ninth embodiment shown in FIG. 22.

(Twelfth Embodiment)

A twelfth embodiment will be explained. A basic configuration of a video decoding apparatus according to the embodiment is the same as that in the fourth embodiment shown in FIG. 18. In the embodiment, it is assumed that the filter processor 415 performs the same operation as that of the filter processor 116 according to the ninth embodiment shown in FIG. 24.

(Thirteenth Embodiment)

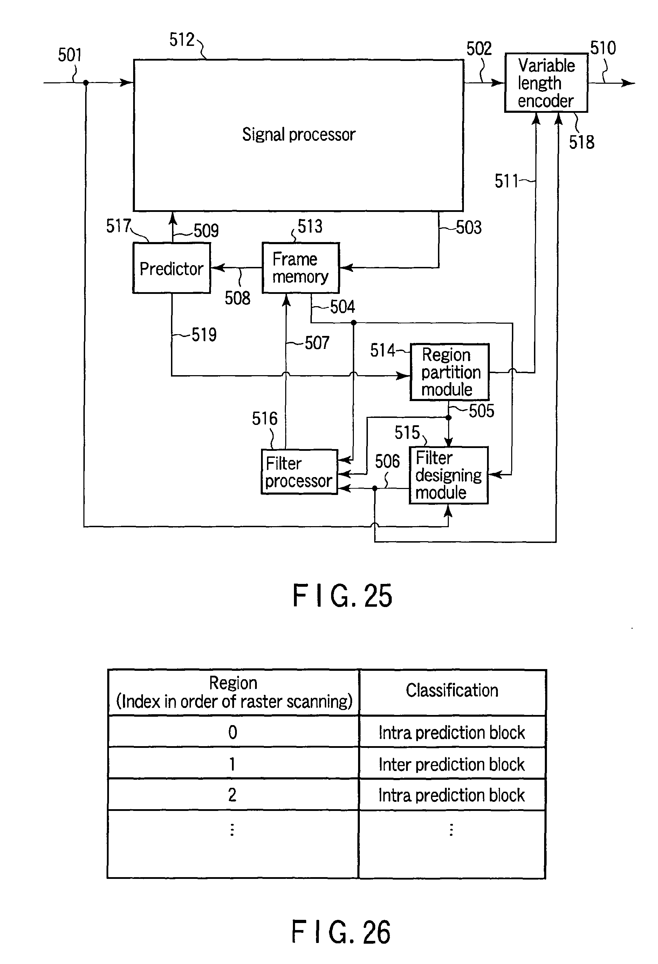

A thirteenth embodiment will be explained with reference to FIG. 25. A basic configuration of a video encoding apparatus according to the embodiment is the same as that in the first embodiment. The thirteenth embodiment is different from the first embodiment in that, in place of a local-decoded image signal 503 from a signal processor 512, prediction mode information 519 from a predictor 517 is input to a region partition module 514. In the region partition module 514, region information 505 representing a correspondence between a region and a classification is generated and output by the prediction mode information 519. Furthermore, the prediction mode information is output as a region partition parameter 511 required for classification.

For example, it is assumed that modes of two types, i.e., an intra prediction mode and an inter prediction mode are present as prediction mode information in units of a block. At this time, in the region partition module 514, according to the prediction mode information 519, regions are classified into a block (to be referred to as an intra prediction block) set in the intra prediction mode and a block (to be referred to as an inter prediction block) set in the inter prediction mode. With the above process, the regions can be associated with the classifications, respectively. Therefore, as region information representing a correspondence between a region and a classification, a table shown in FIG. 26 can be configured. From the region partition module 514, the prediction mode information is output as the region partition parameter 511, and the table shown in FIG. 26 is output as the region information 505.

When motion compensation prediction of decimal pixel accuracy is performed in units of a block in the predictor 517, by using the prediction mode information 519 as a motion vector of each block, a block may be classified depending on whether the motion vector indicates a decimal pixel position or an integer pixel position.

(Fourteenth Embodiment)

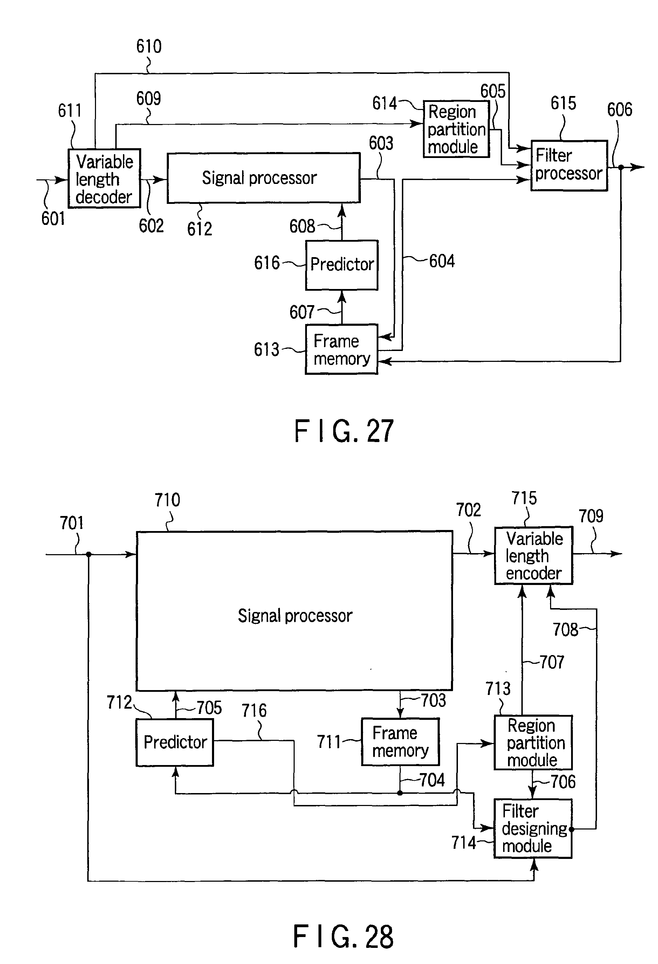

A video decoding apparatus according to a fourteenth embodiment will be explained with reference to FIG. 27. A basic configuration of the video decoding apparatus according to the embodiment is the same as that in the second embodiment. The fourteenth embodiment is different from the second embodiment in that a decoded image signal 604 is not input from a frame memory 613 to a region partition module 614. In the region partition module 614, an image is classified by a region partition parameter 609 as in the region partition module 514 according to the thirteenth embodiment to generate region information 605.

(Fifteenth Embodiment)

A video encoding apparatus according to a fifteenth embodiment will be explained with reference to FIG. 28. A basic configuration of the video encoding apparatus according to the embodiment is the same as that in the third embodiment. The fifteenth embodiment is different from the third embodiment in that, in place of a local-decoded image signal 703 from a signal processor 710, prediction mode information 716 from a predictor 712 is input to a region partition module 713. In the region partition module 713, based on the prediction mode information 716, region information 706 representing a correspondence between a region and a classification is generated and output. Prediction mode information is output as a region partition parameter 707 required for classification. As the prediction mode information, as in the example in the thirteenth embodiment, an intra/inter prediction mode or a motion vector can be used.

(Sixteenth Embodiment)

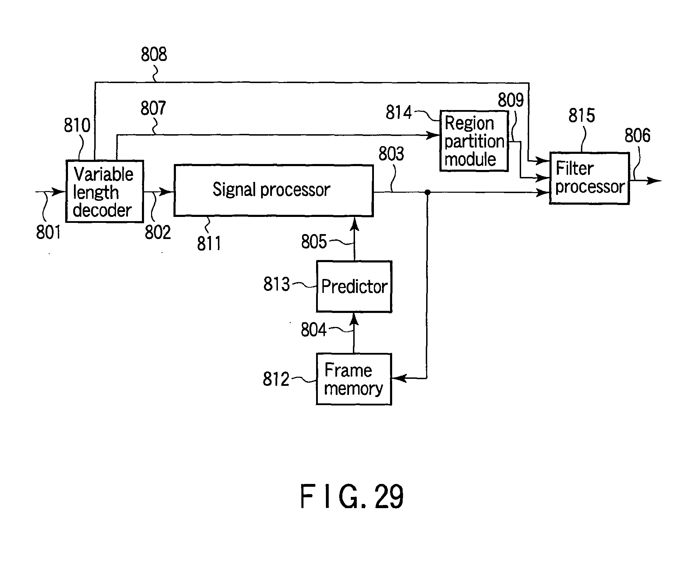

A video decoding apparatus according to a sixteenth embodiment will be explained with reference to FIG. 29. A basic configuration of the video decoding apparatus according to the embodiment is the same as that in the fourth embodiment. The sixteenth embodiment is different from the fourth embodiment in that a decoded image signal 804 from a frame memory 812 is not input to a region partition module 814. In the region partition module 814, an image is classified by a region partition parameter 807 as in the region partition module 713 according to the fifteenth embodiment to generate region information 809.

(Seventeenth Embodiment)

A seventeenth embodiment will be explained. A basic configuration of a video encoding apparatus according to the embodiment is the same as that in the thirteenth embodiment shown in FIG. 25. In a filter designing module 515 according to the embodiment, it is designated whether a filter is applied to each of classifications of regions, and a filter is designed for a classification to which the filter is applied by the region information 505, an input image signal 501, and a local-decoded image signal 504. Filter application/nonapplication information and a filter coefficient of a classification to be applied are output as filter information 506.

A filter processor 516, based on the region information 505 and the filter information 506, designates a region to which a filter is applied and a region to which a filter is not applied depending on a classification corresponding to the region and performs filter processing on the local-decoded image signal 504 to generate an image signal 507.

(Eighteenth Embodiment)

An eighteenth embodiment will be explained. A basic configuration of a video decoding apparatus according to the embodiment is the same as that in the fourteenth embodiment shown in FIG. 27. In the embodiment, it is assumed that a filter processor 615 performs the same operation as that of the filter processor 516 according to the seventeenth embodiment. More specifically, the filter processor 615, based on the region information 605 and filter information 610, determines a region to which a filter is applied and a region to which a filter is not applied depending on a classification corresponding to the region and performs filter processing on the decoded image signal 604 to generate the image signal 507.

(Nineteenth Embodiment)

A nineteenth embodiment will be explained. A basic configuration of a video encoding apparatus according to the embodiment is the same as that in the fifteenth embodiment shown in FIG. 28. In the embodiment, it is assumed that a filter designing module 714 performs the same operation as that of the filter designing module 515 according to the seventeenth embodiment. More specifically, in the filter designing module 714, it is designated whether a filter is applied to each of classifications of regions, and a filter is designed for a classification to which the filter is applied based on the region information 706, an input image signal 701, and a local-decoded image signal 704. Filter application/ nonapplication information and a filter coefficient of a classification to be applied are output as filter information 708.

(Twentieth Embodiment)

A twentieth embodiment will be explained. A basic configuration of a video decoding apparatus according to the embodiment is the same as that in the sixteenth embodiment shown in FIG. 29. In the embodiment, it is assumed that a filter processor 815 performs the same operation as that of the filter processor 516 according to the seventeenth embodiment. More specifically, the filter processor 815, based on the region information 809 and filter information 808, determines a region to which a filter is applied and a region to which a filter is not applied depending on a classification corresponding to the region and performs filter processing on the decoded image signal 803 to generate the image signal 806.

(Twenty-first Embodiment)

A twenty-first embodiment will be explained. A basic configuration of a video encoding apparatus according to the embodiment is the same as that in the thirteenth embodiment shown in FIG. 25. In the filter designing module 515 of this embodiment, it is designated whether a filter is applied to each of classifications of regions, and for a classification to which a filter is applied, a filter to be applied is selected from filters prepared in advance based on the region information 505, the input image signal 501, and the local-decoded image signal 504. Filter application/nonapplication information and information designating a filter coefficient of a classification to be applied are output as the filter information 506.
A filter processor 516, based on the region information 505 and the filter information 506, determines a region to which a filter is applied and a region to which a filter is not applied depending on a classification corresponding to the region. With respect to the region to which the filter is applied, a filter to be applied is selected from filters prepared in advance, and filter processing is performed on the local-decoded image signal 504 to generate the image signal 507.

(Twenty-second Embodiment)

A twenty-second embodiment will be explained. A basic configuration of a video decoding apparatus according to the embodiment is the same as that in the fourteenth embodiment shown in FIG. 27. In the embodiment, it is assumed that the filter processor 615 performs the same operation as that of the filter processor 516 according to the twenty-first embodiment. More specifically, the filter processor 615, based on the region information 605 and the filter information 610, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 604 to generate an image signal 606.

(Twenty-third Embodiment)

A twenty-third embodiment will be explained. A basic configuration of a video encoding apparatus according to the embodiment is the same as that in the fifteenth embodiment shown in FIG. 28. It is assumed that the filter designing module 714 performs the same operation as that of the filter processor 516 according to the twenty-first embodiment.

(Twenty-fourth Embodiment)

A twenty-fourth embodiment will be explained. A basic configuration of a video decoding apparatus according to the embodiment is the same as that in the sixteenth embodiment shown in FIG. 29. It is assumed that a filter processor 815 according to the embodiment performs the same operation as that of the filter processor 516 according to the twenty-first embodiment.

(Twenty-fifth Embodiment)

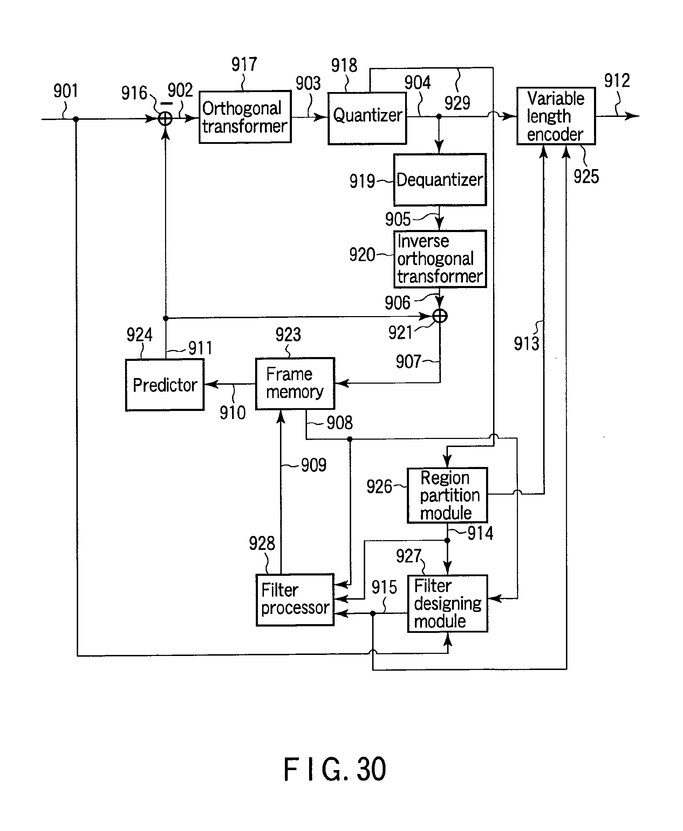

A twenty-fifth embodiment will be explained with reference to FIG. 30. A basic configuration of a video encoding apparatus according to the embodiment is the same as that in FIG. 2 of the first embodiment. The twenty-fifth embodiment is different from the first embodiment in that, in place of a local-decoded image signal from an adder, a quantizing parameter from a quantizer 918 is input to a region partition module 926. In the region partition module 926, based on a quantizing parameter 929, region information 914 representing a correspondence between a region and a classification is generated and output. Furthermore, a quantizing parameter is output as a region partition parameter 913 required for classification.

For example, it is assumed that quantizing parameters are present in units of a block. At this time, in the region partition module 926, blocks can be classified into finely-quantized regions and coarsely-quantized regions depending on whether the quantizing parameter exceeds a predetermined threshold value.

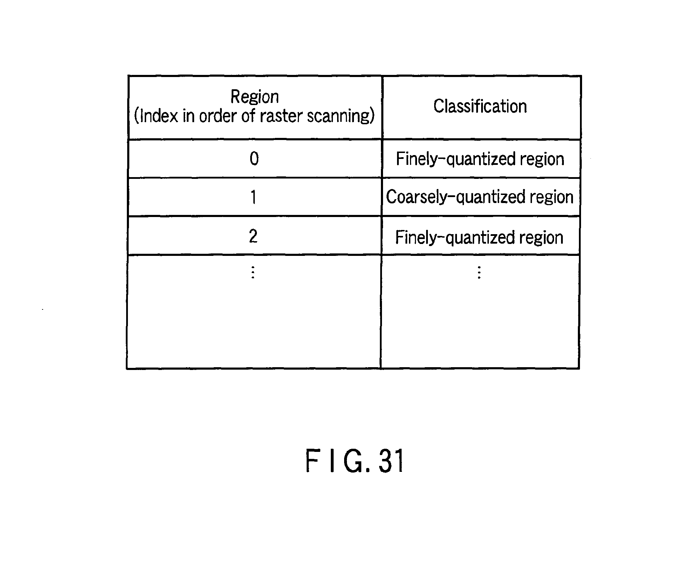

With the above process, the regions can be associated with the classifications, respectively. Therefore, as region information representing a correspondence between a region and a classification, a table shown in FIG. 31 can be configured. From the region partition module 926, the quantizing parameter and the threshold value are output as the region partition parameter 913, and information of a table shown in FIG. 31 is output as the region information 914.

(Twenty-sixth Embodiment)

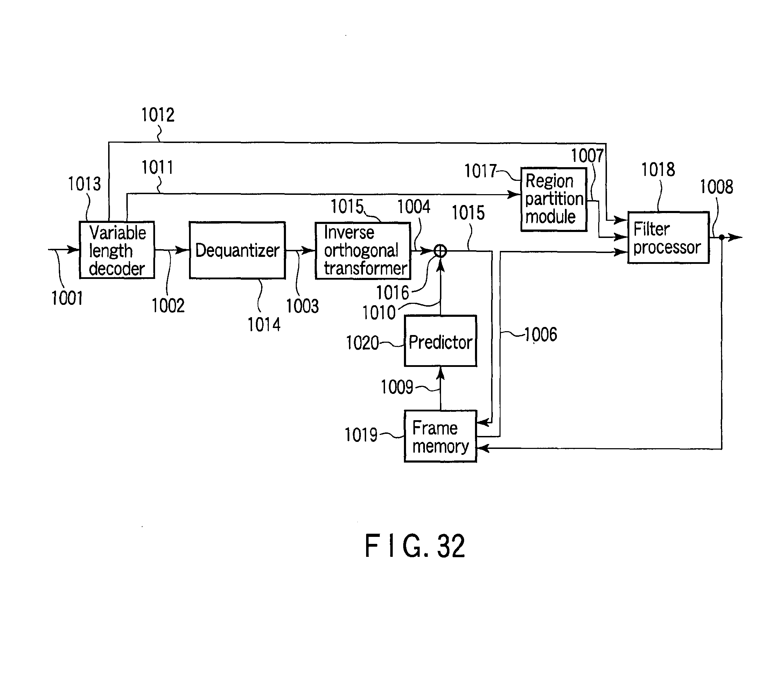

A twenty-sixth embodiment will be explained with reference to FIG. 32. A basic configuration of a video decoding apparatus according to the embodiment is the same as that in FIG. 15 of the second embodiment. The twenty-sixth embodiment is different from the second embodiment in that a decoded image signal is not input from a frame memory 1019 to a region partition module 1017. In the region partition module 1017, classification is performed by a region partition parameter as in the region partition module 926 according to the twenty-fifth embodiment, and region information 1007 is generated.

(Twenty-seventh Embodiment)

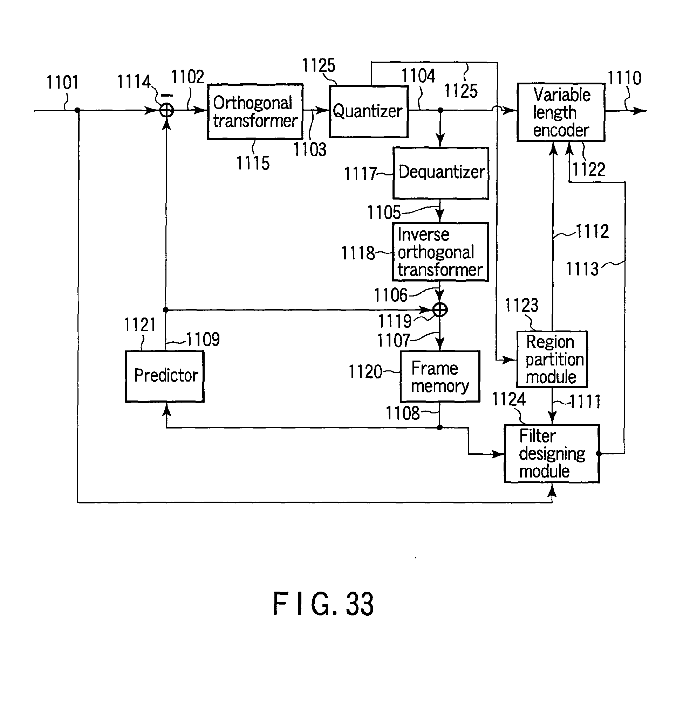

A video encoding apparatus according to a twenty-seventh embodiment will be explained with reference to FIG. 33. A basic configuration of the video encoding apparatus according to the embodiment is the same as that in the third embodiment in which the signal processor has the same configuration as that in FIG. 2. The twenty-seventh embodiment is different from the third embodiment in that, in place of a local-decoded image signal from a frame memory 1108, a quantizing parameter from a quantizer 1116 is input to a region partition module 1123. In the region partition module 1123, based on a predetermined threshold value and a quantizing parameter 1125, region information 1111 representing a correspondence between a region and a classification is generated and output. As a region partition parameter 1112 required for classification, a quantizing parameter and a threshold value are output.

(Twenty-eighth Embodiment)

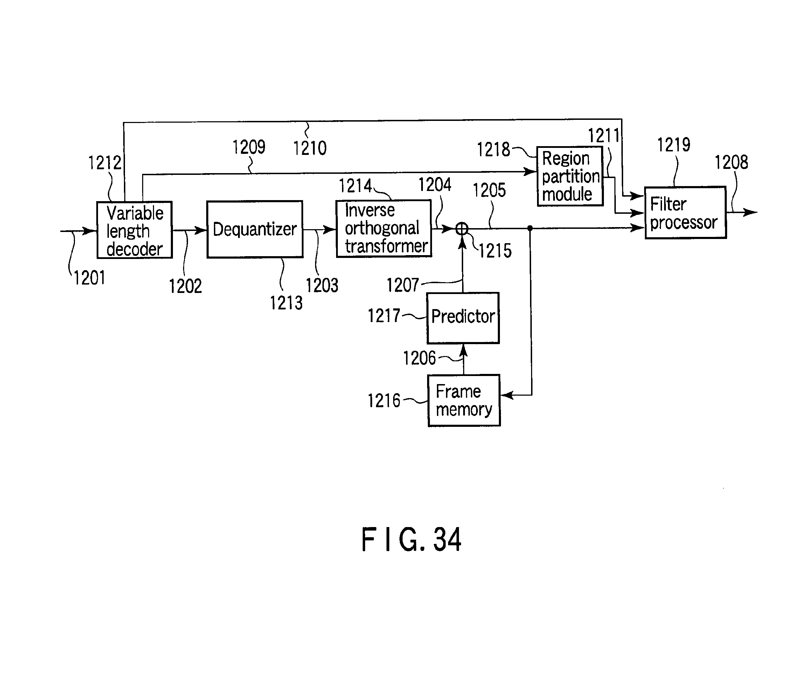

A video decoding apparatus according to a twenty-eighth embodiment will be explained with reference to
FIG. 34. A basic configuration of the video decoding apparatus according to the embodiment is the same as that in the fourth embodiment in which the signal processor has the same configuration as that in FIG. 15. The twenty-eighth embodiment is different from the fourth embodiment in that a decoded image signal from a frame memory 1216 is not input to a region partition module 1218. In the region partition module 1218, based on a region partition parameter 1209, classification is performed as in the region partition module 1123 according to the twenty-seventh embodiment, and region information 1211 is generated.

(Twenty-ninth Embodiment)

A twenty-ninth embodiment will be explained. A basic configuration of a video encoding apparatus according to the embodiment is the same as that in the twenty-fifth embodiment shown in FIG. 30. In a filter processor 928 according to the embodiment, it is designated whether a filter is applied to each of classifications of regions and, based on the region information 914, an input image signal 901, and a local-decoded image signal 908, a filter is designed for a classification to which a filter is applied. Filter application/nonapplication information and a filter coefficient of a classification to be applied are output as filter information.

The filter processor 928, based on the region information 914 and filter information 915, determines a region to which a filter is applied and a region to which a filter is not applied depending on a corresponding classification and performs filter processing on the local-decoded image signal 908 to generate an image signal 909.

(Thirtieth Embodiment)

A thirtieth embodiment will be explained. A basic configuration of a video decoding apparatus according to the embodiment is the same as that in the twenty-sixth embodiment shown in FIG. 32. It is assumed that a filter processor according to the embodiment performs the same operation as that of the filter processor 928 according to the twenty-ninth embodiment. More specifically, a filter processor 1018, based on the region information 1007 and filter information 1012, determines a region to which a filter is applied and a region to which a filter is not applied depending on a corresponding classification and performs filter processing on a decoded image signal 1006 to generate an image signal 1008.

(Thirty-first Embodiment)

A thirty-fifth embodiment will be explained. A basic configuration of a video encoding apparatus according to the embodiment is the same as that in the twenty-seventh embodiment shown in FIG. 33. It is assumed that a filter designing module according to the embodiment performs the same operation as that of a filter designing module 927 according to the twenty-ninth embodiment. More specifically, in a filter designing module 1124, it is designated whether a filter is applied to each of classifications of regions and, based on the region information 1111, an input image signal 1101, and the local-decoded image signal 1108, a filter is designed for a classification to which a filter is applied. Filter application/nonapplication information and a filter coefficient of a classification to be applied are output as filter information 1113.

(Thirty-second Embodiment)

A thirty-second embodiment will be explained. A basic configuration of a video decoding apparatus according to the embodiment is the same as that in the twenty-eighth embodiment shown in FIG. 34. It is assumed that a filter processor according to the embodiment performs the same operation as that of the filter processor 928 according to the twenty-ninth embodiment. More specifically, a filter processor 1219, based on the region information 1211 and filter information 1210, determines a region to which a filter is applied and a region to which a filter is not applied depending on a classification corresponding to the region and performs filter processing on a decoded image signal 1205 to generate an image signal 1208.

(Thirty-third Embodiment)

A thirty-third embodiment will be explained. A basic configuration of a video encoding apparatus according to the embodiment is the same as that in the twenty-fifth embodiment shown in FIG. 30. In the filter designing module 927 of this embodiment, it is designated whether a filter is applied to each of classifications of regions. With respect to a classification to which a filter is applied, based on the region information 914, the input image signal 901, and the local-decoded image signal 908, a filter to be applied is selected from filters prepared in advance. Filter application/nonapplication information and information designating a filter coefficient of a classification to be applied are output as the filter information 915.

The filter processor 928, based on the region information 914 and the filter information 915, determines a region to which a filter is applied and a region to which a filter is not applied depending on a corresponding classification. With respect to the region to which the filter is applied, a filter to be applied is selected from filters prepared in advance to perform filter processing on the local-decoded image signal 908 to generate the image signal 909.

(Thirty-fourth Embodiment)

A thirty-fourth embodiment will be explained. A basic configuration of a video decoding apparatus according to the embodiment is the same as that in the twenty-sixth embodiment shown in FIG. 32. It is assumed that a filter processor according to the embodiment performs the same operation as that of the filter processor 928 according to the thirty-third embodiment. More specifically, the filter processor 1018, based on the region information 1007 and the filter information 1012, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 1006 to generate the image signal 1008.

(Thirty-fifth Embodiment)

A thirty-fifth embodiment will be explained. A basic configuration of a video encoding apparatus according to the embodiment is the same as that in the twenty-seventh embodiment shown in FIG. 33. It is assumed that the filter designing module 1124 of this embodiment performs the same operation as that of the filter designing module 927 according to the thirty-third embodiment. More specifically, in the filter designing module 1124, it is designated whether a filter is applied to each of classifications of regions. With respect to the classification to which the filter is applied, based on the region information 1111, the input image signal 1101, and the local-decoded image signal 1108, a filter to be applied is selected from filters prepared in advance. Filter application/nonapplication information and information designating a filter coefficient of a classification to be applied are output as the filter information 1113.

(Thirty-sixth Embodiment)

A thirty-sixth embodiment will be explained. A basic configuration of a video decoding apparatus according to the embodiment is the same as that in the twenty-eighth embodiment shown in FIG. 34. It is assumed that a filter processor according to the embodiment performs the same operation as that of the filter processor 928 according to the thirty-third embodiment. More specifically, the filter processor 1219, based on the region information 1211 and filter information 1210, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 1205 to generate the image signal 1208.

(Thirty-seventh Embodiment)

A thirty-seventh embodiment will be explained. A basic configuration of a video encoding apparatus according to the embodiment is the same as that in the first embodiment shown in FIG. 1. In the embodiment, ranges of pixels of the local-decoded image (to be referred to as a filter window size hereinafter) used in filter processing are set in common with a decoding apparatus such that the regions change depending on regions, and the filter processing is performed by using a filter window size changing depending on the regions.

An example in which regions are classified into a flatness region and a nonflatness region will be explained. A large filter window size is set for the flatness region in advance, and a small filter window size is set for the nonflatness region. For example, N = 3 is set in expression (9) when the region is the flatness region, and N = 1 is set in expression (9) when the region is the nonflatness region. In the flatness region filter processor 143 and the nonflatness region filter processor 144 of the filter processor 116, filter processing is performed based on a value set in advance.

With respect to a nonflatness region including an edge or the like of an image, a small filter window size is set to suppress a smoothing effect of a filter and improve the reproducibility of the edge of the image after filter processing.

Also in the decoding apparatuses according to the second, fourth, sixth, and eighth embodiments and the video encoding apparatus according to the fifth embodiment, filter processing can be performed by predetermined filter window sizes which change depending on regions.

(Thirty-eighth Embodiment)

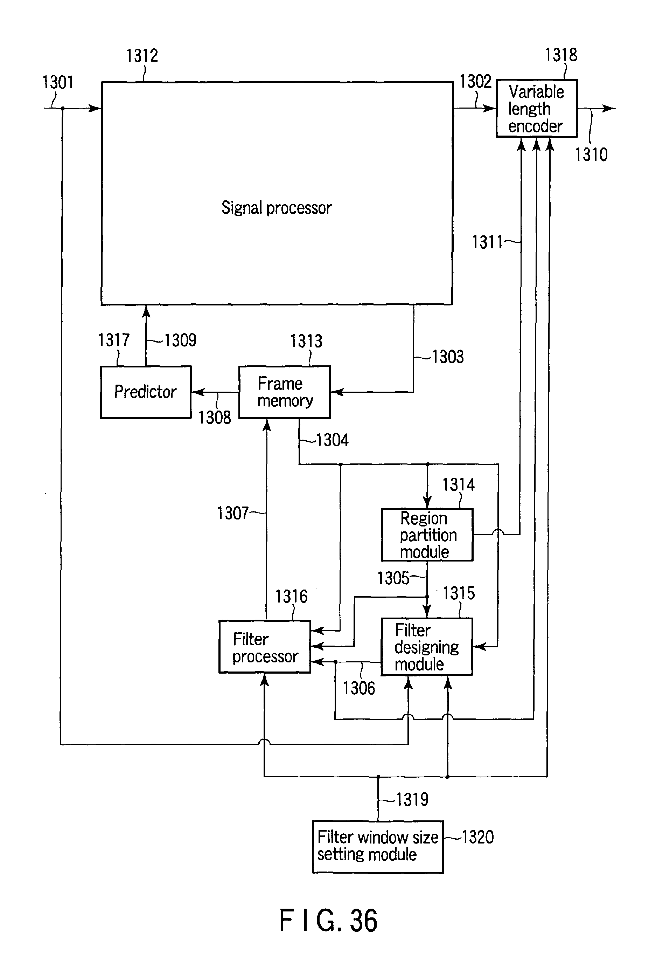

A thirty-eighth embodiment will be explained with reference to FIG. 36. A basic configuration of a video encoding apparatus according to the embodiment is the same as that of the first embodiment shown in FIG. 1. However, the thirty-eighth embodiment is different from the first embodiment in that a filter window size setting module 1320 is added, and filter window size information 1319 output from the filter window size setting module 1320 is input to a filter designing module 1315, a filter processor 1316, and a variable length encoder 1318.

In the filter window size setting module 1320, a filter window size is set for each of regions to be classified, and the set filter window size information 1319 is output. In setting of the filter window size, an operator who operates an encoding module may experientially set the filter window size in accordance with a to-be-encoded image, or a video image is temporarily encoded in several different filter window sizes in advance, and a filter window size at which an image obtained by performing filter processing is a high-quality image may be selected and set.

In the filter designing module 1315, by using an input image 1301, a local-decoded image 1304, region information 1305, and the filter window size information 1319, a Wiener-Hopf equation is established for each region to calculate a solution, so that a filter which minimizes a square error between an input image signal 1301 and an image signal obtained by performing filter processing on the local-decoded image signal 1304 can be designed for each region. Filter information 1306 related to the designed filter coefficient is output.

In the filter processor 1316, filter processing is performed by using the region information 1305, the local-decoded image 1304, the filter information 1306, and the filter window size information 1319 to generate an image signal 1307. The filter processing is performed by using a filter window size designated for each region by the filter window size information 1319. The image signal 1307 is stored in a frame memory 1313. An image signal 1308 read from the frame memory 1313 is used to generate a prediction signal 1309 in a predictor 1317.

In the variable length encoder 1318, variable length encoding is performed on the residual information 1302, the region partition parameter 1311, the filter information 1306, and the filter window size information 1319 to generate encoded data including these codes.

(Thirty-ninth Embodiment)

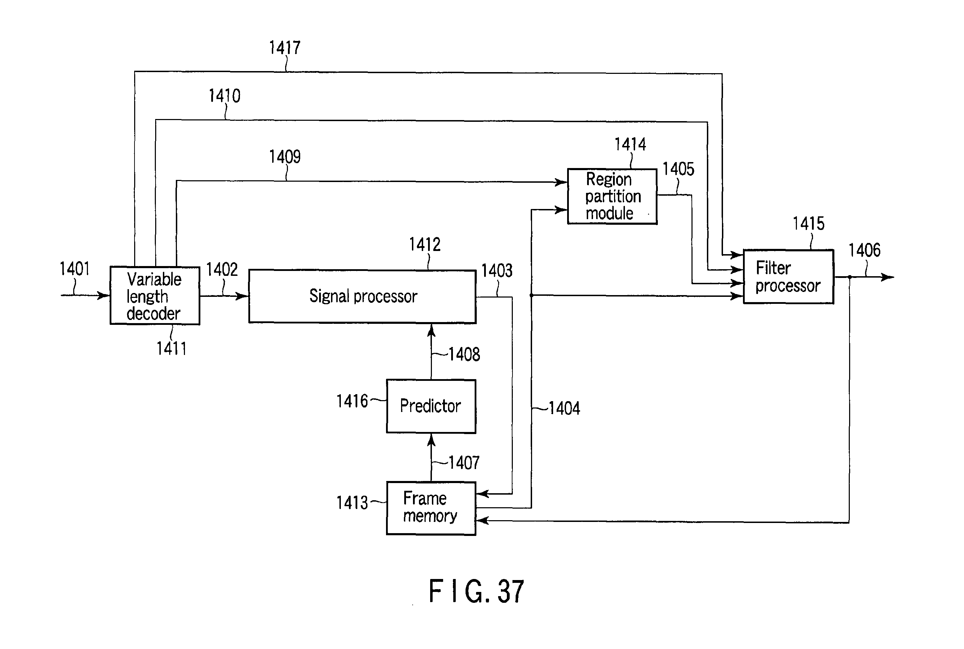

A thirty-ninth embodiment will be explained with reference to FIG. 37. A basic configuration of a video decoding apparatus according to the embodiment is the same as that in the second embodiment shown in FIG. 14. The thirty-ninth embodiment is different from the second embodiment in that filter window size information 1417 output from a variable length decoder 1411 is input to a filter processor 1415. In the embodiment, encoded data output from the video encoding apparatus according to the thirty-eighth embodiment is input through an accumulation system or a transmission system.

In the variable length decoder 1411, encoded data 1401 is decoded to output residual information 1402, a region partition parameter 1409, filter information 1410, and the filter window size information 1417.

In the filter processor 1415, filter processing is performed by using region information 1405, a decoded image signal 1404, the filter information 1410, and filter window size information 1417 to generate an image signal 1406. The filter processing is performed by using a filter window size designated for each region by the filter window size information 1417.

A signal processor 1412, a frame memory 1413, a region partition module 1414, and a predictor 1416 correspond to the signal processor 212, the frame memory 213, the region partition module 214, and the predictor 216 in FIG. 14, respectively. Signals 1403, 1407, and 1408 correspond to the signals 203, 207, and 208 in FIG. 14, respectively.

(Fortieth Embodiment)

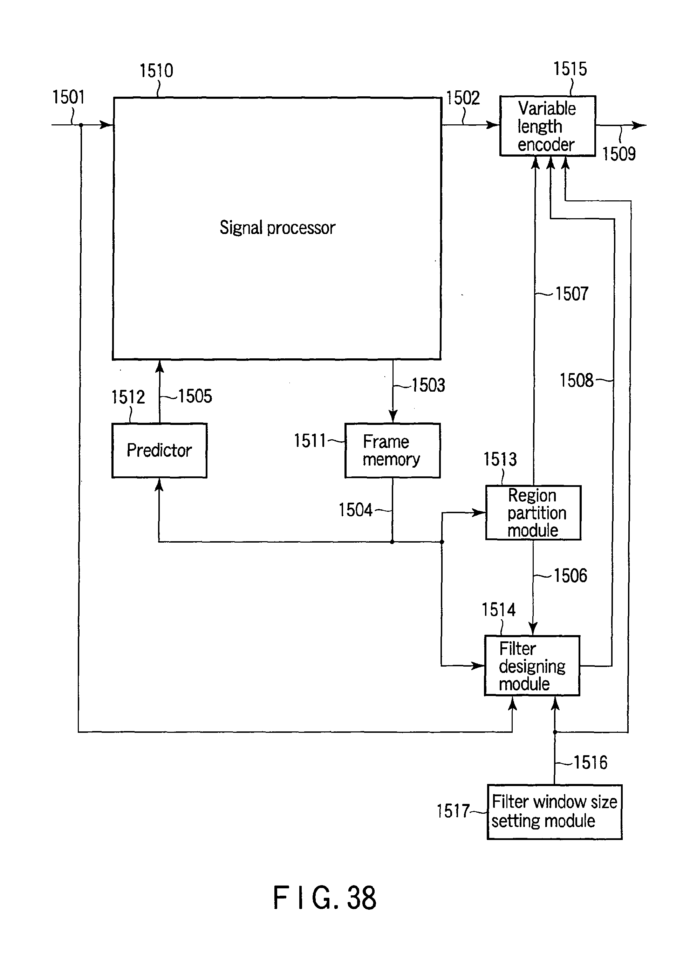

A fortieth embodiment will be explained with reference to FIG. 38. A basic configuration of a video encoding apparatus according to the embodiment is the same as that in the third embodiment shown in FIG. 17. However, the fortieth embodiment is different from the third embodiment in that a filter window size setting module 1517 is added, and filter window size information 1516 output from the filter window size setting module 1517 is input to a filter designing module 1514 and a variable length encoder 1515.

In the filter window size setting module 1517, as in the filter window size setting module 1320 according to the thirty-eighth embodiment, a filter window size is set, and the set filter window size information 1516 is output.

In the filter designing module 1514, as in the filter designing module 1315 according to the thirty-eighth embodiment, a filter is designed for each region, and filter information 1508 is output.

In the variable length encoder 1515, as in the variable length encoder 1318 according to the thirty-eighth embodiment, encoded data 1509 is output.

A signal processor 1510, a frame memory 1511, a predictor 1512, and a region partition module 1513 correspond to the signal processor 310, the frame memory 311, the predictor 312, and the region partition module 313 shown in FIG. 17, respectively. Singles 1501, 1502, 1503, 1504, 1505, 1506, and 1507 correspond to the signals 301, 302, 303, 304, 305, 306, and 307 shown in FIG. 17, respectively.

(Forty-first Embodiment)

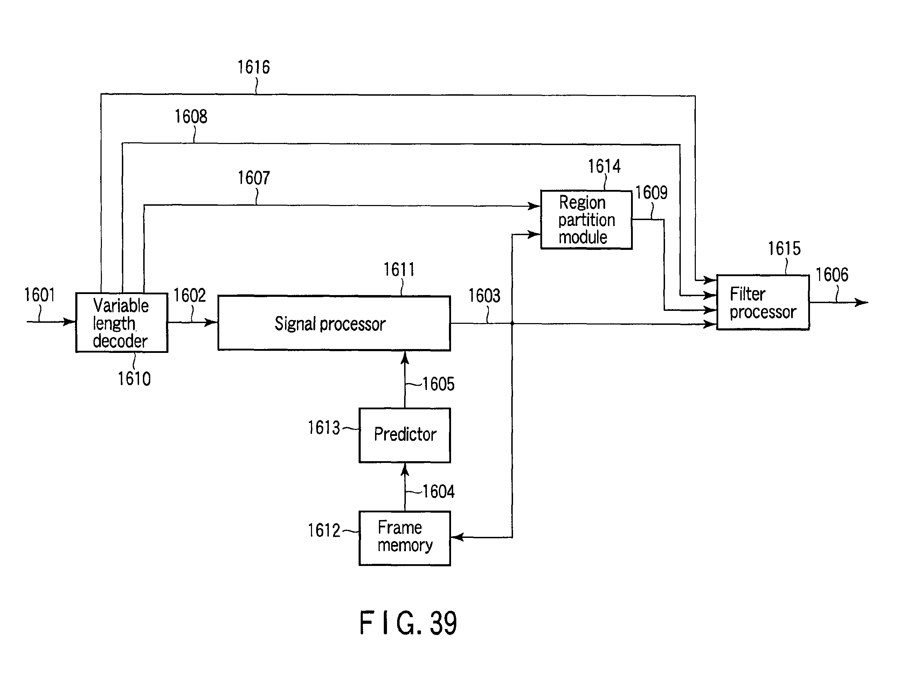

A forty-first embodiment will be explained by using FIG. 39. A basic configuration of a video decoding apparatus according to the embodiment is the same as the fourth embodiment shown in FIG. 18. The forty-first embodiment is different from the fourth embodiment in that filter window size information 1616 output from a variable length decoder 1610 is input to a filter processor 1615. In the embodiment, encoded data output from the video encoding apparatus according to the fortieth embodiment is input through an accumulation system or a transmission system.

In the variable length decoder 1610, encoded data 1601 is decoded, and residual information 1602, a region partition parameter 1607, filter information 1608, and filter window size information 1616 are output.

In the filter processor 1615, filter processing is performed by using region information 1609, a decoded image signal 1603, filter information 1608, and the filter window size information 1616 to generate an image signal 1606. The filter processing is performed by a filter window size designated for each region.

A single processor 1611, a frame memory 1612, a region partition module 1614, and a predictor 1613 correspond to the signal processor 411, the frame memory 412, the region partition module 414, and the predictor 413 shown in FIG. 18, respectively. Signals 1604 and 1605 correspond to the signals 404 and 405 in FIG. 18, respectively.

(Forty-second Embodiment)

A forty-second embodiment will be explained. A basic configuration of a video encoding apparatus according to the embodiment is the same as that in the fifth embodiment. Since the drawing of the basic configuration is the same as FIG. 36 of the thirty-eighth embodiment, the basic configuration will be explained with reference to FIG. 36. The forty-second embodiment is different from the fifth embodiment in that the filter window size setting module 1320 is added, and the filter window size information 1319 output from the filter window size setting module 1320 is input to the filter designing module 1315, the filter processor 1316, and the variable length encoder 1318. In the filter window size setting module 1320, a filter window size is set for each of regions classified as in the thirty-eighth embodiment, and the set filter window size information 1319 is output.

In the filter designing module 1315, by using the input image 1301, the local-decoded image 1304, the region information 1305, and the filter window size information 1319, a Wiener-Hopf equation is configured for each region to which a filter is applied to calculate a solution, so that a filter which minimizes a square error between an image obtained by performing filter processing on the local-decoded image 1304 and the input image 1301 can be designed. Filter information 1306 related to the filter coefficient designed for a region to which a filter is applied is output.

In the filter processor 1316, filter processing is performed by using the region information 1305, the local-decoded image 1304, the filter information 1306, and the filter window size information 1319 to generate the image signal 1307. The filter processing is performed on a region designated by the filter information 1306 to use a filter by using a filter window size designated by the filter window size information 1319.

In the variable length encoder 1318, variable length encoding is performed to the residual information 1302, the region partition parameter 1311, the filter information 1306, and the filter window size information 1319 to generate encoded data including these codes. However, with respect to the filter window size information 1319, only information of a filter window size for a region designated by the filter information 1306 to use a filter is encoded.

(Forty-third Embodiment)

A forty-third embodiment will be explained. A basic configuration of a video decoding apparatus according to the embodiment is the same as that in the sixth embodiment. Since a drawing of the basic configuration is the same as FIG. 37 in the thirty-ninth embodiment, the basic configuration will be explained with reference to FIG. 37. The forty-third embodiment is different from the sixth embodiment in that filter window size information 1417 output from the variable length decoder 1411 is input to the filter processor 1415. In the embodiment, encoded data output from the video encoding apparatus according to the forty-second embodiment is input to the video decoding apparatus through an accumulation system or a transmission system. In the variable length decoder 1411, the encoded data 1401 is decoded to output the residual information 1402, the region partition parameter 1409, the filter information 1410, and the filter window size information 1417.

In the filter processor 1415, filter processing is performed by using the region information 1405, the decoded image signal 1404, the filter information 1410, and filter window size information 1417 to generate an image signal 1406. The filter processing is performed on a region designated by the filter information 1410 to apply filter processing by using a filter window size designated by the filter window size information 1417.

(Forty-fourth Embodiment)

A forty-fourth embodiment will be explained. A basic configuration of a video encoding apparatus according to the embodiment is the same as that in the seventh embodiment. Since the drawing of the basic configuration is the same as FIG. 38 of the fortieth embodiment, the basic configuration will be explained with reference to FIG. 38. The forty-fourth embodiment is different from the seventh embodiment in that the filter window size setting module 1517 is added, and the filter window size information 1516 output from the filter window size setting module 1517 is input to the filter designing module 1514 and the variable length encoder 1515. In the filter window size setting module 1517, a filter window size is set as in the filter window size setting module 1320 according to the thirty-eighth embodiment, and the set filter window size information 1516 is output.

In the filter designing module 1514, as in the filter designing module according to the forty-second embodiment, a filter is designed for a region to which a filter is applied to output the filter information 1508. In the variable length encoder 1515, the encoded data 1509 is output as in the variable length encoder 1318 according to the forty-second embodiment.

(Forty-fifth Embodiment)

A forty-fifth embodiment will be explained. A basic configuration of a video decoding apparatus according to the embodiment is the same as that in the eighth embodiment. Since a drawing of the basic configuration is the same as FIG. 39 in the forty-first embodiment, the basic configuration will be explained with reference to FIG. 39. The forty-fifth embodiment is different from the eighth embodiment in that filter window size information 1616 output from the variable length decoder 1610 is input to the filter processor 1615. In the embodiment, encoded data output from the video encoding apparatus according to the forty-fourth embodiment is input to the video decoding apparatus through an accumulation system or a transmission system. In the variable length decoder 1610, the encoded data 1601 is decoded to output the residual information 1602, the region partition parameter 1607, the filter information 1608, and the filter window size information 1616. In the filter processor 1615, filter processing is performed as in the filter processor 1415 according to the forty-third embodiment.

(Forty-sixth Embodiment)

A forty-sixth embodiment will be explained. A basic configuration of a video encoding apparatus according to the embodiment is the same as that in the thirteenth embodiment shown in FIG. 25. In the embodiment, in particular, it is assumed that the prediction mode information 519 output from a predictor is information representing unidirectional prediction/bidirectional prediction.

For example, it is assumed that, as the prediction mode information 519, modes of two types, i.e., an inter unidirectional prediction mode and an inter bidirectional prediction mode are used in units of a block. At this time, in the region partition module 514, regions are classified into a block serving as the inter unidirectional prediction mode and a block serving as an inter bidirectional prediction mode.

When the classification is performed as described above, to a region in which an image is blurred by a smoothing effect of the intra bidirectional prediction, a filter having a low smoothing effect can be applied. Therefore, a screen can be prevented from being excessively blurred by the smoothing effect of the intra bidirectional prediction and the smoothing effect of the filter.

Also in the decoding apparatuses according to the fourteenth, sixteenth, eighteenth, twentieth, twenty-second, and twenty-fourth embodiments and the encoding apparatuses according to the fifteenth, seventeenth, nineteenth, twenty-first, and twenty-third embodiments, regions are classified by information representing unidirectional prediction and bidirectional prediction to make it possible to perform encoding and decoding.

(Forty-seventh Embodiment)

A forty-seventh embodiment will be explained. A basic configuration of a video encoding apparatus according to the embodiment is the same as that in the thirteenth embodiment shown in FIG. 25. In the embodiment, in particular, it is assumed that the prediction mode information 519 output from the predictor is information of a block size used in motion compensation prediction. For example, it is assumed that a block size used in the motion compensation prediction is $4 \times 4$ or $8 \times 8$. At this time, from the predictor, information of a block size used in the motion compensation prediction is output as prediction mode information. In the region partition module, by using the information, the regions are classified into a region in which motion compensation prediction is performed in $4 \times 4$ blocks and a region in which motion compensation prediction is performed in $8 \times 8$ blocks.

Also in the decoding apparatuses according to the fourteenth, sixteenth, eighteenth, twentieth, twenty-second, and twenty-fourth embodiments and encoding apparatuses and the fifteenth, seventeenth, nineteenth, twenty-first, and twenty-third embodiments, regions are classified by information of block sizes used in the motion compensation prediction to make it possible to perform encoding and decoding.

(Forty-eighth Embodiment)

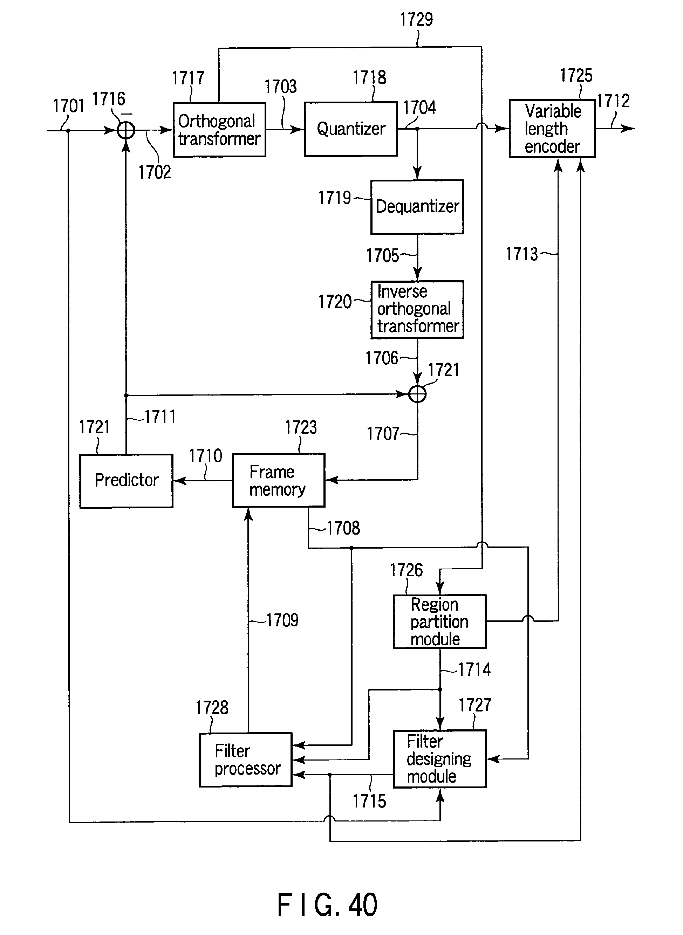

A forty-eighth embodiment will be explained with reference to FIG. 40. A basic configuration of a video encoding apparatus according to the embodiment is the same as that in FIG. 2 of the first embodiment. However, the forty-eighth embodiment is different from the first embodiment in that, in place of a local-decoded image 1708 from a frame memory 1723, orthogonal transform block size information 1729 from an orthogonal transformer 1717 is input to a region partition module 1726. In the region partition module 1726, region information 1714 representing a correspondence between a region and a classification is generated and output by the orthogonal transform block size information 1729. Furthermore, as a region partition parameter 1713 required for classification, the orthogonal transform block size information 1729 is output. For example, it is assumed that, as block sizes of orthogonal transform, block sizes of two types, i.e., a 4x4 block size and an 8x8 block size are present. At this time, in the region partition module 1726, regions are classified into two depending on whether orthogonal transform is performed in a $4\times4$ block unit or an 8x8 block unit. In this manner, filter processing can be performed according to encoding distortions the properties of which change depending on transform sizes.

(Forty-ninth Embodiment)

A forty-ninth embodiment will be explained with reference to FIG. 32. A basic configuration of a video decoding apparatus according to the embodiment is the same as FIG. 15 of the second embodiment. However, the forty-ninth embodiment is different from the second embodiment in that a decoded image is not input from the frame memory 1019 to the region partition module 1017. In the embodiment, encoded data output from the video encoding apparatus according to the forty-eighth embodiment is input to a variable length decoder 1013. In the variable length decoder 1013, encoded data 1001 is decoded, and a region partition parameter 1011 and filter information 1012 are output. The region partition parameter 1011 is orthogonal transform block size information.

(Fiftieth Embodiment)

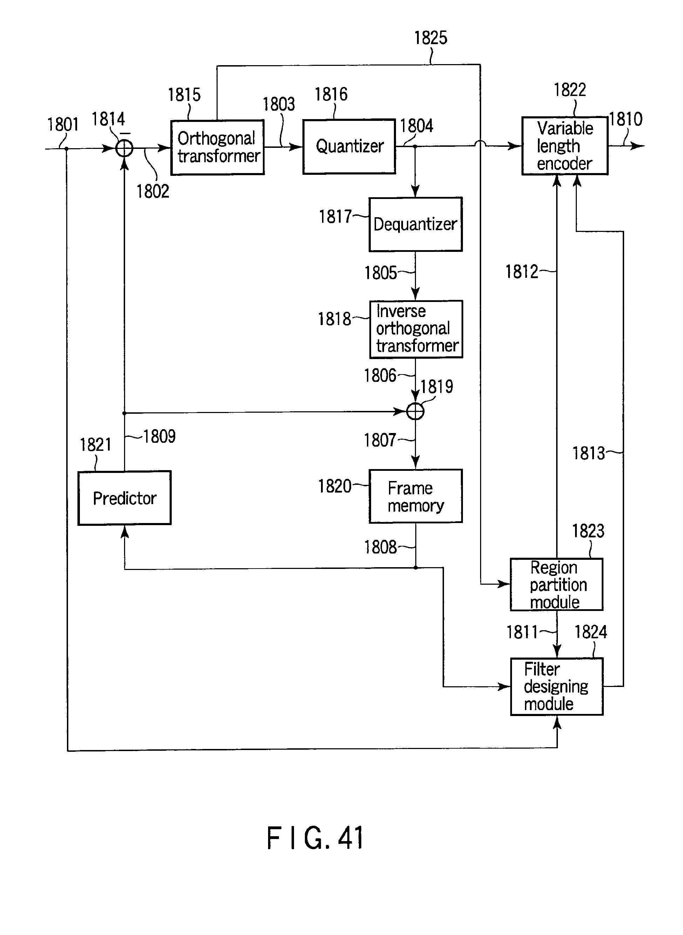

A fiftieth embodiment will be explained with reference to FIG. 41. A basic configuration of a video encoding apparatus according to the embodiment is the same as that in the third embodiment having a signal processor having the same configuration as that in FIG. 2 of the first embodiment. However, the fiftieth embodiment is different from the third embodiment in that, in place of a local-decoded image from a frame memory 1820, orthogonal transform block size information 1825 from an orthogonal transformer 1815 is input to a region partition module 1823. In the region partition module 1823, region information 1811 representing a correspondence between a region and a classification is generated and output by the orthogonal transform block size information 1825. Furthermore, the orthogonal transform block size information 1825 is output as a region partition parameter 1812 required for classification.

A subtracter 1814, a quantizer 1816, a dequantizer 1817, an inverse orthogonal transformer 1818, an adder 1819, a predictor 1821, a variable length encoder 1822, and a filter designing module 1824 correspond to the subtracter 123, the quantizer 125, the dequantizer 126, the inverse orthogonal transformer 127, and the adder 128 shown in FIG. 2; and the predictor 312, the variable length encoder 315, and the filter designing module 314 shown in FIG. 17, respectively. Signals 1801, 1802, 1803, 1804, 1805, 1806, 1807, 1808, 1809, 1810, and 1813 correspond to the signals 101, 119, 120, 102, 121, and 122 shown in FIG. 2 and the signals 303, 304, 305, 309, and 308 shown in FIG. 17, respectively.

(Fifty-first Embodiment)

A video decoding apparatus according to the fifty-first embodiment will be explained with reference to FIG. 34. A basic configuration of the video decoding apparatus according to the embodiment is the same as that in the fourth embodiment including a signal processor having the same configuration as that in FIG. 15 of the second embodiment. The fifty-first embodiment is different from the fourth embodiment in that a decoded image from the frame memory 1216 is not input to the region partition module 1218. In the embodiment, encoded data output from the video encoding apparatus according to the fiftieth embodiment is input to a variable length decoder 1212. In the variable length decoder 1212, encoded data 1201 is decoded, and the region partition parameter 1209 and the filter information 1210 are output. The region partition parameter 1209 is information of an orthogonal transform block size.

(Fifty-second Embodiment)

A fifty-second embodiment will be explained. A basic configuration of a video encoding apparatus according to the embodiment is the same as that in the forty-eighth embodiment shown in FIG. 40. In a filter designing module 1727 according to the embodiment, it is designated whether a filter is applied to each of classifications of regions. Based on the region information 1714, an input image signal 1701, and a local-decoded image signal 1708, a filter is designed for a classification to which a filter is applied. Filter application/nonapplication information and a filter coefficient of a classification to be applied are output as filter information 1715.

A filter processor 1728, based on the region information 1714 and the filter information 1715, determines a region to which a filter is applied and a region to which a filter is not applied depending on a classification corresponding to the region and performs filter processing on the local-decoded image signal 1708 to generate an image signal 1709.

(Fifty-third Embodiment)

A fifty third embodiment will be explained. A basic configuration of a video decoding apparatus according to the embodiment is the same as that in the forty-ninth embodiment shown in FIG. 32. It is assumed that the filter processor 1018 according to the embodiment performs the same operation as that of the filter processor 1727 according to the fifty-second embodiment. More specifically, a filter processor 1080, based on the region information 1011 and the filter information 1012, determines a region to which a filter is applied and a region to which a filter is not applied depending on a classification corresponding to the region and performs filter processing on the decoded image signal 1006 to generate the image signal 1008.

(Fifty-fourth Embodiment)

A fifty-fourth embodiment will be explained. A basic configuration of a video encoding apparatus according to the embodiment is the same as that in the fiftieth embodiment shown in FIG. 41. It is assumed that a filter designing module 1824 according to the embodiment performs the same operation as that of the filter designing module 1727 according to the fifty-second embodiment. More specifically, in the filter designing module 1824, it is designated whether a filter is applied to each of classifications of regions. Based on the region information 1811, the input image signal 1801, and the local-decoded image signal 1808, a filter is designed for a classification to which a filter is applied. Filter application/ nonapplication information and a filter coefficient of a classification to be applied are output as filter information 1813.

(Fifty-fifth Embodiment)

A fifty-fifth embodiment will be explained. A basic configuration of a video decoding apparatus according to the embodiment is the same as that in the fifty-first embodiment shown in FIG. 34. It is assumed that the filter processor 1219 according to the embodiment performs the same operation as that of the filter processor 1728 according to the fifty-second embodiment. More specifically, the filter processor 1219, based on the region information 1211 and the filter information 1210, determines a region to which a filter is applied and a region to which a filter is not applied depending on a classification corresponding to the region and performs filter processing on the decoded image signal 1205 to generate the image signal 1208.

(Fifty-sixth Embodiment)

A fifty-sixth embodiment will be explained. A basic configuration of a video encoding apparatus according to the embodiment is the same as that in the forty-eighth embodiment shown in FIG. 40. In the filter designing module 1727 of this embodiment, it is designated whether a filter is applied to each of classifications of regions. For the classification to which the filter is applied, based on the region information 1714, the input image signal 1701, and the local-decoded image signal 1708, a filter to be applied is selected from filters prepared in advance. Filter application/nonapplication information and information designating a filter coefficient of a classification to be applied are output as the filter information 1715.

The filter processor 1728, based on the region information 1714 and the filter information 1715, determines a region to which a filter is applied and a region to which a filter is not applied depending on a classification corresponding to the region. With respect to the region to which the filter is applied, a filter to be applied is selected from filters prepared in advance, and filter processing is performed on the local-decoded image signal 1708 to generate the image signal 1709.

(Fifty-seventh Embodiment)

A fifty-seventh embodiment will be explained. A basic configuration of a video decoding apparatus according to the embodiment is the same as that in the forty-ninth embodiment shown in FIG. 32. It is assumed that the filter processor 1018 according to the embodiment performs the same operation as that of the filter processor 1728 according to the fifty-sixth embodiment. More specifically, the filter processor 1018, based on the region information 1007 and the filter information 1012, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 1006 to generate the image signal 1008.

(Fifty-eighth Embodiment)

A fifty-eighth embodiment will be explained. A basic configuration of a video encoding apparatus according to

22

the embodiment is the same as that in the fiftieth embodiment shown in FIG. 41. It is assumed that the filter designing module 1824 according to the embodiment performs the same operation as that of the filter designing module 1727 according to the fifty-sixth embodiment. More specifically, in the filter designing module 1824, it is designated whether a filter is applied to each of classifications of regions. For the classification to which the filter is applied, based on the region information 1811, the input image signal 1801, and the local-decoded image signal 1808, a filter to be applied is selected from filters prepared in advance. Filter application/nonapplication information and information designating a filter coefficient of a classification to be applied are output as the filter information 1813.

(Fifty-ninth Embodiment)

A fifty-ninth embodiment will be explained. A basic configuration of a video decoding apparatus according to the embodiment is the same as that in the fifty-first embodiment shown in FIG. 34. The filter processor 1219 according to the embodiment performs the same operation as that of the filter processor 1728 according to the fifty-sixth embodiment. More specifically, the filter processor 1219, based on the region information 1211 and the filter information 1210, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 1205 to generate the image signal 1208.

(Sixtieth Embodiment)

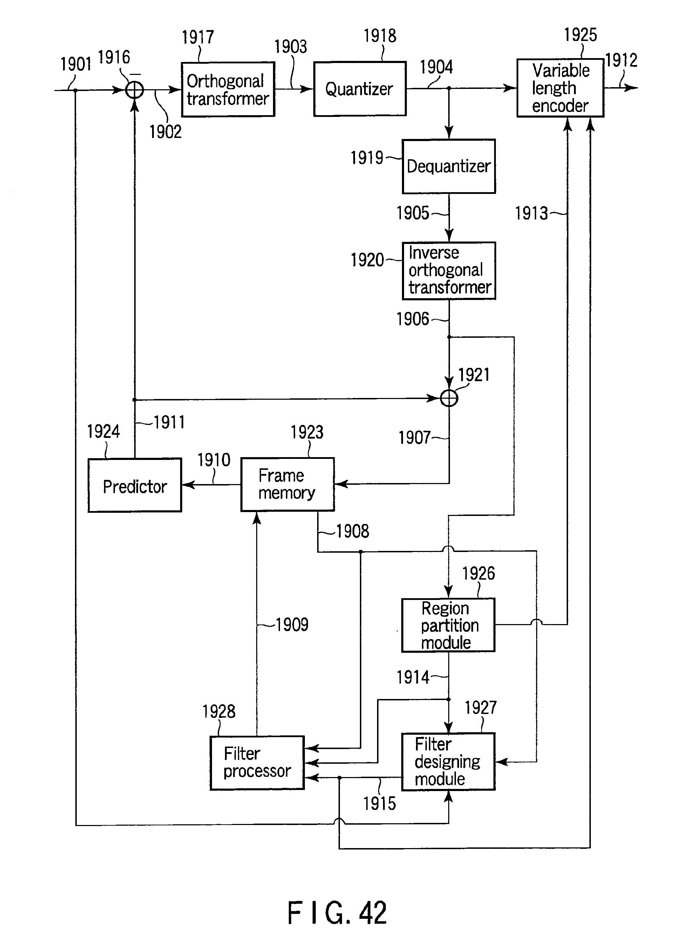

A sixtieth embodiment will be explained with reference to FIG. 42. A basic configuration of a video encoding apparatus according to the embodiment is the same as that in FIG. 2 of the first embodiment. The sixtieth embodiment is different from the first embodiment in that, in place of a local-decoded image signal 1908 from a frame memory 1923, a residual signal 1906 from an inverse orthogonal transformer is input to a region partition module 1926.

A classifying process serving as a base in the region partition module 1926 is the same as that of the region partition module 114 according to the first embodiment. However, the sixtieth embodiment is different from the first embodiment in that classification criterions are calculated in units of a block but in units of a pixel. When a classification criterion to a block located at a position i in a raster scanning order is given by C(i), regions are classified depending on whether the classification criterion C(i) is smaller than a predetermined threshold value T. As the threshold value T, a value may be given by an external encoding controller which controls the video encoding apparatus in FIG. 42.

As the classification criterion, an absolute sum of residual signals of the block located at the position i in the raster scanning order, i.e., an absolute sum calculated by the following expression (11) can be used.

$$C_{SAD}(i) = \sum_{(x,y) \in B(i)} |R(x,y)| \qquad (11)$$

In this expression, R (x,y) is a residual signal of a position (x,y), and B(i) is a set of coordinates (x,y) included in a block located at the position i in the raster scanning order.

A square sum of residual signals of the block located at the position i in the raster scanning order, i.e., a square sum calculated by the following expression (12) can be used as a classification criterion.

$$C_{SSD}(i) = \sum_{(x,y) \in B(i)} (R(x,y))^2 \qquad (12)$$

A dispersion of the residual signals of the block located at the position i in the raster scanning order, i.e., a dispersion calculated by the following expression (13) can be used as a classification criterion.

$$C_{\mathrm{var}}(i) = \sum_{(x,y)\in B(i)} \left( R(x,y) - \frac{1}{|B(i)|} \sum_{(x,y)\in B(i)} R(x,y) \right)^2 \qquad (13)$$

From the region partition module 1926, a region partition parameter 1913 and region information 1914 are output. In this case, the threshold value T is output as the region partition parameter.

A subtracter 1916, an orthogonal transformer 1917, a quantizer 1918, a dequantizer 1919, an inverse orthogonal transformer 1920, an adder 1921, a predictor 1924, a variable length encoder 1925, a filter designing module 1927, and a filter processor 1928 correspond to the subtracter 123, the orthogonal transformer 124, the quantizer 125, the dequantizer 126, the inverse orthogonal transformer 127, the adder 128, the predictor 117, the variable length encoder 118, the filter designing module 115, and the filter processor 116 shown in FIG. 2, respectively. Signals 1901, 1902, 1903, 1904, 1905, 1907, 1909, 1910, 1911, 1912, and 1915 correspond to the signals 101, 119, 120, 102, 121, 103, 107, 108, 109, 110, and 106 in FIG. 2, respectively.

(Fifty-first Embodiment)

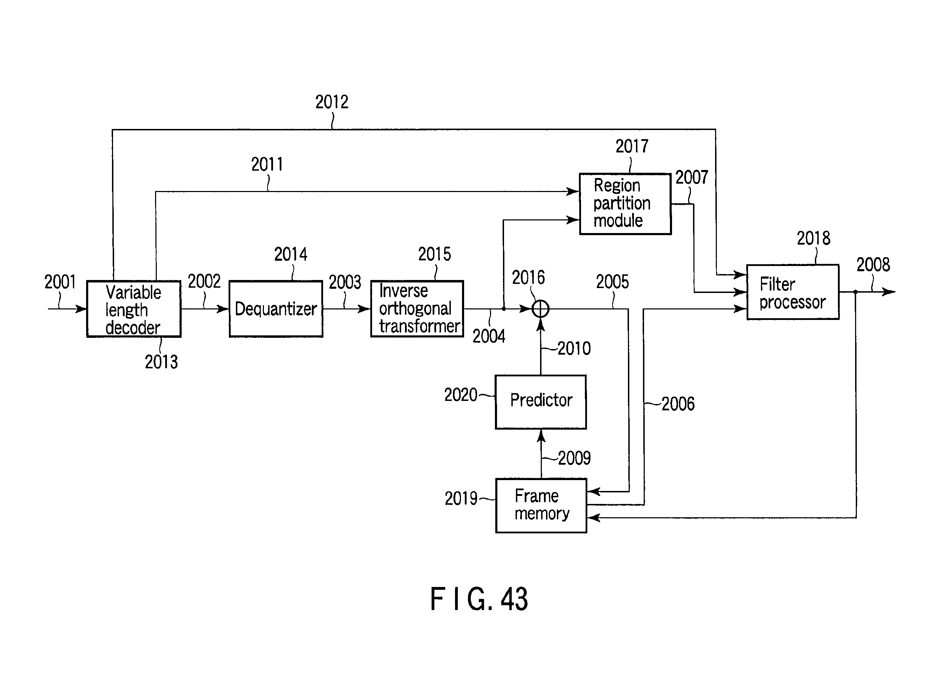

A sixty-first embodiment will be explained with reference to FIG. 43. A basic configuration of a video decoding apparatus according to the embodiment is the same as that in FIG. 15 of the second embodiment. The sixty-first embodiment is different from the second embodiment in that, in place of a decoded image signal from a frame memory 2019, a residual signal 2004 from an inverse orthogonal transformer 2015 is input to a region partition module 2017.

In the embodiment, encoded data output from the encoding apparatus according to the sixtieth embodiment is input to a variable length decoder 2013. In the variable length decoder 2013, encoded data 2001 is decoded to output a region partition parameter 2011 and filter information 2012. The region partition parameter 2011 is a threshold value used to classify regions in the region partition module 2017. In the region partition module 2017, regions are classified by the residual signal 2004 and the region partition parameter 2011 as in the region partition module 1926 according to the sixtieth embodiment to generate region information 2007.

A dequantizer 2014, an adder 2016, a filter processor 2018, and a predictor 2020 correspond to the dequantizer 219, the adder 221, the filter processor 215, and the predictor 216 in FIG. 15, respectively. Signals 2002, 2003, 2005, 2006, 2008, 2009, and 2010 correspond to the signals 202, 217, 203, 204, 206, 207, and 208 shown in FIG. 15, respectively.

(Sixty-second Embodiment)

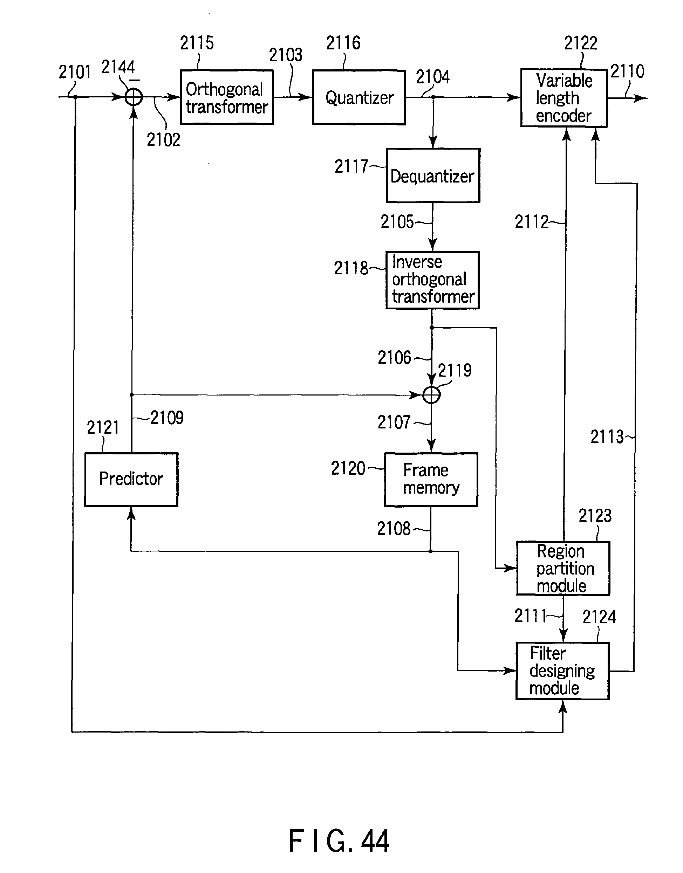

A sixty-second embodiment will be explained with reference to FIG. 44. A basic configuration of a video encoding apparatus according to the embodiment is the same as that in the third embodiment including a signal processor having the same configuration as that in FIG. 2 of the first embodiment. The sixty-second embodiment is different from the third embodiment in that, in place of a local-decoded image from a frame memory 2120, a residual signal 2106 from an inverse orthogonal transformer 2118 is input to a region partition module 2123. In the region partition module 2123, regions are classified by the residual signal 2106 as in the region partition module according to the sixtieth embodiment to output a region partition parameter 2112 and region information 2111. In this case, a threshold value used in classification of regions is output as the region partition parameter 2112.

A subtracter 2114, an orthogonal transformer 2115, a quantizer 2116, a dequantizer 2117, an inverse orthogonal transformer 2118, an adder 2119, a predictor 2121, a variable length encoder 2122, and a filter designing module 2124 correspond to the subtracter 123, the orthogonal transformer 124, the quantizer 125, the dequantizer 126, the inverse orthogonal transformer 127, and the adder 128 shown in FIG. 2; and the predictor 312, the variable length encoder 315, and the filter designing module 314 shown in FIG. 16, respectively. Signals 2101, 2102, 2103, 2104, 2105, 2107, 2108, 2109, 2110, and 2113 correspond to the signals 101, 119, 120, 102, and 121 in FIG. 2 and the signals 303, 304, 305, 309, and 308 in FIG. 16, respectively.

(Sixty-third Embodiment)

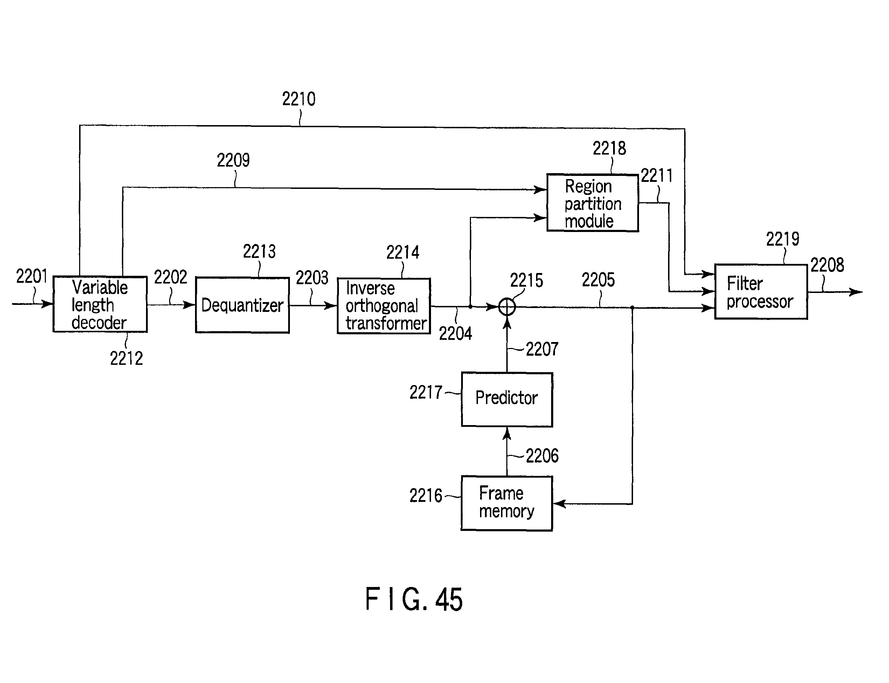

A sixty-third embodiment will be explained with reference to FIG. 45. A basic configuration of a video decoding apparatus according to the embodiment is the same as that in the fourth embodiment including a signal processor having the same configuration as that in FIG. 15 of the second embodiment. However, the sixty-third embodiment is different from the fourth embodiment in that, in place of a decoded image signal from a frame memory 2216, a residual signal 2204 from an inverse orthogonal transformer 2214 is input to a region partition module 2218.

In the embodiment, encoded data output from the encoding apparatus according to the sixty-second embodiment is input to a variable length decoder 2212. In the variable length decoder 2212, encoded data 2201 is decoded, and a region partition parameter 2209 and filter information 2210 are output. The region partition parameter 2209 is a threshold value used to classify regions in the region partition module 2218. In the region partition module 2218, based on the residual signal 2204 and the region partition parameter 2209, regions are classified as in the region partition module 1926 according to the sixtieth embodiment to generate region information 2211.

A dequantizer 2213, an adder 2215, a predictor 2217, and a filter processor 2219 correspond to the dequantizer 219 and the adder 221 shown in FIG. 15 and the predictor 413 and the filter processor 415 shown in FIG. 17, respectively. Signals 2202, 2203, 2205, 2206, 2207, 2208, and 2210 correspond to the signals 202 and 217 shown in FIG. 15 and the signals 403, 404, 405, 406, and 408 shown in FIG. 17, respectively.

(Sixty-fourth Embodiment)

A sixty-fourth embodiment will be explained. A basic configuration of a video encoding apparatus according to the embodiment is the same as that in the sixtieth embodiment shown in FIG. 42. In the filter designing module 1927 according to the embodiment, it is designated whether a filter is applied to each of classifications of regions. Based on the region information 1914, the input image signal 1901, and the local-decoded image signal 1908, a filter is designed for a classification to which a filter is applied. Filter application/nonapplication information and a filter coefficient of classification to be applied are output as the filter information 1915.

The filter processor 1928, based on the region information 1914 and the filter information 1915, determines a region to which a filter is applied and a region to which a filter is not applied depending on a classification of the region, and filter processing is performed on the local-decoded image signal 1908 to generate the image signal 1909.

(Sixty-fifth Embodiment)

A sixty-fifth embodiment will be explained. A basic configuration of a video decoding apparatus according to the embodiment is the same as that in the sixty-first embodiment shown in FIG. 43. It is assumed that the filter processor 2018 according to the embodiment performs the same operation as that of the filter processor 1928 according to the sixty-fourth embodiment. More specifically, the filter processor 2018, based on the region information 2007 and the filter information 2012, determines a region to which a filter is applied and a region to which a filter is not applied depending on a classification of the region and performs filter processing on a decoded image 2006 to generate the image signal 2008.

(Sixty-sixth Embodiment)

A sixty-sixth embodiment will be explained. A basic configuration of a video encoding apparatus according to the embodiment is the same as that in the sixty-second embodiment shown in FIG. 44. It is assumed that the filter designing module 2124 according to the embodiment performs the same operation as that of the filter designing module 1927 according to the sixty-fourth embodiment. More specifically, in the filter designing module 2124, it is designated whether a filter is applied to each of classifications of regions. Based on the region information 2111, the input image signal 2101, and the local-decoded image 2108, a filter is designed for a classification to which a filter is applied. Filter application/nonapplication information and a filter coefficient of a classification to be applied are output as the filter information 2113.

(Sixty-seventh Embodiment)

A sixty-seventh embodiment will be explained. A basic configuration of a video decoding apparatus according to the embodiment is the same as that in the sixty-third embodiment shown in FIG. 45. It is assumed that the filter processor 2219 according to the embodiment performs the same operation as that of the filter processor 1928 according to the sixty-fourth embodiment. More specifically, the filter processor 2219, based on the region information 2211 and the filter information 2210, determines a region to which a filter is applied and a region to which a filter is not applied depending on a classification corresponding to the region and performs filter processing on the decoded image 2205 to generate the image signal 2208.

(Sixty-eighth Embodiment)

A sixty-eighth embodiment will be explained. A basic configuration of a video encoding apparatus according to the embodiment is the same as that in the sixtieth embodiment shown in FIG. 42. In the filter designing module 1927 according to the embodiment, it is designated whether a filter is applied to each of classifications of regions. With respect to the classification to which the filter is applied, based on the region information 1914, the input image signal 1901, and the local-decoded image signal 1908, a filter to be applied is selected from filters prepared in advance. Filter application/ nonapplication information and a filter coefficient of a classification to be applied are output as the filter information 1915.

The filter processor 1928, based on the region information 1914 and the filter information 1915, determines a region to which a filter is applied and a region to which a filter is not applied depending on a classification corresponding to the region. With respect to the region to which the filter is applied, a filter to be applied is selected from filters prepared in advance, and filter processing is performed on the local-decoded image signal 1908 to generate the image signal 1909.

(Sixty-ninth Embodiment)

A sixty-ninth embodiment will be explained. A basic configuration of a video decoding apparatus according to the embodiment is the same as that in the sixty-first embodiment shown in FIG. 43. It is assumed that the filter processor 2018 according to the embodiment performs the same operation as that of the filter processor 1928 according to the sixty-eighth embodiment. More specifically, the filter processor 2018, based on the region information 2007 and the filter information 2012, determines a region to which a filter is applied and a region to which a filter is not applied depending on a classification corresponding to the region. With respect to the region to which the filter is applied, a filter to be applied is selected from filters prepared in advance, and filter processing is performed on the decoded image 2006 to generate the image signal 2208.

(Seventieth Embodiment)

A seventieth embodiment will be explained. A basic configuration of a video encoding apparatus according to the embodiment is the same as that in the sixty-second embodiment shown in FIG. 44. It is assumed that the filter designing module 2124 according to the embodiment performs the same operation as that of the filter designing module 1927 according to the sixty-eighth embodiment. More specifically, in the filter designing module 2124, it is designated whether a filter is applied to each of classifications of regions. With respect to the classification to which the filter is applied, based on the region information 2111, the input image signal 2101, and the local-decoded image signal 2108, a filter to be applied is selected from filters prepared in advance. Filter application/nonapplication information and a filter coefficient of a classification to be applied are output as the filter information 2113.

(Seventy-first Embodiment)

A seventy-first embodiment will be explained. A basic configuration of a video decoding apparatus according to the embodiment is the same as that in the sixty-third embodiment shown in FIG. 45. It is assumed that the filter processor 2219 according to the embodiment performs the same operation as that of the filter processor 1928 according to the sixty-eighth embodiment. More specifically, the filter processor 2219, based on the region information 2211 and the filter information 2210, determines a region to which a filter is applied and a region to which a filter is not applied depending on a classification corresponding to the region. With respect to the region to which the filter is applied, a filter to be applied is selected from filters prepared in advance, and filter processing is applied to the decoded image signal 2205 to generate the image signal 2208.

(Seventy-second Embodiment)

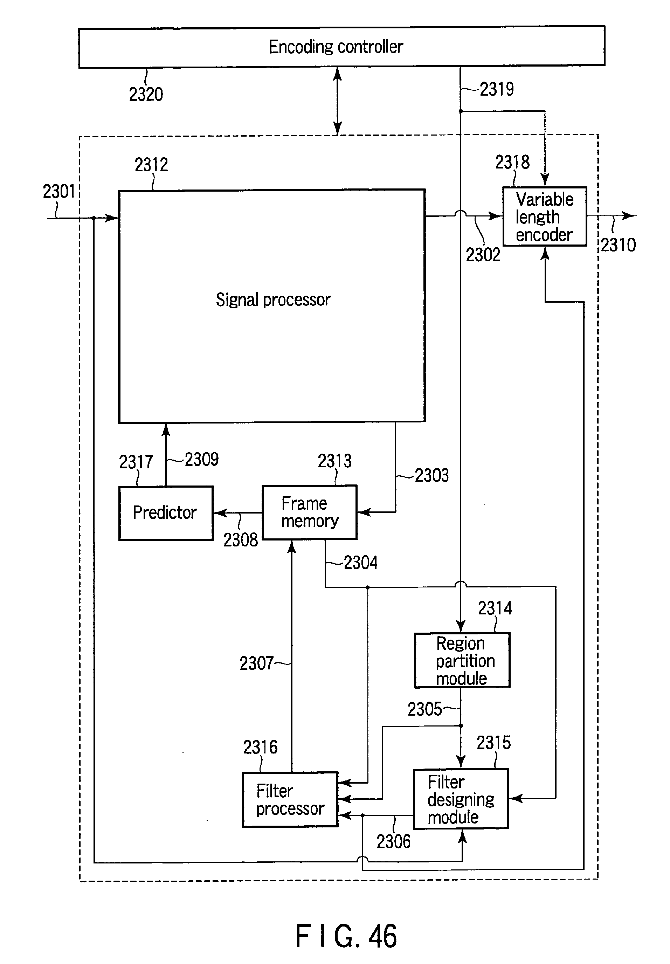

A seventy-second embodiment will be explained with reference to FIG. 46. A basic configuration of a video encoding apparatus according to the embodiment is the same as that in the thirteenth embodiment shown in FIG. 25. However, the seventy-second embodiment is different from the thirteenth embodiment in that, in place of prediction mode information from the predictor 2317, information 2319 related to the presence/absence of a residual error from an encoding controller 2320 is input to a region partition module 2314, that information related to the presence/absence of a residual error is input from the encoding controller 2320 to a variable length encoder 2318, and that a region partition parameter is not output from the region partition module 2314 to the variable length encoder 2318.

The region partition module 2314, by using information related to the presence/absence of a residual error input from the encoding controller 2320, classifies regions into a region in which a residual error is present and a region in which a residual error is absent. With respect to information related to the presence/absence of the residual error to be input, for example, a syntax element corresponding to mb_skip_flag serving as a syntax element representing that a macroblock is encoded in a skip mode in H.264/MPEG-4AVC and a syntax element corresponding to coded_block_ pattern serving as a syntax element representing a block in which a residual error of a macroblock is present can be used.

In the variable length encoder 2318, residual information 2302, filter information 2306, and the information 2319 related to the presence/absence of a residual error are encoded.

In a region in which a residual error is absent, when a prediction image is blurred by a smoothing effect of bidirectional prediction and a smoothing effect of an interpolation filter at a decimal pixel position, the prediction image is directly used as a local-decoded image. For this reason, the region is influenced by the blurred prediction image. When the regions are classified according to the presence/absence of a residual error, in a region where a residual error which easily blurs an image is absent, a filter having a low smoothing effect can be used to make it possible to prevent an image from being excessively blurred.

A signal processor 2312, a frame memory 2313, a filter designing module 2315, and a filter processor 2316 correspond to the signal processor 512, the frame memory 513, the filter designing module 515, and the filter processor 516 shown in FIG. 24, respectively. Signals 2301, 2303, 2304, 2305, 2307, 2308, 2309, and 2310 correspond to the signals 501, 503, 504, 505, 507, 508, 509, and 510 shown in FIG. 24, respectively.

(Seventy-third Embodiment)

A seventy-third embodiment will be explained. A basic configuration of a video decoding apparatus according to the embodiment is the same as that in FIG. 27 of the fourteenth embodiment. However, the seventy-third embodiment is different from the fourteenth embodiment in that, in place of a region partition parameter, information 609 related to the presence/absence of a residual error is input to the region partition module 614.

In the embodiment, encoded data output from the encoding apparatus according to the seventy-second embodiment is input to the variable length decoder 611. In the variable length decoder 611, encoded data 601 is decoded, and the information 609 related to the presence/absence of a residual error and the filter information 610 are output. In the region partition module 614, based on the information 609 related to the presence/absence of a residual error, regions are classified as in the region partition module 2316 according to the seventy-second embodiment to generate the region information 605.

(Seventy-fourth Embodiment)

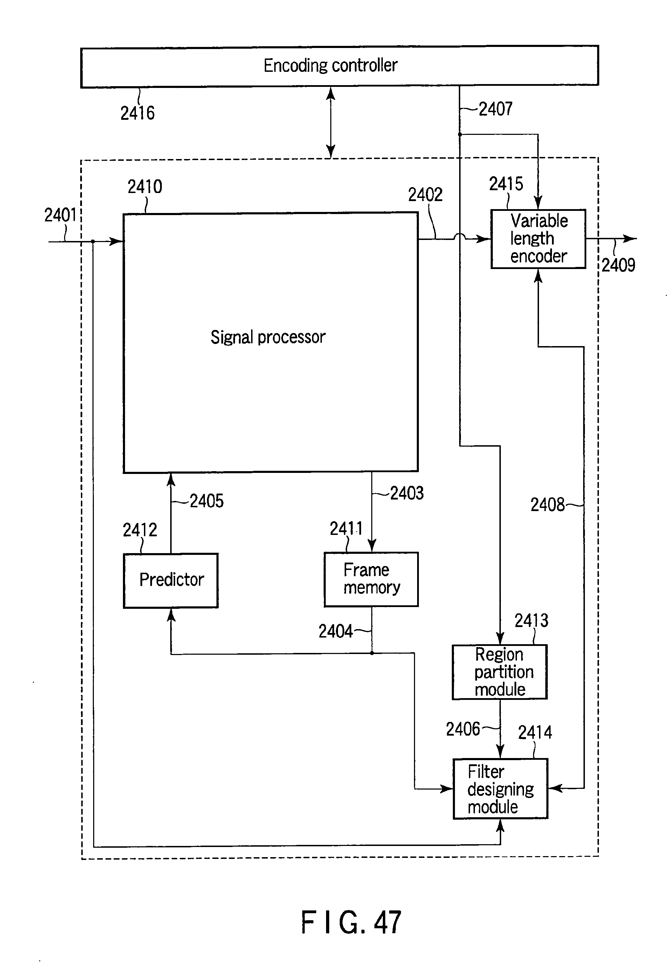

A seventy-fourth embodiment will be explained with reference to FIG. 47. A basic configuration of a video encoding apparatus according to the embodiment is the same as that in FIG. 28 of the fifteenth embodiment. However, the seventy-fourth embodiment is different from the fifteenth embodiment in that, in place of prediction mode information from a predictor 2412, information 2407 related to the presence/absence of a residual error from an encoding controller 2416 is input to a region partition module 2413, that the information 2407 related to the presence/absence of a residual error is input from the encoding controller 2416 to a variable length encoder 2415, and that a region partition parameter is not output from the region partition module 2413 to the variable length encoder 2415. In the region partition module 2413, based on the information 2407 related to the presence/absence of a residual error, regions are classified as in the region partition module 2314 according to the seventy-second embodiment to output region information 2406. In the variable length encoder 2415, residual information 2402, filter information 2408, and the information 2407 related to the presence/absence of a residual error are encoded.

A signal processor 2410, a frame memory 2411, and a filter designing module 2414 correspond to the signal processor 710, the frame memory 711, and the filter designing module 714 shown in FIG. 27, respectively. Signals 2401, 2403, 2404, 2405, and 2409 correspond to the signals 710, 703, 704, 705, and 709 shown in FIG. 27, respectively.

(Seventy-fifth Embodiment)

A seventy-fifth embodiment will be explained. A basic configuration of a video decoding apparatus according to the embodiment is the same as that in FIG. 29 of the sixteenth embodiment. The seventy-fifth embodiment is different from the sixteenth embodiment in that, in place of a region partition parameter, information 807 related to the presence/absence of a residual error is input to the region partition module 814.

In the embodiment, encoded data output from the encoding apparatus according to the seventy-fourth embodiment is input to the variable length decoder 810. In the variable length decoder 810, encoded data 801 is decoded, and the information 807 related to the presence/absence of a residual error and the filter information 808 are output. In the region partition module 814, based on the information 807 related to the presence/absence of a residual error, regions are classified as in the region partition module 2314 according to the seventy-second embodiment to generate the region information 809.

(Seventy-sixth Embodiment)

A seventy-sixth embodiment will be explained. A basic configuration of a video encoding apparatus according to the embodiment is the same as that in the seventy-second embodiment shown in FIG. 46. In the filter designing module 2315 of this embodiment, it is designated whether a filter is applied to each of classifications of regions. Based on region information 2305, the input image signal 2301, and the local-decoded image signal 2304, a filter is designed for a classification to which a filter is applied. Filter application/nonapplication information and a filter coefficient of a classification to be applied are output as the filter information 2306.

The filter processor 2316, based on the region information 2305 and the filter information 2306, determines a region to which a filter is applied and a region to which a filter is not applied depending on a classification corresponding to the region and performs filter processing on the local-decoded image signal 2304 to generate an image signal 2307.

(Seventy-seventh Embodiment)

A seventy-seventh embodiment will be explained. A basic configuration of a video decoding apparatus according to the embodiment is the same as that in the seventy-third embodiment. It is assumed that the filter processor 615 according to the embodiment performs the same operation as that of the filter processor 2316 according to the seventy-sixth embodiment. More specifically, the filter processor 615, based on the region information 605 and the filter information 610, determines a region to which a filter is applied and a region to which a filter is not applied depending on a classification of the region and performs filter processing on the decoded image signal 604 to generate the image signal 606.

(Seventy-eighth Embodiment)

A seventy-eighth embodiment will be explained. A basic configuration of a video encoding apparatus according to the embodiment is the same as that in the seventy-fourth embodiment shown in FIG. 47. It is assumed that the filter designing module 2414 according to the embodiment performs the same operation as that of the filter designing module 2315 according to the seventy-sixth embodiment. More specifically, in the filter designing module 2414, it is designated whether a filter is applied to each of classifications of regions. Based on the region information 2406, the input image signal 2401, and the local-decoded image 2404, a filter is designed for the classification to which the filter is applied. Filter application/nonapplication information and a filter coefficient of a classification to be applied are output as the filter information 2408.

(Seventy-ninth Embodiment)

A seventy-ninth embodiment will be explained. A basic configuration of a video decoding apparatus according to the embodiment is the same as that in the seventy-fifth embodiment. It is assumed that the filter processor 815 according to the embodiment performs the same operation as that of the filter processor 2316 according to the seventy-sixth embodiment. More specifically, the filter processor 815, based on the region information 809 and the filter information 808, determines a region to which a filter is applied and a region to which a filter is not applied depending on a classification corresponding to the region and performs filter processing on the decoded image 803 to generate the image signal 806.

(Eightieth Embodiment)

An eightieth embodiment will be explained. A basic configuration of a video encoding apparatus according to the embodiment is the same as that in the seventy-second embodiment shown in FIG. 46. In the filter designing module 2315 according to the embodiment, it is designated whether a filter is applied to each of classifications of regions. With respect to the classification to which the filter is applied, based on the region information 2305, the input image signal 2301, and the local-decoded image 2304, a filter to be applied is selected from filters prepared in advance. Filter application/nonapplication information and information designating a filter coefficient of a classification to be applied are output as the filter information 2306.

The filter processor 2316, based on the region information 2305 and filter information 2396, determines a region to which a filter is applied and a region to which a filter is not applied depending on a classification corresponding to the region. With respect to the region to which the filter is applied, a filter to be applied is selected from filters prepared in advance, and filter processing is performed on the local-decoded image signal 2304 to generate the image signal 2307.

(Eighty-first Embodiment)

An eighty-first embodiment will be explained. A basic configuration of a video decoding apparatus according to the embodiment is the same as that of the seventy-third embodiment. It is assumed that the filter processor 614 according to the embodiment performs the same operation as that of the filter processor 2316 according to the eightieth embodiment. More specifically, the filter processor 614, based on the region information 605 and the filter information 610, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 604 to generate the image signal 606.

(Eighty-second Embodiment)

An eighty-second embodiment will be explained. A basic configuration of a video encoding apparatus according to the embodiment is the same as that in the seventy-fourth embodiment shown in FIG. 47. It is assumed that the filter designing module 2414 according to the embodiment performs the same operation as that of the filter designing module 2315 according to the eightieth embodiment. More specifically, in the filter designing module 2414, it is designated whether a filter is applied to each of classifications of regions. With respect to the classification to which the filter is applied, based on the region information 2406, the input image signal 2401, and the local-decoded image signal 2404, a filter to be applied is selected from filters prepared in advance. Filter application/nonapplication information and information designating a filter coefficient of a classification to be applied are output as the filter information 2408.

(Eighty-third Embodiment)

An eighty-third embodiment will be explained. A basic configuration of a video decoding apparatus according to the embodiment is the same as that in the seventy-fifth embodiment. It is assumed that the filter processor 815 according to the embodiment performs the same operation as that of the filter processor 2316 according to the eightieth embodiment. More specifically, the filter processor 815, based on the region information 809 and the filter information 808, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 803 to generate the image signal 806.

(Eighty-fourth Embodiment)

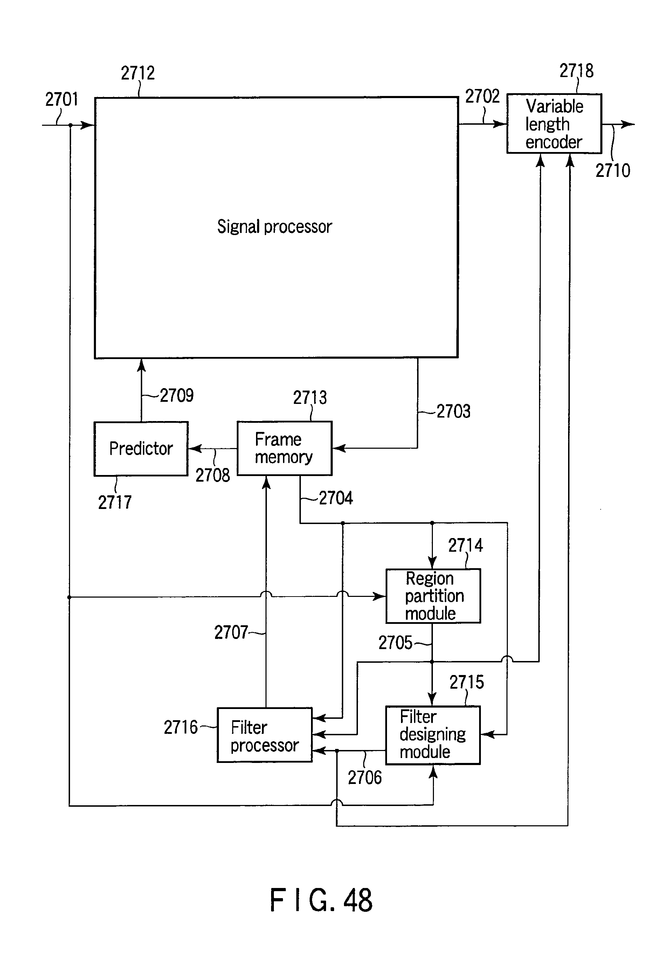

An eighty-fourth embodiment will be explained with reference to FIG. 48. A basic configuration of a video encoding apparatus according to the embodiment is the same as that in FIG. 2 of the first embodiment. The eighty-fourth embodiment is different from the first embodiment in that an input image signal 2701 is input to a region partition module 2714 and that region information 2705 is input as a region partition parameter to a variable length encoder 2718.
A classifying process serving as a base in the region partition module 2714 is the same as that in the region partition module 114 according to the first embodiment. However, the eighty-fourth embodiment is different from the first embodiment in that classification criterions are calculated not in units of a pixel but in units of a block and that the classification criterions are calculated by the region partition module 2714 based on the input image signal 2701 and a local-decoded image signal 2704. When a classification criterion to a block located at a position i in a raster scanning order is given by C'(i), regions are classified depending on whether the classification criterion C'(i) is smaller than a predetermined threshold value T. The threshold value T may be given by an external encoding controller which controls the video encoding apparatus in FIG. 48.
As the classification criterion, an absolute sum of encoding errors of the block located at the position i in the raster scanning order, i.e., an absolute sum calculated by the following expression (14) can be used.

$$C'_{SAD}(i) = \sum_{(x,y)\in B(i)} \left| S(x,y) - S_{org}(x,y) \right| \qquad (14)$$

In this expression, $S_{org}(x,y)$ is a pixel of an input image signal of the position $(x,y)$.
A square sum of encoding errors of the block located at the position i in the raster scanning order, i.e., a square sum calculated by the following expression (15) can be used as a classification criterion.

$$C'_{SSD}(i) = \sum_{(x,y)\in B(i)} \left( S(x,y) - S_{org}(x,y) \right)^2 \qquad (15)$$

A dispersion of encoding errors of the block located at the position i in the raster scanning order, i.e., a dispersion calculated by the following expression (16) can be used as a classification criterion.

$$C_{var}(i) = \sum_{(x,y)\in B(i)} \left( \left( S(x,y) - S_{org}(x,y) \right) - \frac{1}{|B(i)|} \sum_{(x,y)\in B(i)} \left( S(x,y) - S_{org}(x,y) \right) \right)^2 \qquad (16)$$

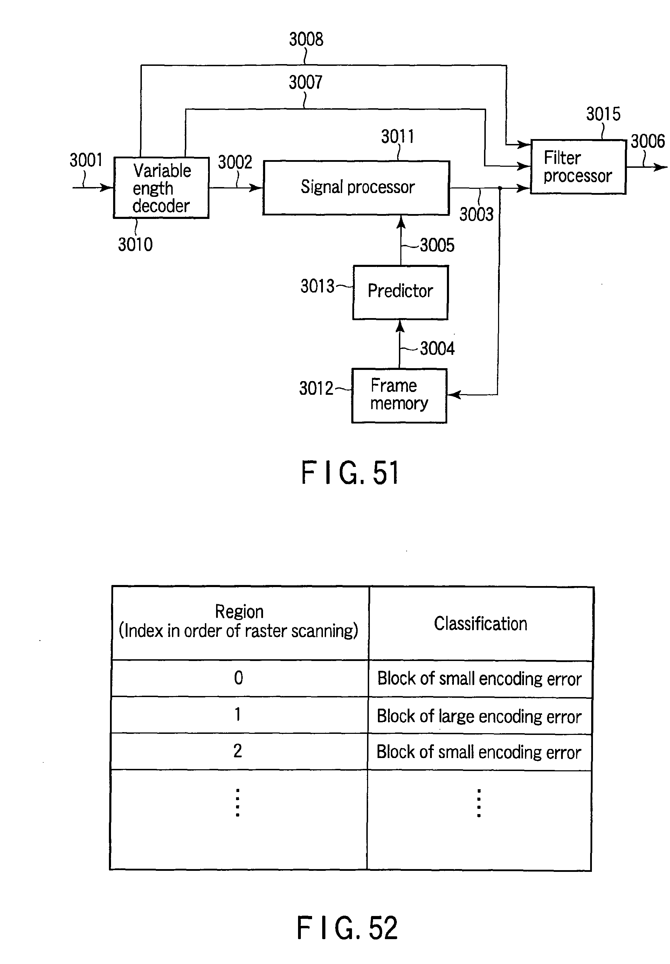

From the region partition module 2714, the region information 2705 representing a correspondence between a region and a classification is output. For example, when $C'_{SSD}(i) < T$, a region is classified as a "block having a small encoding error", and, otherwise, a region is classified as a "block having a large encoding error". In this case, information representing a correspondence between a region and a classification can be expressed as shown in FIG. 52. The output region information 2705 is input to a filter designing module 2715, a filter processor 2716, and the variable length encoder 2718.

When region information representing a correspondence between a region and a classification is transmitted as a region partition parameter to the decoding apparatus as in the embodiment, even though the encoding apparatus classifies a region by using information such as an input image or encoding distortion which cannot be obtained on the decoding apparatus side, the decoding apparatus can classify regions by region information as in the encoding apparatus.

A signal processor 2712, a frame memory 2713, and a predictor 2717 correspond to the signal processor 112, the frame memory 113, and the predictor 117 shown in FIG. 2. Signals 2702, 2703, 2706, 2707, 2708, 2709, and 2710 correspond to the signals 102, 103, 106, 107, 108, 109, and 110 shown in FIG. 2, respectively.

(Eighty-fifth Embodiment)

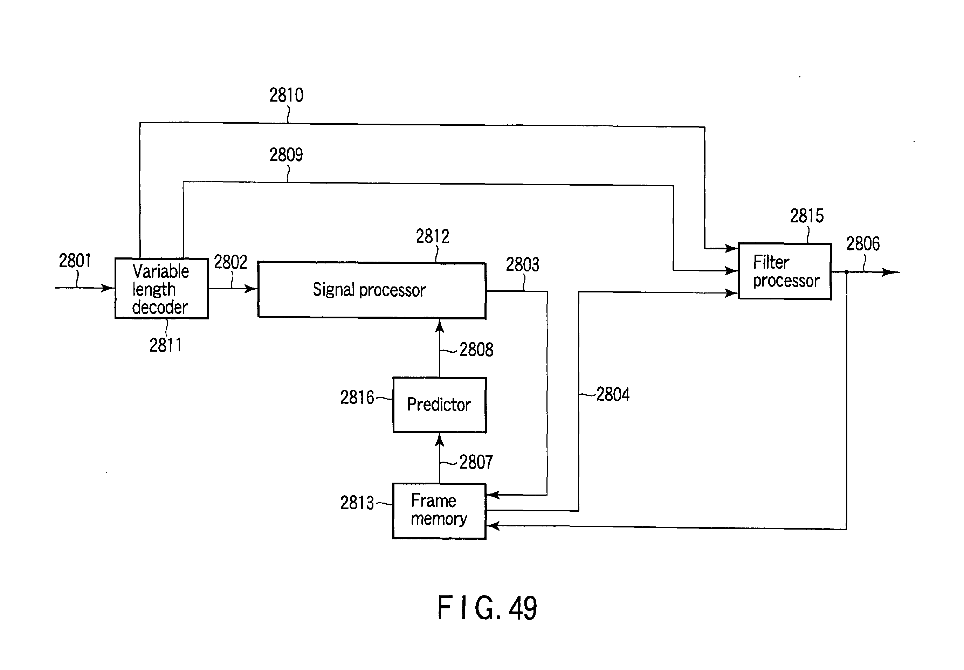

An eighty-fifth embodiment will be explained with reference to FIG. 49. A basic configuration of a video decoding apparatus according to the embodiment is the same as that in the second embodiment in FIG. 15. The eighty-fifth embodiment is different from the second embodiment in that a region partition module is not present and that a region partition parameter is directly input to filter processing.

In the embodiment, encoded data output from the encoding apparatus according to the eighty-fourth embodiment is input to a variable length decoder 2811. The variable length decoder 2811 decodes encoded data 2801 to output a region partition parameter 2809 and filter information 2810. In a filter processor 2815, by using the filter coefficient 2810 and the region partition parameter 2809, filter processing is performed on a decoded image 2804 to output an image signal 2806. Since the region partition parameter 2809 is region information representing a correspondence between a region and a classification, filter processing can be performed as in the filter processor 214 according to the second embodiment.

A signal processor 2812, a frame memory 2813, and a predictor 2816 correspond to the signal processor 212, the frame memory 213, and the predictor 216 shown in FIG. 15, respectively. Signals 2802, 2803, 2804, 2807, and 2808 correspond to the signals 202, 203, 204, 207, and 208 shown in FIG. 15, respectively.

(Eighty-sixth Embodiment)

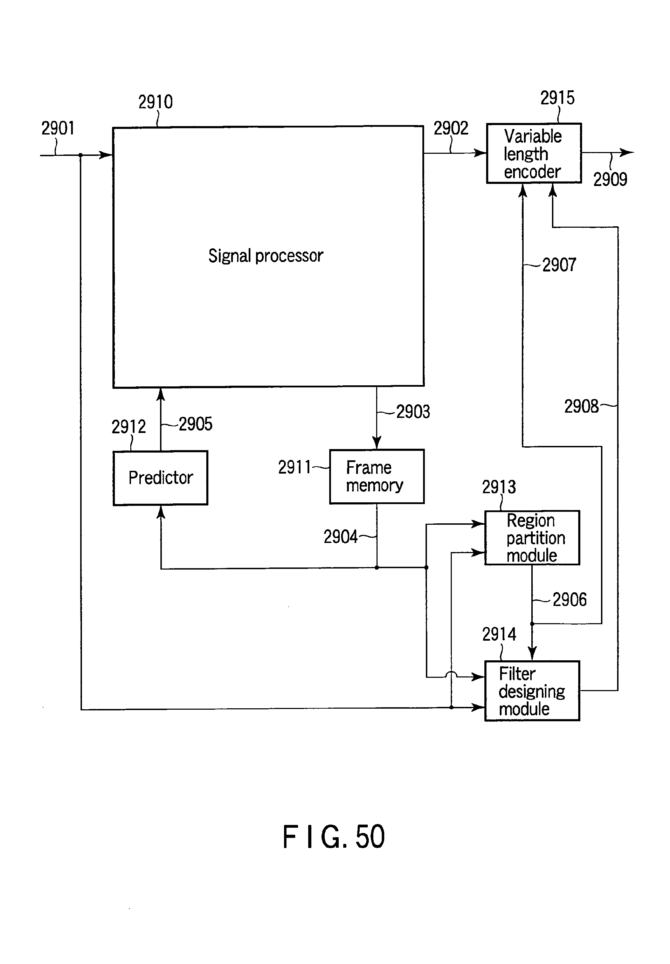

An eighty-sixth embodiment will be explained with reference to FIG. 50. A basic configuration of a video encoding apparatus according to the embodiment is the same as that in the third embodiment in FIG. 17. The eighty-sixth embodiment is different from the third embodiment in that an input image signal 2901 is input to a region partition module 2913 and that region information 2906 is input to a variable length encoder 2915 as a region partition parameter. In the region partition module 2913, regions are classified as in the region partition module 2714 according to the eighty-fourth embodiment to output region information 2906.

A signal processor 2910, a frame memory 2911, and a predictor 2912 correspond to the signal processor 310, the frame memory 113, and the predictor 312, respectively. Signals 2902, 2903, 2904, 2905, 2907, 2908, and 2909 correspond to signals 302, 303, 304, 305, 307, 308, and 309 shown in FIG. 16, respectively.

(Eighty-seventh Embodiment)

An eighty-seventh embodiment will be explained with reference to FIG. 51. A basic configuration of a video decoding apparatus according to the embodiment is the same as that in the fourth embodiment in FIG. 18. The eighty-seventh embodiment is different from the fourth embodiment in that a region partition module is not present and that a region partition parameter 3007 is directly input to a filter processor 3015.

In the embodiment, encoded data output from the encoding apparatus according to the eighty-sixth embodiment is input to a variable length decoder 3010. The variable length decoder 3010 decodes encoded data 3001 to output the region partition parameter 3007 and filter information 3008. In the filter processor 3015, by using the filter coefficient 3008 and the region partition parameter 3007, filter processing is performed on a decoded image 3003 to output an image signal 3006. Since the region partition parameter 3007 is region information representing a correspondence between a region and a classification, the filter processing can be performed as in the region partition module 214 according to the second embodiment.

A signal processor 3011, a frame memory 3012, and a predictor 3013 correspond to the signal processor 411, the frame memory 412, and the predictor 413 shown in FIG. 17, respectively. Signals 3002, 3003, 3004, 3005, and 3006 correspond to the signals 402, 403, 404, 405, and 406 shown in FIG. 18, respectively.

(Eighty-eighth Embodiment)

An eighty-eighth embodiment will be explained. A basic configuration of a video encoding apparatus according to the embodiment is the same as that in the eighty-fourth embodiment shown in FIG. 48. In the filter designing module 2715 according to the embodiment, it is designated whether a filter is applied to each of classifications of regions. Based on the region information 2705, the input image signal 2701, and the local-decoded image signal 2704, a filter is designed for the classification to which the filter is applied. Filter application/nonapplication information and a filter coefficient of a classification to be applied are output as the filter information 2706.

The filter processor 2716, based on the region information 2705 and the filter information 2706, determines a region to which a filter is applied and a region to which a filter is not applied depending on a classification corresponding to the region and performs filter processing on the local-decoded image signal 2704 to generate the image signal 2716.

(Eighty-ninth Embodiment)

An eighty-ninth embodiment will be explained. A basic configuration of a video decoding apparatus according to the embodiment is the same as that in the eighty-fifth embodiment shown in FIG. 49. It is assumed that the filter processor 2815 performs the same operation as that of the filter processor 2716 according to the eighty-eighth embodiment. More specifically, based on the region information representing a correspondence between a region and a classification and obtained as the region partition parameter 2809, and the filter information 2810, the filter processor 2815 determines a region to which a filter is applied and a region to which a filter is not applied depending on a classification corresponding to the region and performs filter processing on the decoded image signal 2804 to generate the image signal 2806.

(Ninetieth Embodiment)

A ninetieth embodiment will be explained. A basic configuration of a video encoding apparatus according to the embodiment is the same as that in the eighty-sixth embodiment shown in FIG. 50. It is assumed that the filter designing module 2914 according to the embodiment performs the same operation as that of the filter designing module 2715 according to the eighty-eighth embodiment. More specifically, in the filter designing module 2914, it is designated whether a filter is applied to each of classifications of regions. Based on the region information 2906, the input image signal 2901, and the local-decoded image 2904, a filter is designed for a classification to which a filter is applied. Filter application/nonapplication information and a filter coefficient of a classification to be applied are output as the filter information 2908.

(Ninety-first Embodiment)

A ninety-first embodiment will be explained. A basic configuration of a video decoding apparatus according to the embodiment is the same as that in the eighty-seventh embodiment shown in FIG. 51. It is assumed that the filter processor 3015 according to the embodiment performs the same operation as that of the filter processor 2715 according to the eighty-eighth embodiment. More specifically, the filter processor 3015, based on region information obtained as the region partition parameter 3007 and representing a correspondence between a region and a classification and the filter information 3008, determines a region to which a filter is applied and a region to which a filter is not applied depending on a classification corresponding to the region, and performs filter processing on the decoded image 3003 to generate the image signal 3006.

(Ninety-second Embodiment)

A ninety-second embodiment will be explained. A basic configuration of a video encoding apparatus according to the embodiment is the same as that in the eighty-fourth embodiment shown in FIG. 47. In the filter designing module 2715 according to the embodiment, it is designated whether a filter is applied to each of classifications of regions. With respect to the classification to which the filter is applied, based on the region information 2705, the input image signal 2701, and the local-decoded image 2704, a filter to be applied is selected from filters prepared in advance. Filter application/nonapplication information and information designating a filter coefficient of a classification to be applied are output as the filter information 2706.

The filter processor 2716, based on the region information 2705 and filter information 2706, determines a region to which a filter is applied and a region to which a filter is not applied depending on a classification corresponding to the region. With respect to the region to which the filter is applied, a filter to be applied is selected from filters prepared in advance, and filter processing is performed on the local-decoded image 2704 to generate the image signal 2716.

(Ninety-third Embodiment)

A ninety-third embodiment will be explained. A basic configuration of a video decoding apparatus according to the embodiment is the same as that of the eighty-fifth embodiment shown in FIG. 49. It is assumed that the filter processor 2815 according to the embodiment performs the same operation as that of the filter processor 2716 according to the ninety-second embodiment. More specifically, the filter processor 2815, based on region information obtained as the region partition parameter 2809 and representing a correspondence between a region and a classification and the filter information 2810, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 2804 to generate the image signal 2806.

(Ninety-fourth Embodiment)

A ninety-fourth embodiment will be explained. A basic configuration of a video encoding apparatus according to the embodiment is the same as that in the eighty-sixth embodiment shown in FIG. 50. It is assumed that the filter designing module 2914 according to the embodiment performs the same operation as that of the filter designing module 2715 according to the ninety-second embodiment. More specifically, in the filter designing module 2715, it is designated whether a filter is applied to each of classifications of regions. With respect to the classification to which the filter is applied, based on the region information 2906, the input image signal 2901, and the local-decoded image signal 2904, a filter to be applied is selected from filters prepared in advance. Filter application/nonapplication information and information designating a filter coefficient of a classification to be applied are output as the filter information 2908.

(Ninety-fifth Embodiment)

A ninety-fifth embodiment will be explained. A basic configuration of a video decoding apparatus according to the embodiment is the same as that in the eighty-seventh embodiment shown in FIG. 51. It is assumed that the filter processor 3015 according to the embodiment performs the same operation as that of the filter processor 2716 according to the ninety-second embodiment. More specifically, the filter processor 2619, based on region information obtained as the region partition parameter 3007 and representing a correspondence between a region and a classification and the filter information 3008, determines a region to which a filter is applied and a region to which a filter is not applied depending on a classification corresponding to the region. With respect to the region to which the filter is applied, a filter to be applied is selected from filters prepared in advance, and filter processing is performed on the decoded image signal 3003 to generate the image signal 3006.

According to the present invention, regions in a frame are classified based on a predetermined reference to divide the regions, and a filter is designed for each of the classified regions to make it possible to reduce an error between a to-be-encoded image and a reference image and an error between the to-be-encoded image and an output image.

The method described in the embodiments according to the present invention can be executed by a computer. A program which can be executed by a computer can be stored in recording media such as magnetic disks (flexible disks, hard disks, or the like), optical disks (CD-ROMs, DVDs, or the like), or semiconductor memories and can be distributed.

The present invention is not limited to the examples described in the embodiments described above, and can be variably changed without departing from the spirit and scope of the invention in an execution phase. Furthermore, the embodiments include inventions in various phases, and various inventions can be extracted by arbitrary combinations of a plurality of disclosed constituent elements. For example, even though several constituent elements are deleted from all the constituent elements described in the embodiments, this configuration from which the constituent elements are deleted can be extracted as an invention as long as at least one of the problems to be solved by the invention can be solved and at least one of the effects of the invention can be obtained.

Industrial Applicability

The image encoding and decoding methods and apparatuses according to the present invention are used in image compressing processes in communication media, storage media, and broadcasting media.

**Claims**

1. A video encoding apparatus comprising:

   a predictor to generate a prediction image,
   an orthogonal transformer to generate a transform coefficient by performing orthogonal transform on a prediction error between the prediction image and an input image;
   a quantizer to quantize the transform coefficient;
   a dequantizer to dequantize a quantized transform coefficient;
   an inverse orthogonal transformer to subject a dequantized transform coefficient to inverse orthogonal transform and obtain a local decode residual corresponding to the prediction error;
   an adder to add the local decoded residual and the prediction image to produce a local decoded image;
   a classification module to classify the local decoded image into a plurality of regions using a given parameter;
   a designing module to design a filter coefficient every classified region; and
   an encoder to output information of the quantized transform coefficient and the filter coefficient every classified region as encoded data,

2. The video encoding apparatus according to claim 1, **characterized in that** the video encoding apparatus further comprises a filtering module to subject the local decoded image to filter processing according to the filter coefficient every classified region, and the predictor generates the prediction image using an image subjected to the filter processing.

3. The video encoding apparatus according to claim 2, **characterized in that**
   the designing module designates whether or not the filter processing is applied for each classified region and designs a filter for a region to which the filter processing is to be applied;
   the filtering module performs the filter processing on the local decoded image by switching whether or not the filter processing is applied for each classified region; and
   the encoder outputs encoded data further including information designating whether or not the filter processing is applied for each classified region.

4. The video encoding apparatus according to claim 1, **characterized in that**
   the designing module designates whether or not the filter processing is applied to for each classified region and designs a filter for a region to which the filter processing is to be applied, and the encoder outputs, as encoded data, information of the parameter used for classification of region, information designating whether or not filter processing is applied for each classified region, and information of a filter coefficient for the region to which filter processing is applied,

5. The video encoding apparatus of claim 3, wherein the classification module classifies the local decoded image into a plurality of regions according to a pixel value of the local decoded image.

**6.** The video encoding apparatus of claim 3,
wherein the classification module classifies the local decoded image into a plurality of regions according to an encoding parameter.

**7.** The video encoding apparatus of claim 3,
wherein the classification module classifies the local decoded image into a plurality of regions according to a local decoded residual corresponding to the prediction error.

**8.** The video encoding apparatus of claim 3,
wherein the classification module performs region classification using one of a plurality of classification criterions prepared for beforehand, and outputs the parameter including information designating a classification criterion used for region classification.

**9.** The video encoding apparatus of claim 6,
wherein the classification module performs region classification according to the encoding parameter and a given threshold, and outputs encoded data including information of the threshold.

**10.** The video encoding apparatus of claim 5,
wherein the classification module classifies the local decoded image into a flat and a non-flat according to whether or not an average of absolute difference between each pixel of the local decoded image and its neighbor pixel exceeds a threshold.

**11.** The video encoding apparatus of claim 5,
wherein the classification module classifies the local decoded image into a flat and a non-flat according to whether or not a maximum of absolute value difference between each pixel of the local decoded image and its neighbor pixel exceeds a threshold.

**12.** The video encoding apparatus of claim 5,
wherein the classification module converts an image signal of a neighbor region of each pixel of the local decoded image into a frequency component, obtains a value representing an amount of component included in a predetermined frequency band, and classifies the local decoded image into a flat and a non-flat according to whether the value exceeds a predetermined value.

**13.** The video encoding apparatus of claim 5,
wherein the classification module performs high-frequency pass filter processing on an image signal of a neighbor region of each pixel of the local decoded image, and classifies the local decoded image into a flat and a non-flat according to whether a pixel value of each processed pixel exceeds the threshold.

**14.** The video encoding apparatus of claim 5,
wherein the classification module classifies the local decoded image into a flat and a non-flat according to whether an absolute value of an image derived from a difference between an image obtained by performing filter processing on the local decoded image and the local decoded image exceeds a threshold.

**15.** The video encoding apparatus of claim 6,
wherein the classification module classifies the local decoded image according to whether prediction applied to the local decoded image is intra-frame prediction or inter-frame prediction.

**16.** The video encoding apparatus of claim 6,
wherein the classification module classifies the local decoded image according to a pixel position indicated by a motion vector used for prediction of the local decoded image.

**17.** The video encoding apparatus of claim 6,
wherein the classification module classifies the local decoded image according to a quantization parameter corresponding to the local decoded image.

**18.** The video encoding apparatus of claim 3, further comprising a filtering module to filter the local decoded image based on a filter window size preset so as to differ for each classified region.

**19.** The video encoding apparatus of claim 3, further comprising a setting module to set a filter window size for every classified region, a filtering module to perform filter on the local decoded image based on the filter window size set for every classified region, and an encoder to output information of the filter window size for every classified region as encoded data.

**20.** The video encoding apparatus of claim 6, wherein the classification module classifies the local decoded image according to whether prediction applied to each region of the local decoded image is a unidirectional prediction or a bidirectional prediction.

**21.** The video encoding apparatus of claim 6, wherein the classification module classifies the local decoded image according to a block size used for motion compensated prediction.

**22.** The video encoding apparatus of claim 6, wherein the classification module classifies the local decoded image according to a block size of orthogonal transform.

**23.** The video encoding apparatus of claim 7, wherein the classification module performs region classification according to the local decoding error using a given threshold, and the encoder outputs encoded data including information of the threshold.

**24.** The video encoding apparatus of claim 7, wherein the classification module classifies a region containing the local decoding error into a first region and a region not containing the error into a second region.

**25.** The video encoding apparatus of claim 7, wherein the classification module classifies the region according to whether variance of the local decoding error exceeds a threshold.

**26.** The video encoding apparatus of claim 7, wherein the classification module classifies the region according to whether magnitude of the local decoding error exceeds a threshold.

**27.** A video decoding apparatus comprising: a decoder to decode encoded data, and derive quantized transform coefficient and information of a filter coefficient for every region from decoded data;
a predictor to produce a prediction image;
a dequantizer to dequantize the quantized transform coefficient;
an inverse orthogonal transformer to subject the dequantized transform coefficient to inverse orthogonal transform, and produce a residual;
an adder to add the residual and the prediction image to produce a decoded image;
a classification module to classify the decoded image into a plurality of regions using a given parameter; and
a filtering module to perform filter processing on the decoded image using information of the filter coefficient for each classified region.

**28.** The video decoding apparatus of claim 27, which further comprises a filtering module to perform filter processing on the decoded image using information of the filter coefficient for each classified region, and wherein the predictor produces a prediction image using the filtered image.

**29.** The video decoding apparatus of claim 28, wherein the filtering module performs filter processing on the decoded image using information designating whether or not filter processing is applied to the classified region and information of a filter coefficient for a region to which filter processing is applied.

**30.** The video decoding apparatus of claim 27, wherein the filtering module performs filter processing on the decoded image using information designating whether or not filter processing is applied to the classified region and information of a filter coefficient for a region to which filter processing is applied.

**31.** The video decoding apparatus of claim 29,

wherein the classification module classifies the decoded image into a plurality of regions according to a pixel value of the decoded image.

32. The video decoding apparatus of claim 29,
wherein the classification module classifies the decoded image into a plurality of regions using an encoding parameter used for classification of regions.

33. The video decoding apparatus of claim 29,
wherein the classification module classifies the decoded image into a plurality of regions using the residual.

34. The video decoding apparatus of claim 29,
wherein the classification module selects one among a plurality of classification criterions prepared beforehand based on information designating a classification criterion used for region classification, which is included in the parameter used for classification of the region, and classifies the regions using it.

35. The video decoding apparatus of claim 32,
wherein the classification module classifies the regions according to the encoding parameter using information of a threshold included in the encoded data.

36. The video decoding apparatus of claim 31,
wherein the classification module classifies the local decoded image into a flat and a non-flat according to whether an average of absolute difference between a pixel and a neighbor pixel exceeds a threshold.

37. The video decoding apparatus of claim 31,
wherein the classification module classifies the local decoded image into a flat and a non-flat according to whether a maximum value of an absolute difference between a pixel and a neighbor pixel exceeds a threshold.

38. The video decoding apparatus of claim 31,
wherein the classification module converts an image signal of a neighbor region of each pixel of the local decoded image into a frequency component, obtains a value representing an amount of component included in a predetermined frequency band, and classifies the local decoded image into a flat and a non-flat according to whether the value exceeds a predetermined value.

39. The video decoding apparatus of claim 31,
wherein the classification module performs high-frequency pass filtering on an image signal of a neighbor region of each pixel of the local decoded image, and classifies the local decoded image into a flat and a non-flat according to whether a pixel value of each processed pixel exceeds a threshold.

40. The video decoding apparatus of claim 31,
wherein the classification module classifies the local decoded image into a flat and a non-flat according to whether an absolute value of a pixel value of an image derived from a difference between an image obtained by performing filter processing on the local decoded image and the local decoded image exceeds a threshold.

41. The video decoding apparatus of claim 32,
wherein the classification module classifies the local decoded image according to whether prediction applied to the local decoded image is intra-frame prediction or inter-frame prediction.

42. The video decoding apparatus of claim 32,
wherein the classification module classifies the local decoded image according to a pixel position indicated by a motion vector used for prediction of the local decoded image.

43. The video decoding apparatus of claim 32,
wherein the classification module classifies the local decoded image according to a value of a quantization parameter corresponding to the local decoded image.

44. The video decoding apparatus of claim 29,
wherein to further comprise in the filtering unit which preset filter window size is based on every classified region to be different, and perform filter processing on the decoded image.

**45.** The video decoding apparatus of claim 29, further comprising a decoder to decode encoded data and acquire information of a filter window size for every region classified from decoded data, and a filtering module to filter a decoded image based on information of the filter window size.

**46.** The video decoding apparatus of claim 32,
wherein the classification module classifies the local decoded image according to whether prediction applied to each region of the local decoded image is unidirectional prediction or bidirectional prediction.

**47.** The video decoding apparatus of claim 32,
wherein the classification module classifies the local decoded image according to a block size used for motion compensated prediction.

**48.** The video decoding apparatus of claim 32,
wherein the classification module classifies the local decoded image according to a block size of orthogonal transform.

**49.** The video decoding apparatus of claim 33,
wherein the classification module classifies the region according to the residual using information of a threshold included in the encoded data.

**50.** The video decoding apparatus of claim 33,
wherein the classification module classifies a region containing the residual into a first region and a region not containing the residual into a second region.

**51.** The video decoding apparatus of claim 33,
wherein the classification module classifies the region according to whether variance of the local decoded residual exceeds a threshold.

**52.** The video decoding apparatus of claim 33,
wherein the classification module classifies the region
according to whether magnitude of the local decoded residual exceeds a threshold.

FIG. 1

F I G. 2

Start

Input image signal ~ S11

Calculate residual ~ S12

Orthogonal-transform ~ S13

Quantization ~ S14

Variable length encode/local decode ~ S15

Store local-decoded image ~ S16

Classify regions ~ S17

Design filter coefficient ~ S18

Filter processing ~ S19

Store filtered image ~ S20

Generate prediction image ~ S21

Yes ⟵ Input signal? S22

No

End

F I G. 3

F I G. 4

```
              Start
                │
                ▼
  ┌──────────────────────────┐
  │ Calculate classification │──S101
  │ criterion C(x, y)        │
  └──────────────────────────┘
                │
                ▼
          ╱──────────────╲              S102
        ╱   Determination   ╲   No
      ╱  with respect to threshold ╲────────────┐
        ╲    C(x, y) < T?   ╱                    │
          ╲──────────────╱                       │
      S103    │ Yes                         S104 │
              ▼                                  ▼
  ┌──────────────────────┐      ┌──────────────────────────┐
  │ Classify position    │      │ Classify position (x, y)  │
  │ (x, y) into flatness │      │ into nonflatness region   │
  │ region               │      │                           │
  └──────────────────────┘      └──────────────────────────┘
              │◄─────────────────────────────────┘
              ▼
             End
```

F I G. 5

| Region (Coordinate of pixel) | Classification |
|---|---|
| (0, 0) | Flatness region |
| (1, 0) | Nonflatness region |
| (2, 0) | Flatness region |
| ⋮ | ⋮ |

F I G. 6

|  |  | $i$ | | |
|---|---|---|---|---|
|  |  | −1 | 0 | 1 |
| $j$ | −1 | −1 | −1 | −1 |
|  | 0 | −1 | 8 | −1 |
|  | 1 | −1 | −1 | −1 |

F I G. 7

O (x−3, y)  O (x−2, y)  O (x−1, y)  O (x, y)  O (x+1, y)  O (x+2, y)  O (x+3, y)  O (x+4, y)

F I G. 8

Coefficient

$$C_{DCT}(x, y) = \sum_{i=4}^{7} X(i)$$

X(0), X(1), X(2), X(3), X(4), X(5), X(6), X(7)

Frequency position

## F I G. 9

| Index | Filter coefficient |
|-------|--------------------|
| 0 | $h_{HF0}(-N, -N), \cdots, h_{HF0}(N, N)$ |
| 1 | $h_{HF1}(-N, -N), \cdots, h_{HF1}(N, N)$ |
| 2 | $h_{HF2}(-N, -N), \cdots, h_{HF2}(N, N)$ |
| ⋮ | ⋮ |

## F I G. 10

| Index | Threshold |
|-------|-----------|
| 1 | T |

## F I G. 11

F I G. 12

F I G. 13

F I G. 14

F I G. 15

Start

Input encoded data — S31

Variable length decode — S32

Dequantization — S33

Inverse orthogonal transform — S34

Addition — S35

Accumulate decoded image signal — S36

Partition region — S37

Filter processing — S38

Output image signal — S39

Accumulate image signal — S40

Generate prediction image — S41

S42

Yes — Is encoded data input?

No

End

F I G. 16

F I G. 17

F I G. 18

## FIG. 19

| Classification | Applicable/Not applicable |
|---|---|
| Flatness region | Applicable |
| Nonflatness region | Not applicable |

## FIG. 20

116

161 — Switch controller

162

164

158 — Flatness region filter processor

109

163

Nonflatness region filter processor

159

155

104

106

Filter information multiplexer

157

160

105

**F I G. 21**

115

168 — Switch controller

165

171

169

166 — Flatness region filter designing module

106

Filter information multiplexer

170

Nonflatness region filter designing module

167

105

104

101

**F I G. 22**

| Index | Filter coefficient |
|-------|--------------------|
| 0 | $h_0(-N, -N), \cdots, h_0(N, N)$ |
| 1 | $h_1(-N, -N), \cdots, h_1(N, N)$ |
| 2 | $h_2(-N, -N), \cdots, h_2(N, N)$ |
| ⋮ | ⋮ |

F I G. 23

F I G. 24

F I G. 25

| Region (Index in order of raster scanning) | Classification |
|---|---|
| 0 | Intra prediction block |
| 1 | Inter prediction block |
| 2 | Intra prediction block |
| ⋮ | ⋮ |

F I G. 26

F I G. 27

F I G. 28

F I G. 29

901  916  902  917  903  918  904  929  912

Orthogonal transformer  Quantizer  Variable length encoder

925

919 — Dequantizer

905

920 — Inverse orthogonal transformer

906

924  911  923  921

907

Predictor  Frame memory

910  908

909

913

928  926  Region partition module

914

927

915  Filter designing module

Filter processor

F I G. 30

| Region<br>(Index in order of raster scanning) | Classification |
|---|---|
| 0 | Finely-quantized region |
| 1 | Coarsely-quantized region |
| 2 | Finely-quantized region |
| ⋮ | ⋮ |

# F I G. 31

F I G. 32

F I G. 33

F I G. 34

EP 2 252 063 A1

|   |   | i | | | | |
|---|---|---|---|---|---|---|
|   |   | -2 | -1 | 0 | 1 | 2 |
| j | -2 | 1/35 | 1/35 | 1/35 | 1/35 | 1/35 |
|   | -1 | 1/35 | 2/35 | 2/35 | 2/35 | 1/35 |
|   | 0 | 1/35 | 2/35 | 3/35 | 2/35 | 1/35 |
|   | 1 | 1/35 | 2/35 | 2/35 | 2/35 | 1/35 |
|   | 2 | 1/35 | 1/35 | 1/35 | 1/35 | 1/35 |

# F I G. 35

F I G. 36

F I G. 37

F I G. 38

F I G. 39

EP 2 252 063 A1

F I G. 40

FIG. 41

F I G. 42

F I G. 43

EP 2 252 063 A1

F I G. 44

F I G. 45

Encoding controller

2320

2319

2301

2312

Signal processor

2318

Variable
length
encoder

2310

2302

2303

2317 ~2309

Predictor

2313

Frame
memory

2304

2308

2307

2314

Region
partition
module

2305

2316

Filter
processor

2315

Filter
designing
module

2306

F I G. 46

FIG. 47

F I G. 48

Filter processor 2815

2806

2804

2803

Signal processor 2812

2802

Variable length decoder 2811

2801

2810

2809

Predictor 2816

Frame memory 2813

2808

2807

**F I G. 49**

F I G. 50

F I G. 51

| Region (Index in order of raster scanning) | Classification |
|---|---|
| 0 | Block of small encoding error |
| 1 | Block of large encoding error |
| 2 | Block of small encoding error |
| ⋮ | ⋮ |

F I G. 52

## INTERNATIONAL SEARCH REPORT

| International application No. |
| --- |
| PCT/JP2009/054186 |

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/32

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2-134910 A  (Sony Corp.),<br>23 May, 1990 (23.05.90),<br>Page 1, lower right column, lines 3 to 14;<br>page 2, upper right column, line 19 to lower<br>left column, line 2; page 4, lower left column,<br>line 18 to lower right column, line 9; Fig. 4<br>(Family: none) | 1-5,7,23-24,<br>26-31,33,<br>49-50,52<br>10-12,25,<br>36-38,51<br>9,13-14,35,<br>39-40 |
| X | JP 2007-336468 A  (Sharp Corp.),<br>27 December, 2007 (27.12.07),<br>Par. Nos. [0107], [0121]<br>(Family: none) | 6,15,32,41 |
| X | JP 8-336163 A  (Mitsubishi Electric Corp.),<br>17 December, 1996 (17.12.96),<br>Par. No. [0008]<br>(Family: none) | 6,16,32,42 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 May, 2009 (21.05.09) | Date of mailing of the international search report<br>02 June, 2009 (02.06.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

### INTERNATIONAL SEARCH REPORT

International application No.

PCT/JP2009/054186

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2-056109 A (Nippon Telegraph And Telephone Corp.),<br>26 February, 1990 (26.02.90),<br>Page 1, lower right column, lines 13 to 16;<br>page 2, lower left column, line 16 to lower right column, line 10<br>(Family: none) | 8,34<br>17-22,43-48<br>9,13-14,35,<br>39-40 |
| Y | JP 2005-151385 A (Sony Corp.),<br>09 June, 2005 (09.06.05),<br>Par. No. [0091]<br>(Family: none) | 10,36 |
| Y | JP 2004-248124 A (Nippon Telegraph And Telephone Corp.),<br>02 September, 2004 (02.09.04),<br>Par. No. [0032]; Fig. 5<br>(Family: none) | 11,37 |
| Y | JP 2005-295074 A (Mitsubishi Electric Corp.),<br>20 October, 2005 (20.10.05),<br>Par. No. [0050]<br>(Family: none) | 12,38 |
| Y | JP 7-131757 A (Texas Instruments Inc.),<br>19 May, 1995 (19.05.95),<br>Par. Nos. [0046] to [0048]<br>& US 5786857 A | 17,43 |
| Y | JP 2005-123732 A (Matsushita Electric Industrial Co., Ltd.),<br>12 May, 2005 (12.05.05),<br>Par. No. [0033]<br>& US 2005/0078750 A1 & CN 1607836 A | 18-19,44-45 |
| Y | JP 2006-166103 A (Canon Inc.),<br>22 June, 2006 (22.06.06),<br>Par. Nos. [0048] to [0049]<br>(Family: none) | 20,46 |
| Y | JP 2006-157481 A (Canon Inc.),<br>15 June, 2006 (15.06.06),<br>Par. Nos. [0085] to [0087]<br>& US 2006/0115168 A1 & CN 1784011 A | 21,47 |
| Y | JP 2006-229411 A (Matsushita Electric Industrial Co., Ltd.),<br>31 August, 2006 (31.08.06),<br>Par. Nos. [0027] to [0029]<br>(Family: none) | 22,48 |

Form PCT/ISA/210 (continuation of second sheet) (April 2007)

**INTERNATIONAL SEARCH REPORT**

International application No.

PCT/JP2009/054186

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-191865 A  (Seiko Epson Corp.),<br>14 July, 2005 (14.07.05),<br>Par. No. [0057]<br>(Family: none) | 25,51 |

Form PCT/ISA/210 (continuation of second sheet) (April 2007)

# EP 2 252 063 A1

## INTERNATIONAL SEARCH REPORT

| | International application No. |
|---|---|
| | PCT/JP2009/054186 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The search has revealed that the technical feature of the inventions of claims 1-5, 27-31 is not novel since it is disclosed in Document JP 2-134910 A (Sony Corp.), 23 May 1990 (23.05.90), page 1, lower right column, line 3 to line 14, Fig. 4.
   Moreover, the search has revealed that the technical feature of the inventions of claims 1-4, 6, 27-30, 32 is not novel since it is disclosed in Document JP 2-56109 A (Nippon Telegraph And Telephone Corp.), 26 February 1990 (26.02.90),   (Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/054186 |

Continuation of Box No.III of continuation of first sheet(2)

page 1, lower right column, line 13 to line 16, page 2 lower left column, line 16 to lower right column, line 7, and Document JP 2007-336468 A (Sharp Corp.), 27 December 2007 (27.12.07), paragraphs [0107], [0121].

Furthermore, the search has revealed that the technical feature of the inventions of claims 1-4, 7, 27-30, 33 is not novel since it is disclosed in Document JP 2-134910 A (Sony Corp.), 23 May 1990 (23.05.90), page 2, upper right column, line 19 to lower left column, line 2, page 4, lower left column, line 18 to lower right column, line 9, Fig. 4 and Document JP 9-121354 A (Oki Electric Industry Co., Ltd.), 06 May 1997 (06.05.97), paragraphs [0001], [0007], [0017].

As a result, the technical feature of the inventions of claims 1-7, 27-33 cannot be "a special technical feature" within the meaning of PCT Rule 13.2, second sentence.

Since the technical feature disclosed in claims 5, 31 cannot be a special technical feature, "the special technical feature" of the first group of inventions is a feature disclosed in claim 10, i.e., classification is performed depending on whether the average value of the differences between the respective pixels and the peripheral pixels exceeds a threshold value.

The second to the fifth group of inventions have "a special technical feature" relating to that the technical feature of the second group of inventions disclosed in claim 11, i.e., classification is performed depending on whether the maximum value of the differences between the respective pixels and the peripheral pixels exceeds a threshold value; and that the encoding device is characterized by the technical feature disclosed in claims 11-14 and the decoding device is characterized by the technical feature disclosed in claims 37-40.

Moreover, since the technical feature disclosed in claims 6, 32 cannot be a special technical feature, "the special technical feature" of the sixth to the twelfth group of inventions relates to that the encoding device has a feature disclosed in claims 9, 15-17, 20-22 and the decoding device has a feature disclosed in claims 35, 41-43, 46-48.

Furthermore, since the technical feature disclosed in claims 7, 33 cannot be a special technical feature, "the special technical feature" of the thirteenth to the sixteenth group of inventions relates to that the encoding device has a feature disclosed in claims 23-26 and the decoding device has a feature disclosed in claims 49-52.

Since the technical feature disclosed in claims 3, 29 cannot be a special technical feature, "the special technical feature" of the seventeenth to the nineteenth group of inventions relates to that the encoding device has a feature disclosed in claims 8, 18-19 and the decoding device has a feature disclosed in claims 34, 44-45.

As has been described above, the inventions of claims 1-52 are divided into the first to the nineteenth group of inventions which do not satisfy the requirement of unity of invention.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. Wittmann ; T. Wedi.** Post-filter SEI message for 4:4:4 coding. *JVT of ISO/IEC MPEG & ITU-T VCEG, JVT-S030,* April 2006